# EUROPEAN PATENT APPLICATION

(11) **EP 1 089 580 A2**
(43) Date of publication of application: **04.04.2001**
(21) Application number: 00120259.7
(22) Date of filing: 27.09.2000
(51) Int. Cl.: H04Q 7/38

(54) **Mobile communications service system, mobile communications service method, authentication apparatus, and home agent apparatus**

(30) Priority: 29.09.1999 JP 27670399; 03.04.2000 JP 2000101414
(71) Applicant: FUJITSU LIMITED, Kawasaki-shi, Kanagawa 211-8588 (JP)
(72) Inventor: Kakemizu, Mitsuaki, Fujitsu Limited, Kawasaki-shi, Kanagawa 211-8588 (JP); Yamamura, Shinya, Fujitsu Nishi-Nihon, Sawara-ku, Fukuoka-shi, Fukuoka 814-8588 (JP); Murata, Kazunori, Fujitsu Nishi-Nihon, Sawara-ku, Fukuoka-shi, Fukuoka 814-8588 (JP); Wakamoto, Masaaki, Fujitsu Limited, Kawasaki-shi, Kanagawa 211-8588 (JP)
(74) Representative: HOFFMANN - EITLE

(57) **Abstract**

In a mobile communications service system, various value-added services can be provided for each mobile node. A mobile node transmits a registration request to a foreign agent. The foreign agent transfers a Mobile request message to an authentication process server home agent (AAAH) through an authentication process server foreign agent (AAAF). The AAAH extracts from a service control database a service profile that identifies the value-added services to be supplied to the mobile node. The service profile is distributed to a home agent using a Home agent registration request message, and to a foreign agent using a mobile request message. The home agent and the foreign agent provide services according to the distributed service profiles.

## Description

### BACKGROUND OF THE INVENTION

### 1. Technical Field

The present invention relates to a system, an apparatus, and a method for providing communications services for a mobile node. Specifically, in a mobile environment, and in the communications between a mobile node (containing a stationary terminal and a mobile terminal) and each node connected to a network or another mobile node in the mobile environment, the present invention relates to a system, a method, an authentication apparatus, and a home agent apparatus for providing mobile communications services for a mobile node in a network.

### 2. Background Art

In an IP network, an increasing amount of traffic in which various types of data are combined including data containing voice data and image data has been used. However, normally, a packet in an IP network is transferred with the best effort. That is, a router and a switch transfer a packet to the next destination with the best effort independent of a user or an application at the destination of the input packet. At this time, there arises uneven delays depending on the traffic state (for example, the congestion state), and a packet which cannot be successfully transferred is rejected.

Therefore, to correctly transmit a packet relating to an application (for transmitting voice data, picture data, etc.) whose requirements are strict on, for example, delay, it is necessary to introduce to or set in each router or switch in the IP network the function of transferring a specific packet by priority. Otherwise, to guarantee traffic bandwidth from a specific user or terminal, it is necessary to introduce to or set in each router or switch the function of guaranteeing and controlling the bandwidth of a specific path.

PBN (policy-based networking) technology is well-known as a technology of providing the above described value-added service (for example, transfer control by priority for a specific packet, bandwidth guaranteeing control, packet filtering control, etc.). A value-added service provided through the IP network using PBN technology can be, for example, a technology of guaranteeing a bandwidth, guaranteeing the maximum allowable delay, packet-filtering for suppression of access to harmful WWW information, the security function of suppressing access not satisfying specified conditions, etc. Described below is a practical example.

A control method for dynamically reserving end-to-end bandwidths using an RSVP (resource reservation protocol), etc. for a network appliance such as a router, a switch, etc. is well known. In addition, Diff-Serv (differentiated services) for performing prioritized transfer control based on a prioritized transfer order set in each packet is also well known. If these functions are used in the PBN, for example, the following value-added services can be provided.
(1) By setting the QoS (quality of service) for the communications of a specific division or a group, the communications quality such as voice traffic for which the maximum allowable delay is strictly defined is guaranteed.
(2) A specific type of application traffic (for example, file transfer, World Wide Web, etc.) is transferred by the highest priority.
(3) Based on the policy of security, access security can be guaranteed for each user by permitting access only from a specified user, or limiting access from a specified user to a specified server.

When the above-described PBN is used, the policy of each terminal device (such as the above described QoS conditions, etc.) is, for example, set in a network appliance such as a router, a switch, etc. However, in the mobile environment, when a mobile terminal is moved, a network appliance for accommodating the mobile terminal is changed one after another. Therefore, when the above-described PBN is used in the mobile environment, it is necessary that the policy of a mobile terminal is set in all network appliances that may possibly accommodate the mobile terminal. However, if the policy of each mobile terminal is set in each network appliance, the amount of information to be stored in each network appliance is enormously large, and the process to be performed to set policy information about the entire network and to maintain the network also becomes large. When location registration (location registration) of a mobile terminal is completed before the completion of setting a policy, it is possible that a value-added service based on the policy cannot be provided for the mobile terminal.

A protocol for accommodating a mobile terminal in a network appliance is issued as an IP Mobility Support (hereinafter referred to as a 'Mobile IP' or 'MIP') through RFC2002 in October 1996. As a protocol relating to the MIP, an AAA (authentication, authorization, and accounting) protocol is being studied by IETF (Internet Engineering Task Force).

There is the following problem with the above-described technology.

Recently, referred to as 'anything over IP', the traffic in which voice and data are integrated has sharply increased in the Internet. In addition, with an increasing number of mobile telephones, standardization has proceeded with the International Mobile Telecommunications 2000 (IMT-2000), and it is predicted that the traffic in the mobile environment will also dramatically increase.

However, in the mobile environment, services (mainly the communications service relating to traffic) requested by each mobile node or each user are different from each other. For example, concerning a voice data transmission, the volume of data to be transmitted per unit time is fixed. Although there arises congestion, etc. in an end-to-end system, there is a demand for a service of transferring a target packet by priority in a way such that a request for bandwidth and a request for maximum allowable delay can be realized. On the other hand, the traffic relating to e-mail allows a long delay. Thus, a network to which various terminals are connected (for example, an IP network) contains various types of traffic whose policies to be guaranteed are different from each other. Therefore, to protect the traffic having a higher priority level in business, the QoS (quality of service) function has to be necessarily realized. However, when a user establishes communications from a mobile node through a network, there has been the problem that a value-added service provided by the PBN, etc. couldn't be provided for each mobile node.

When location registration of a mobile node is to be made and service profile information is to be set independently for a foreign agent and a home agent, there arises the problem that a packet is transmitted from the mobile node before service control information is set.

As background and illustrative of the state of the art, the following document is incorporated by reference:

JP 2000-0101414 (Japanese application number) who's priority is claimed herein, the entire document of which is incorporated by reference.

In addition, the following documents are listed as prior art reference:

Internet Engineering Task Force, Network Working Group RFC 2002: IP Mobility Support, October 1996: This document describes protocol enhancements that allow transparent routing of IP datagrams to mobile nodes in the Internet. Each mobile node is always identified by its home address, regardless of its current point of attachment to the Internet. The entire document of which is incorporated by reference.

Internet Engineering Task Force, Network Working Group RFC 2003: IP Encapsulation within IP, October 1996: This document specifies a method by which an IP datagram may be encapsulated (carried as payload) within an IP datagram. Encapsulation is suggested as a means to alter the normal IP routing for datagrams, by delivering them to an intermediate destination that would otherwise not be selected by the (network part of the) IP Destination Address field in the original IP header. The entire document of which is incorporated by reference.

Internet Engineering Task Force, Network Working Group RFC 2794: Mobile Node NAI, 2000: This document describes AAA servers that provide authentication and authorization services for dial-up computers and includes a way for the mobile node to identify itself, by including the NAI along with the Mobile IP Registration Request. The entire document of which is incorporated by reference.

Internet Engineering Task Force, Mobile IP Working Group: Mobile IP Challenge/Response Extensions, draft-ietf-mobileip-challenge-12.txt, June 13, 2000. This document describes extensions for the Mobile IP Agent Advertisements and the Registration Request that allows a foreign agent to use a challenge/response mechanism to authenticate the mobile node. The entire document of which is incorporated by reference.

Internet Engineering Task Force, AAA Working Group: DIAMETER Framework Document, draft-calhoun-diameter-framework-08.txt, June 2000. This documents AAA requirements that would help Mobile IP scale for Inter-Domain mobility. The entire document of which is incorporated by reference.

Internet Engineering Task Force, AAA Working Group: DIAMETER Base Protocol, draft-calhoun-diameter-15.txt, June 2000. describes the DIAMETER base protocol message format, transport, error reporting and security services to be used by all DIAMETER extensions and MUST be supported by all DIAMETER implementations. The entire document of which is incorporated by reference.

Internet Engineering Task Force, AAA Working Group: DIAMETER Mobile IP Extensions, draft-calhoun-diameter-mobileip-08.txt, June 2000. This describes an extension to the DIAMETER base protocol that allows a DIAMETER server to authenticate, authorize and collect accounting information for services rendered to a mobile node. The entire document of which is incorporated by reference.

### SUMMARY OF THE INVENTION

Described below is the configuration according to the present invention developed to solve the problem.

The mobile communications service system according to the present invention transfers a message containing location registration request information from a mobile node sequentially to a foreign agent (FA), an authentication server, and a home agent (HA), returns a message containing location registration reply information to the mobile node in response to the received message in the reverse order from the home agent, registers the location of the mobile node in the home agent and the foreign agent, and provides a communications service for the mobile node. The authentication server is provided with a unit for adding corresponding service profile information to the message containing the location registration request information or the location registration reply information. The foreign agent and the home agent control the transfer of a packet transmitted or received from the mobile node according to the service profile information contained in the message received from the authentication server. The service profile can be stored in the database.

In the above-described system, a service profile is provided only for a home agent of a mobile node and a foreign agent accommodating the mobile node. Therefore, the volume of the service control information to be set for each agent can be relatively small although the number of mobile nodes increases. In addition, a mobile node can receive various value-added services even if it is moved to an optional place.

In the system according to another embodiment of the present invention, the authentication server includes an authentication request server and an authentication process server accessible to the database. Upon receipt of a message containing the location registration request information from the foreign agent, the authentication request server determines an authentication process server for appropriately performing an authenticating process according to the message, and transmits the message to the authentication process server. Upon receipt of a message containing the location registration reply information from the authentication process server, the authentication request server transmits the message containing the location registration reply information to the foreign agent. Upon receipt of the message containing the location registration request information from the authentication request server, the authentication process server adds the service profile information to the message containing the location registration request information, and transmits the message to the home agent. Upon receipt of the message containing the location registration reply information from the home agent, the authentication process server adds the service profile information to the message containing the location registration reply information, and transmits the message to the authentication request server. With the configuration, the authentication server is divided into the authentication request server and the authentication process server. As a result, a process of selecting a server responsible for an authenticating process can be exclusively performed by the authentication request server.

In the system according to a further embodiment of the present invention, the authentication server includes an authentication request server and an authentication process server accessible to the database. Upon receipt of a message containing the location registration request information from the foreign agent, the authentication request server determines an authentication process server for appropriately performing an authenticating process according to the message, and transmits the message containing the location registration request information to the authentication process server. Upon receipt of the message containing the location registration request information from the authentication request server, the authentication process server adds the service profile information to the message containing the location registration reply information, and transmits the message to the authentication request server. Upon receipt of a message containing the location registration reply information from the authentication process server, the authentication request server adds the service profile information to the message containing the location registration request information, and transmits the message to the home agent. Upon receipt of the message containing the location registration reply information from the home agent, the authentication request server adds the service profile information to the message containing the location registration reply information, and transmits the message to the foreign agent. With the configuration, the authentication request server can dynamically assign a home agent.

In a system according to a further embodiment of the present invention, when the mobile node is moved from a communications area of a first foreign agent subordinate to an authentication request server to a communications area of a second foreign agent subordinate to the authentication request server, the second foreign agent requests the first foreign agent to remove the service profile information. With the configuration, when the mobile node moves to a new and different foreign agent in the same authentication request server, the service profile information which becomes unnecessary in the foreign agent to which the mobile communications previously belonged is removed. Therefore, the memory area for storing service profile information can be saved.

In a system according to a further embodiment of the present invention, when the mobile node is moved from a communications area of a first foreign agent subordinate to a first authentication request server to a communications area of a second foreign agent subordinate to a second authentication request server, the authentication process server requests the first authentication request server to remove the service profile information set in the first foreign agent and the first authentication request server according to the message containing the location registration request information from the second foreign agent. With the configuration, when the mobile node is moved to a new and different foreign agent subordinate to the different authentication request server, the service control information, which becomes unnecessary in the foreign agent to which the mobile node previously belonged. As a result, the memory area for storing service profile information can be saved.

In a system according to a further embodiment of the present invention, the foreign agent controls the transfer of a packet received from the mobile node by priority according to the service profile information. With the configuration, the control of the transfer of the packet received from the mobile node can be prioritized. The priority transfer control can be, for example, Diff-Serv.

In a system according to a further embodiment of the present invention, the foreign agent performs a packet filtering process on the packet received from the mobile node according to the service profile information. With the configuration, the packet filtering process can be controlled according to the service profile information.

In a system according to a further embodiment of the present invention, when the destination address of a received packet is a target of the anycast service, the home agent selects an IP address corresponding to the destination address from the anycast address list, and transfers the packet to the selected IP address. With the configuration, a plurality of destinations can be set at one destination address, and one destination can be selected from the plurality of destinations according to a predetermined policy.

In a system according to a further embodiment of the present invention, when the destination address of a received packet is a target of the anycast service, the foreign agent selects a link layer address according to the selection policy set as the service profile information, and transfers the packet to the selected link layer address. With the configuration, the packet can be transmitted to the link layer address specified by the selection policy.

In a system according to a further embodiment of the present invention, the home agent includes a plurality of home agents, and the authentication process server evenly assigns home agents to a plurality of location registration requests. With the configuration, the loads of a plurality of home agents can be evenly distributed.

In a system according to a further embodiment of the present invention, the home agent includes a plurality of home agents, and the authentication process server assigns a home agent to a location registration request depending on the ability of each home agent. With the configuration, the load can be assigned with the ability of the network appliance of a home agent taken into account.

The mobile communications service method according to the present invention is based on the method of transmitting a message containing location registration request information from a mobile node to a foreign agent, an authentication server, and a home agent in this order, returning a message containing location registration reply information as an answer to the received message in the inverse order from the home agent to the mobile node, registering the location of the mobile node in the home agent and the foreign agent, and providing a communications service for the mobile node. The authentication server adds corresponding service profile information to the message containing the location registration request information or the location registration reply information, and transmits the message. The foreign agent and the home agent control the transfer of a packet transmitted or received by the mobile node according to the service profile information contained in the message received from the authentication server.

In the above described method, a service profile is distributed only to a home agent of a mobile node and a foreign agent accommodating the mobile node. Therefore, even if the number of mobile nodes increases, the volume of the service control information to be set in each agent can be relatively small. In addition, a mobile node can receive various value-added services after it is moved to an optional place.

According to another method of the present invention, that is, in a mobile communications service method of providing a communications service for a mobile node, an authentication server receives a message containing location registration request information from a mobile node. The authentication server transmits a message containing service profile information to an agent according to the message containing the location registration request information. The agent controls the transfer of a packet transmitted or received by the mobile node according to the service profile information contained in the message received from the authentication server. In the above described method, the service profile information corresponding to the mobile node is distributed to a predetermined agent using the message used in a location registration procedure of a mobile node. Therefore, the overhead for distributing the service profile information can be minimized.

The system according to a further embodiment of the present invention includes: a foreign agent for transferring to a correspondent node a packet received from a mobile node and addressed to the correspondent node, and decapsuling a received capsuled packet from a home agent or the correspondent node and transferring the decapsuled packet to the mobile node; and a home agent for transmitting a packet received from the correspondent node to the foreign agent after capsuling the packet, and notifying the correspondent node of a care-of address for the mobile node and service profile information about the mobile node by incorporating the care-of address and the information into a binding update message, a packet transfer route from the correspondent node to the mobile node is optimized according to the binding update message received from the home agent. With the configuration, the transfer route can be optimized by the home agent notifying the communications node of the care-of address of the mobile node using the binding update message.

The home agent apparatus according to the present invention receives a message containing location registration request information from a mobile node, and registers the location of the mobile node. When a message containing location registration request information is received from each mobile node, the message containing the location registration request information is transmitted to an authentication server. When a message containing registration reply information in response to the message containing the registration request information and service profile information is received, service control information is set according to the registration reply information and the service profile information, and a packet transmitted and received by the mobile node through a home agent is transfer-controlled according to the service profile information. With the configuration, a home agent provides a value-added service for a mobile node according to a service profile distributed by an authentication server.

The authentication apparatus according to the present invention transmits a corresponding message after receiving a message containing location registration request information from a mobile node.

A message containing location registration request information is received from a mobile node, and, according to the message, a message containing service profile information required for a value-added service provided for the mobile node is transmitted to an agent. With the configuration, the message for use in a location registration procedure contains service control information, and is then distributed, thereby reducing the traffic.

The system according to a further embodiment of the present invention includes a database for managing a service profile containing information for use in providing a service requested by a mobile node, a plurality of agents each of which can manage one or more addresses, and can accommodate a mobile node, and an authentication server authenticating a mobile node. A home agent which is an agent for managing an address of the mobile node includes a request unit for issuing an authentication request to the authentication server upon receipt of a location registration request from the mobile node. The authentication server includes an extraction unit for extracting a service profile corresponding to the mobile node from the database upon receipt of the authentication request, and a reply unit for transmitting to the home agent the service profile extracted by the extraction unit together with an authentication reply corresponding to the authentication request. The home agent provides a service according to the service profile received from the authentication server.

With the configuration, even if a mobile node is accommodated in a home agent, the mobile node can be authenticated, and a service profile corresponding to the mobile node can be distributed to the home agent from the authentication server. Therefore, an illegal login using a mobile node can be avoided, and a mobile node can be provided with various value-added services regardless of whether the mobile node is located in a communications area of a foreign agent or in a communications area of a home agent.

The system according to a further embodiment of the present invention includes the database, a plurality of agents, and an authentication server. A home agent which is an agent for managing an address of the mobile node includes a request unit for issuing an authentication request containing the locational information about the mobile node to the authentication server upon receipt of a location registration request from the mobile node; and a registration unit for registering the location of the mobile node according to a location registration request transmitted from the authentication server. The authentication server includes an extraction unit for extracting a service profile corresponding to the mobile node from the database upon receipt of the authentication request, and a reply unit for transmitting to the home agent a location registration request containing locational information received from the home agent, the authentication reply corresponding to the authentication request, and the service profile extracted by the extraction unit. The home agent provides a service according to the service profile received from the authentication server. With the configuration, various value-added services can be provided by a home agent based on a general-purpose location registration procedure.

In the system according to a further embodiment of the present invention, the request unit notifies the authentication server of the information specifying one of a first procedure and a second procedure. Upon receipt of the information specifying the first procedure from the request unit, the reply unit transmits the authentication reply and the service profile to the home agent. Upon receipt of the information specifying the second procedure from the request unit, the reply unit transmits to the home agent a location registration request for use in registering the location of the mobile node, the authentication reply, and the service profile. When the first procedure is specified, the home agent registers the location of the mobile node based on the registration request transmitted from the mobile node. When the second procedure is specified, the home agent registers the location of the mobile node based on the location registration request from the authentication server. With the configuration, when a service profile is distributed from an authentication server to a home agent, one of a general-purpose location registration procedure and a simple variation of the procedure can be selected.

In the system according to a further embodiment of the present invention, the home agent includes the function of a foreign agent. With the configuration, the mobile node can be authenticated regardless of whether the mobile node is located in a communications area of a foreign agent or in a communications area of a home agent.

In another mobile communications service method according to the present invention having a database for use in managing a service profile containing the information used to provide a service requested by a mobile node, a plurality of agents each of which can accommodate a mobile node, and an authentication server authenticating a mobile node, and providing a communications service for a mobile node. An agent, which receives a registration request from a mobile node, transmits an authentication request to the authentication server. The authentication server extracts a service profile corresponding to the mobile node from the database, and transmits to the agent the service profile together with an authentication reply corresponding to the authentication request. The agent provides a service according to the service profile received from the authentication server. In this method, in the procedure of authenticating a mobile node, a service profile corresponding to the mobile node is distributed to an agent. Therefore, the mobile node can receive various value-added services at any place to which the mobile node is moved.

Another method according to the present invention provides a communications service for a mobile node in a system having the database, the plurality of agents, and the authentication server. An agent, which receives a registration request from a mobile node, registers the location of the mobile node based on the registration request, and transmits an authentication request to the authentication server. The authentication server extracts a service profile corresponding to the mobile node from the database, and transmits to the agent the service profile together with an authentication reply corresponding to the authentication request. The agent provides a service according to the service profile received from the authentication server.

A further method according to the present invention provides a communications service for a mobile node in a system having the database, the plurality of agents, and the authentication server. An agent, which receives a registration request from a mobile node, transmits an authentication request containing the locational information about the mobile node to the authentication server. The authentication server transmits to the agent a location registration request containing the locational information received from the agent. The agent registers the location of the mobile node based on the location registration request received from the authentication server, and transmits a registration reply corresponding to the location registration request to the authentication server. The authentication server transmits an authentication reply corresponding to the authentication request to the agent. The authentication server extracts a service profile corresponding to the mobile node from the database, stores the service profile in at least one of the location registration request and the authentication reply, and then transmits the service profile to the agent. The agent provides a service according to the service profile received from the authentication server.

In the above-described two methods, since a service profile corresponding to a mobile node is distributed to an agent in the location registration procedure, the mobile node can receive various value-added services at any place to which it is removed.

A further method according to the present invention provides a communications service for a mobile node in a system having the database, the plurality of agents, and the authentication server. An authentication request message requesting the authentication server to authenticate the mobile node is transmitted from an agent accommodating a mobile node. A service profile corresponding to the mobile node is extracted from the database. The extracted service profile is stored in an authentication reply message corresponding to the authentication request message. The authentication reply message is transmitted from the authentication server to an agent accommodating the mobile node. The agent accommodating the mobile node provides a service for the mobile node according to the service profile stored in the authentication reply message. In this method, when a mobile node enters a communications area of an agent, a service profile corresponding to the mobile node is distributed to the agent in the authentication procedure of the mobile node. Therefore, the mobile node can receive various value-added services at any place to which it is moved.

A further method according to the present invention provides a communications service for a mobile node in a system having the database, the plurality of agents, and the authentication server. An authentication request message containing locational information about the mobile node is transmitted from an agent accommodating a mobile node to the authentication server. A service profile corresponding to the mobile node is extracted from the database. The extracted service profile is stored in the location registration request message for use in registering the location of the mobile node. The location registration request message is transmitted from the authentication server to an agent, which has to recognize a location the mobile node. The agent, which receives the location registration request message, provides a service for the mobile node according to the service profile. In this method, in the procedure of registering the location of a mobile node in a home agent, a service profile corresponding to the mobile node is distributed to the home agent.

The home agent apparatus according to another embodiment of the present invention is one of a plurality of agents in a system having the database, the plurality of agents, and the authentication server. A first generation unit generates a visitor list for a mobile node upon receipt of a location registration request from the mobile node. A request unit transmits an authentication request to the authentication server to authenticate the mobile node. A second generation unit generates a mobility binding for the mobile node upon receipt of a service profile corresponding to the mobile node extracted from the database and an authentication reply corresponding to the authentication request from the authentication server. A service control unit provides a service for the mobile node using the service profile, the visitor list, and the mobility binding received from the authentication server. With the configuration, the home agent apparatus can have the function of the conventional home agent apparatus, and the function of a foreign agent.

The above described configurations and methods according to the present invention can be used in combination as much as possible.

### Brief Explanation of the Drawings

FIG. 1 is the outline of the configuration of the network according to the present invention;
FIG. 2 is a block diagram showing the function of the present invention;
FIG. 3 is a block diagram of the functions of a home agent (HA) and a foreign agent (FA);
FIG. 4 is an explanatory view of a control table of the service control transaction of an FA;
FIG. 5 is an explanatory view of a control table of the service control transaction of an HA;
FIG. 6 is an example of the any-cast address binding table;
FIG. 7 is an example of a routing table;
FIG. 8 is an example of a binding cache;
FIG. 9 is an example of a service control filter;
FIG. 10 is a flowchart of the operations of an FA and an HA;
FIG. 11 is an example of a control request message;
FIG. 12 is an example of a control reply message;
FIG. 13 is a block diagram of the function of an AAAF (authentication, authorization, and accounting foreign);
FIG. 14 is an example of the control block of a service control transaction of an AAAF;
FIG. 15 is an example of an HA assignment management table;
FIG. 16 is a flowchart of the operations of an AAAF;
FIG. 17 is a block diagram of the function of an AAAH (authentication, authorization, and accounting Home);
FIG. 18 is an example of the control block of a service control transaction of an AAAH;
FIG. 19 is an example of an any-cast address management table;
FIG. 20 is an example of service information stored in a service control database;
FIG. 21 is an example of a control block stored in a service control database;
FIG. 22 is a flowchart of the operations of an AAAH;
FIG. 23 is a block diagram of the functions of a correspondent node;
FIG. 24 is a flowchart of the operations of a correspondent node;
FIG. 25 shows the initial location registration sequence set when an AAAH assigns an HA;
FIG. 26 shows the initial location registration sequence set when an AAAF assigns an HA;
FIG. 27 shows the distribution sequence of transmitting and receiving a packet between a mobile terminal and a correspondent node;
FIG. 28 shows an example (1) of the movement of a mobile terminal;
FIG. 29 shows the sequence when a mobile terminal is moved as shown in FIG. 28;
FIG. 30 shows an example (2) of the movement of a mobile terminal;
FIG. 31 shows the sequence when a mobile terminal is moved as shown in FIG. 30;
FIG. 32 is an example of the NAI (Network Access Identifier) registration table of the mobile terminal of an FA;
FIG. 33 is an example of a prefix table of an NAI;
FIG. 34 shows an example (3) of the movement of a mobile terminal;
FIG. 35 shows the sequence when a mobile terminal is moved as shown in FIG. 34;
FIG. 36 shows an example of the configuration of a network designed when an ANYCAST service is registered;
FIG. 37 shows the sequence when a mobile node participates in an ANYCAST service;
FIG. 38 shows the distribution sequence of a packet transmitted using an ANYCAST service;
FIG. 39 shows the distribution sequence of a data packet when packet filtering is applied;
FIG. 40 shows an example of a service control transaction generated by a home agent;
FIG. 41 is a flowchart of the operations of a mobile agent (including an HA and an FA);
FIG. 42 is a table showing the correspondence between a received message and a service control transaction in the process shown in FIG. 41;
FIG. 43 is a table showing the correspondence between a received message and a transmission message in the process shown in FIG. 41;
FIG. 44 is a flowchart of the operations of an AAAH;
FIG. 45 is a table showing the correspondence between a received message and a transmission message in the process shown in FIG. 44;
FIG. 46 is a table showing an example of the divisions of service profile information;
FIG. 47 shows an example of a user profile;
FIG. 48 shows the sequence of location registration by a normal procedure;
FIG. 49 shows the sequence of location registration by a simplified procedure;
FIG. 50 shows the procedure (1) of distributing a service profile;
FIG. 51 shows the procedure (2) of distributing a service profile;
FIG. 52 shows the procedure (3) of distributing a service profile;
FIG. 53 shows a procedure of distributing a data packet;
FIG. 54 shows the format of the MOBILE-IP message;
FIG. 55 shows the format of the IP header;
FIG. 56 shows the format of the UDP header;
FIG. 57 shows the format of the registration request message of the MOBILE-IP;
FIG. 58 shows the format of the 'REGISTRATION REQUEST' of the registration request message of the MOBILE-IP;
FIG. 59 shows the format (1) of the extension area of the registration request message;
FIG. 60 shows the format (2) of the extension area of the registration request message;
FIG. 61 shows the format (3) of the extension area of the registration request message;
FIG. 62 shows the format of the 'REGISTRATION REPLY' of the registration reply message of the MOBILE-IP;
FIG. 63 shows the format of the 'BINDING UPDATE' of the MOBILE-IP;
FIG. 64 shows the format of the 'BINDING ACKNOWLEDGE' of the MOBILE-IP;
FIG. 65 shows the format of a DIAMETER message;
FIG. 66 shows the format of the common header of a DIAMETER message;
FIG. 67 shows the basic format of the AVP (attribute value pair) of a DIAMETER message;
FIG. 68 shows the format of the 'DIAMETER-COMMAND AVP' of a DIAMETER message;
FIG. 69 shows the format of a common AVP other than a command of a DIAMETER message;
FIG. 70 shows the format of an AMR (AA-Mobile-Request) message of the DIAMETER protocol;
FIG. 71 shows the format of an HAR (Home-Agent-Mip-registration Request) message of the DIAMETER protocol;
FIG. 72 shows the format of an AMA (authentication reply(AA-Mobile Node-Answer))message of the DIAMETER protocol;
FIG. 73 shows the format of an HAA (Home Agent registration reply) message of the DIAMETER protocol;
FIG. 74A shows the format of an AMU message of the DIAMETER protocol;
FIG. 74B shows the format of the 'MIP BINDING UPDATE AVP' of the DIAMETER protocol;
FIG. 75A shows the format of an AMAc message of the DIAMETER protocol; and
FIG. 75B shows the format of the 'MIP BINDING ACKNOWLEDGE AVP' of the DIAMETER message.

### DETAILED DESCRIPTION

The embodiments of the present invention are described below by referring to the attached drawings.
1. Outline of the present invention
2. Entire configuration of the present invention
3. FA (foreign agent) / HA (home agent) of the present invention
   3.1 Outline of FA/HA
   3.2 Configuration of FA/HA
   3.3 Service control transaction of FA
   3.4 Service control transaction of HA
   3.5 Any cast address-binding table
   3.6 Routing table
   3.7 Binding cache
   3.8 Service control filter
   3.9 Process flow of FA/HA
4. AAAF according to the present invention
   4.1 Outline of AAAF
   4.2 Configuration of AAAF
   4.3 Process flow of AAAF
5. AAAH according to the present invention
   5.1 Outline of AAAH
   5.2 Configuration of AAAH
   5.3 Process flow of AAAH
6. CN according to the present invention (Correspondent node)
   6.1 Outline of CN
   6.2 Configuration of CN
   6.3 Process flow of CN
7. Providing Diff-Serv
8. Process Sequence of the system according to the present invention
   8.1 Dynamic Assignment of HA
   8.2 In a case where AAAH specifies HA
   8.3 In a case where AAAF specifies HA
   8.4 Setting service control transaction in FA
   8.5 Distributing data packet
   8.6 In a case where a mobile node is moved to the communications area of an FA in an AAAF (authentication, authorization, and accounting foreign) to the communications area of another FA in the same AAAF (case 1)
   8.7 In a case where a mobile node is moved to the communications area of an FA in an AAAF to the communications area of another FA in the same AAAF (case 2)
   8.8 In a case where a mobile node is moved from a foreign agent network of an AAAF to a foreign agent network of another AAAF
   8.9 Example of the configuration of the network in the any-cast service
   8.10 Any-cast registration sequence
   8.11 Packet distribution to any-cast address
   8.12 Packet filtering in HA
9. Home agent having the function of a foreign agent
   9.1 Explanation of operations
   9.2 Embodiments

### 1. Outline of the present invention

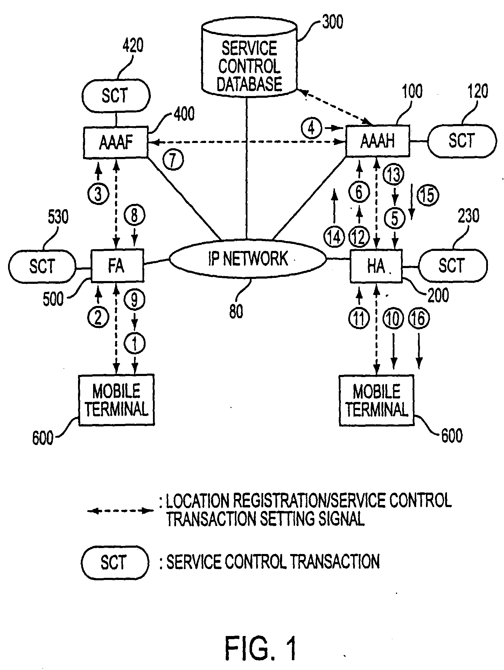

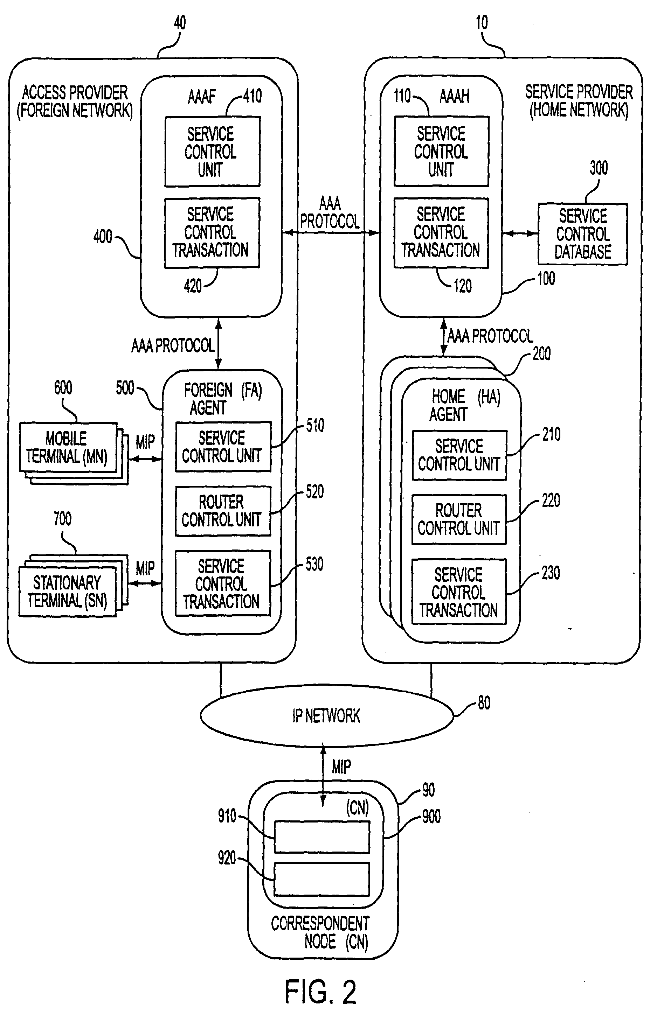

Before explaining the embodiments of the present invention, the outline of the present invention is explained by referring to FIGS. 1 and 2.

According to the present invention, a mobile terminal 600 and a stationary terminal 700 (the mobile terminal 600, the stationary terminal 700, and a terminal having the functional equivalent to the functions of the mobile terminal 600 and the stationary terminal 700 are hereinafter referred to as mobile nodes) are subscribers of a home agent (HA) 200. In this example, the mobile node 600 has been moved from the communications area of the HA 200 of a home network 10 to the communications area of a foreign agent (FA) 500 of a foreign network 40. At this time, when the mobile node 600 issues a connection request to the HA 200 through the FA 500, it is necessary to authenticate whether or not the mobile node 600 is a subscriber of the HA 200. Described below is the procedure of authenticating the mobile node 600.

First, the mobile node 600 transmits a location registration request message to the FA 500 in the foreign network 40. Upon receipt of the location registration request message, the FA 500 capsules the message to generate an authentication request message, and transmits it to the authentication request server (hereinafter referred to as an AAAF).

The AAAF 400 determines an authentication process server (hereinafter referred to as an AAAH also authentication, authorization, and accounting Home) in charge of the authentication of the received authentication request message, and transmits the message to an AAAH 100. The AAAH 100 authenticates the mobile node 600 according to the received authentication request message.

Thus, the AAAF 400 receives a location registration request message from the FA 500, generates an authentication request message for the received message, requests an appropriate AAAH 100 to authenticate the mobile node, and receives the result of the authentication. On the other hand, the AAAH 100 is an authentication process server for authenticating, authorizing, and accounting of a mobile node accommodated in the home network 10. Normally, the database (a service control database 300) accessible by the AAAH 100 stores and manages the information about the authentication, the authorization, and the accounting of a subscriber. In the embodiments of the present invention, the AAAF 400 and the AAAH 100 can be referred to as an authentication server.

The outline of the flow of a control signal when the location of a mobile node is registered in the HA 200 and the process performed by the AAAF 400 and the AAAH 100 is described below by referring to FIG. 1. In FIG. 1, each service control transaction is shown outside the FA 500, the AAAF 400, the AAAH 100, and the HA 200 for easier explanation.
1. The HA 200 and FA 500 periodically outputs an agent advertisement message (mobile IP message). The mobile node 600 recognizes the home agent or the foreign agent which accommodates the mobile node 600 by receiving the agent advertisement message from the HA 200 or the FA 500.
2. When the mobile node 600 is moved outside the communications area of the HA 200 managed by a contract provider (service provider 10), it transmits a location registration request message in response to the agent advertisement message transmitted from the FA 500 of the provider in the communications area where the mobile node 600 enters.
3. When the FA 500 receives the registration request message from the mobile node 600, it transmits an AMR (AA-Mobile-Request) message to the AAAF (authentication, authorization, and accounting foreign) 400 through an IP network 80.
4. The AAAF 400 extracts necessary information for authentication from the received AMR (AA-Mobile-Request) message, and determines the AAAH (authentication, authorization, and accounting home) 100 in charge of the authentication of the mobile node 600. Then, it transmits the AMR message to the AAAH 100 through the IP network 80.
5. The AAAH 100 retrieves the necessary information for authentication from the received AMR message, and performs an authenticating process. At this time, it extracts a mobile node identifier (NAI: network access identifier) for use in identifying the mobile node from the AMR message, and retrieves a corresponding user profile (service profile information) from the service control database 300 using the NAI as a key.
   If the AAAH 100 has succeeded in the authentication of the AMR message, then it adds the service profile information extracted from the service control database 300 to an HAR (Home Agent registration request) message, and transmits the message to the HA 200 through the IP network 80. The HAR message is obtained by capsuling the location registration request message from the mobile node in a packet.
   The HA 200 can comprise a plurality of HAs. When one logical HA is formed by a plurality of HAs, the load of the HA 200 can be appropriately distributed. The HA 200 comprising a plurality of HAs functions as one HA in processing a data packet transmitted from a terminal device (a mobile node). However, the AAAH 100 and the AAAF 400 can identify each of the plurality of HAs, and issue an instruction to each of them. Furthermore, when the HA 200 comprises a plurality of HAs, the AAAH 100 can specify one of the plurality of HAs, and transmit the HAR (Home Agent registration request) message to the specified HA through the IP network 80. In addition, the AAAF 400 can specify the HA 200 for the AAAH 100, generate an HAR message from an AMR message, and transmit the message to the specified HA 200 through the IP network 80.
6. The HA 200 retrieves the information such as a session ID, a lifetime, etc. from the received HAR message, and registers the location of the mobile node 600. That is, the HA 200 extracts from the received HAR message the necessary information for transferring a packet addressed to the mobile node 600 to the new destination, and generates service control information (a location registration table of a service control transaction 230). Then, it returns the result to the AAAH 100 or the AAAF 400 through the IP network 80 in an HAA (Home Agent registration reply) message.
7. Upon receipt of an HAA message, the AAAH 100 extracts from the previously received AMR message or the user profile the necessary information, generates service control information (the location registration table of a service control transaction 120), and transmits an AMA (authentication reply(AA-Mobile Node-Answer)) message in response to the AMR message to the AAAF 400 through the IP network 80. At this time, the service profile information is transmitted being stored in the AMA (authentication reply(AA-Mobile Node-Answer)) message.
8. The AAAF 400 extracts necessary information from the AMA message, generates service control information (the service profile table of a service control transaction 420), and transmits the received AMA message to the FA 500 through the IP network 80.
9. The FA 500 extracts necessary information from the received AMA message, generates service control information (the service profile table of a service control transaction 530), generates a registration reply message according to the AMA message, and transmits it to the mobile node 600. When the mobile node 600 receives the registration reply message, the procedure of registering the current location of the mobile node 600 in the HA 200 is completed. Afterwards, the FA 500 refers to the received service control information, and provides a value-added service, as provided by the PBN, for the mobile node 600 connected to the foreign network 40.
   Thus, since the HA 200 constantly manages the current location of the mobile node 600, a packet addressed to the mobile node 600 from another terminal, server, etc. is transferred to the mobile node 600 from the HA 200 through the FA 500. At this time, since a service control profile has been distributed from the AAAH 100/AAAF 400 to the FA 500 (and the HA 200), a value-added service as provided by the PBN is provided for the communications between the mobile node 600 and its correspondent node.
   Then, the outline of the flow of the control signal and the process performed by the AAAH 100 when the location of the mobile node 600 is registered in the HA 200 in the home network 10 is described below by referring to FIG. 1.
10. If the mobile node 600 receives the agent advertisement message (mobile IP message) from the HA 200, it recognizes that it is located in the communications area of the HA 200.
11. Upon receipt of the agent advertisement message transmitted from the HA 200, it transmits a location registration request message in return.
12. Upon receipt of the registration request message from the mobile node 600, the HA 200 transmits an AMR (authentication request) message to the AAAH (authentication, authorization, and accounting home) 100 through the IP network 80 to perform an authenticating process, an authorizing process, an accounting process, etc. according to the registration request message.
13. The AAAH 100 performs an authenticating process by retrieving necessary information for authentication from the received AMR message. At this time, it extracts a mobile node identifier (NAI) for use in identifying the mobile node from the AMR message, and retrieves a user profile (location registration information) corresponding to the NAI from the service control database 300 using the NAI as a key. Furthermore, if the AAAH 100 successfully authenticates the AMR message, it adds the location registration information to the HAR message, and transmits it to the HA 200 through the IP network 80. As described above, the HA 200 can comprise a plurality of HAs.
14. The HA 200 retrieves the information such as a session ID, a lifetime, etc. from the received HAR (Home-Agent-Mip-Request) message, and registers the location of the mobile node 600. That is, the HA 200 extracts from the HAR message the necessary information for transferring the packet addressed to the mobile node 600 to the new destination, and generates service control information (the service profile table of the service control transaction 230). Then it returns the result to the AAAH 100 through the IP network 80 using the HAA message.
15. Upon receipt of the HAA message, the AAAH 100 extracts the necessary information from the received AMR message or the user profile, generates service control information (the service profile table of the service control transaction 120), and transmits an AMA (authentication reply) message to the HA 200 through the IP network 80. At this time, the service profile information is transmitted being stored in the AMA (AA-Mobile-Node-Answer) message.
16. The HA 200 extracts the necessary information from the received AMA message, generates service control information (the service profile table of the service control transaction 230), generates a registration reply message according to the AMA message, and transmits it to the mobile node 600. When the mobile node 600 receives the registration reply message, the procedure of registering the current location of the mobile node 600 is completed. Then, the HA 200 refers to the service control information obtained from the AAAH 100, and provides a value-added service (for example, QoS, etc.) for the mobile node 600 connected to the home network 10.
   Thus, when the mobile node 600 is connected to the HA 200, a value-added service equivalent to the service provided by the PBN is provided for the communications between the mobile node 600 and the correspondent node.
   Another modification of the above description, the AAAH 100 adds to the HAR message the service profile information which is equal to service profile information contained in the AMA message. The HA 200 receives the HAR message and adds the service profile information contained in the HAR message to the HAA message. In this case, the AAAH 100 does not have to newly add the service profile message to the AMA message.

### 2. Entire configuration of the present invention

FIG. 2 is a block diagram showing each function of the present invention. In FIG. 2, the service provider (home network) 10, the access provider (foreign network) 40, and a correspondent node 90 are interconnected through the IP network 80 and a MIP (mobile IP).

A service provider (home network) 10 includes the HA (home agent) 200, the AAAH (authentication, authorization, and accounting home) 100 and the service control database 300. For example, an AAA (authentication, authorization, and accounting) protocol, etc. connects the AAAH 100 to at least one HA 200. They can also be connected through the IP network 80. The AAAH 100 and the HA 200 can be mounted in one apparatus. In this case, they can be connected through, for example, a bus. Similarly, the AAAF 400 and the FA 500 can also be mounted in one apparatus.

The AAAH 100 is connected to the service control database 300 through a database protocol, for example, a LDAP (light directory access protocol), etc. They can also be connected through a bus, or the IP network 80. In the service control database 300, for example, the information about a mobile terminal, a stationary terminal, or the users of the terminals, the packet filtering information for prohibiting the access to harmful WWW information, etc, the security information, the Diff-Serv relevant information, etc. are stored. A practical example of the service control database 300 is described later.

The AAAH 100 can obtain the service profile information about a mobile terminal, a stationary terminal, users, etc. from the service control database 300 using a database search protocol such as an LDAP, etc.

The AAAH 100 is connected to the AAAF (authentication, authorization, and accounting foreign) 400 through, for example, an AAA (authentication, authorization, and accounting) protocol. They can also be connected using the IP network 80. In addition, the AAAF 400 is connected to the FA 500 through, for example, an AAA protocol. They can also be connected through the IP network 80. Furthermore, the mobile node 600 is connected to the FA 500 through an MIP (mobile IP).

As shown in FIG. 2, the mobile node 600 is located outside the communications area provided by the contract service provider 10 of a user of the mobile node 600, but in the communications area provided by the foreign network 40, and is connected to the FA 500 through a MIP (mobile IP).

The AAA protocol shown in FIG. 2 is a protocol widely used in the AAA system. However, an available protocol is not limited to this type according to the present invention. According to an embodiment of the present invention, however, it is assumed that a DIAMETER protocol being studied by the IETF is available.

An AAA protocol is a protocol for transmitting the information about authentication, authorization, accounting, and policy. When the information specific to the present invention is transmitted and received among the FA 500, the AAAF 400, the AAAH 100, and the HA 200, an extendable attribute parameter referred to as an AVP (attribute value pair) prescribed by the DIAMETER protocol, and an area specified by the parameter are used. An extendable attribute is the policy of service control, and the relevant information.

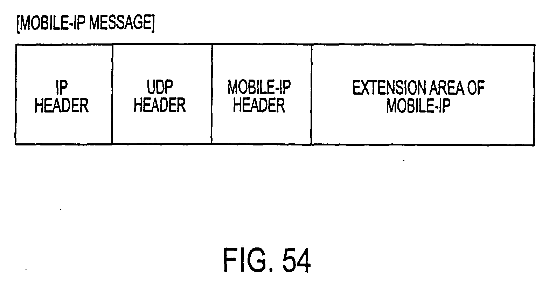

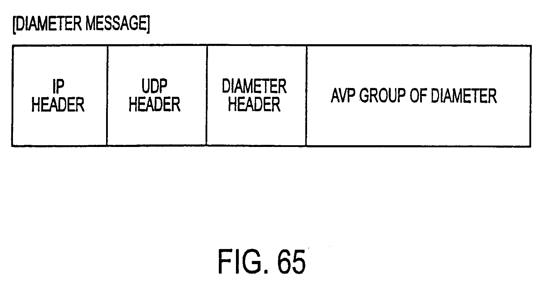

FIGS. 54 through 64 show the format of a message used by the protocol of the MIP (mobile IP). FIGS. 65 through 75 show the format of a message used by the DIAMETER protocol.

FIG. 54 shows the format of a Mobile IP message.

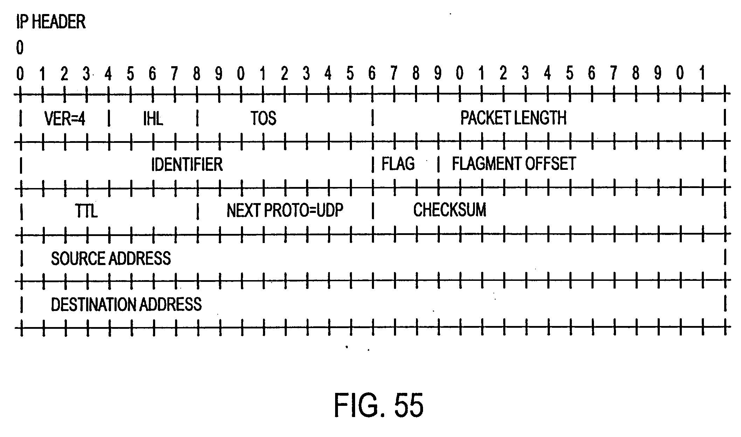

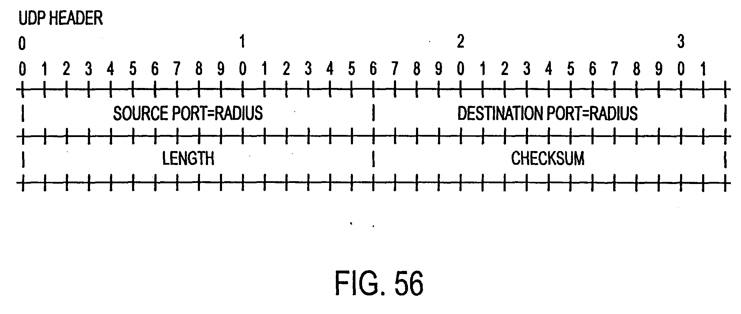

FIG. 55 shows the format (version 4) of the IP header shown in FIG. 54. The TOS (type of service) value is set in the ninth bit of the first line of the IP header. 'Source Address' specifying a source address and 'Destination Address' specifying a destination address are set in the fourth and fifth lines, respectively. FIG. 56 shows the format of the UDP header shown in FIG. 54. In the first line of the UDP header, 'Source Port' specifying a source port and 'Destination Port' specifying a destination port are set.

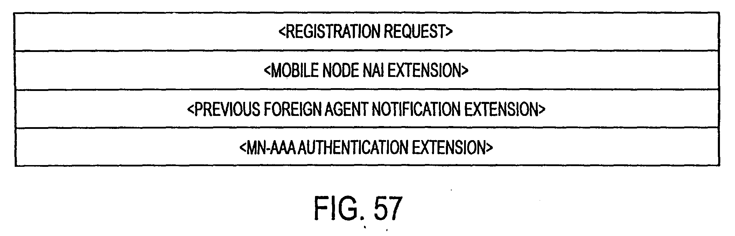

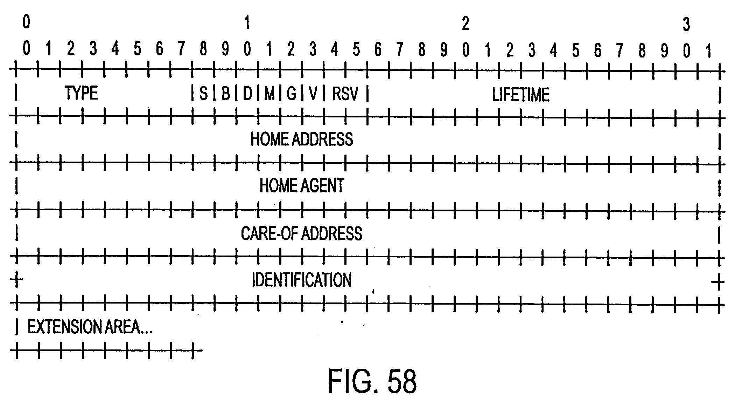

FIG. 57 shows the format of the registration request message of the IP. FIG. 58 shows the format of 'Registration Request' of the registration request message shown in FIG. 57. A lifetime is set in the first line, a home address is set in the second line, a home agent address is set in the third line, a care-of address is set in the fourth line, an identification is set in the fifth line, and an extension area is set in the sixth and the subsequent lines.

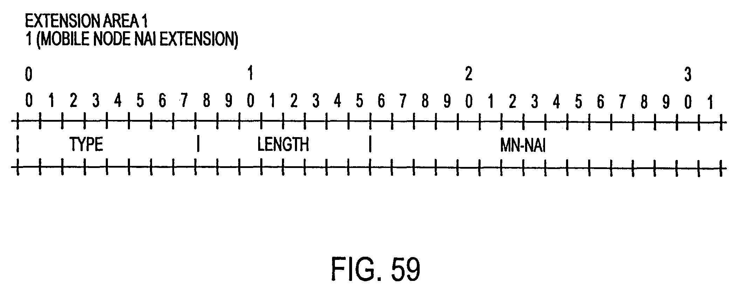

FIG. 59 shows the format of the 'Mobile Node NAI Extension' set in the extension area shown in FIG. 58. 'MN-NAI' identifies a mobile node accommodated by the HA 200 or the FA 500.

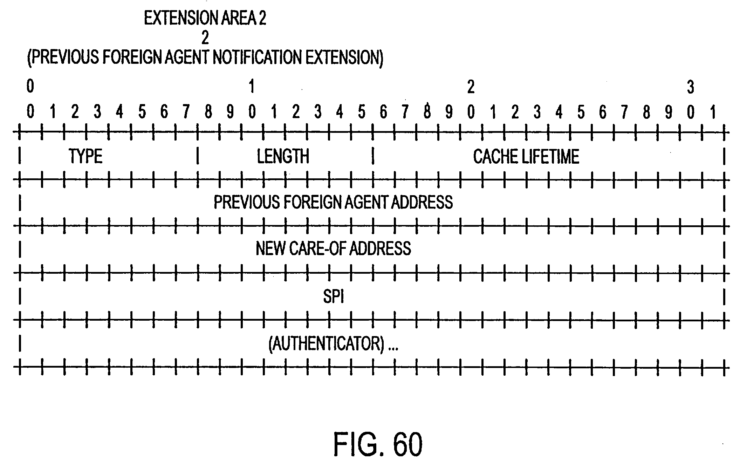

FIG. 60 shows the format of the 'Previous Foreign Agent Notification Extension' set in the extension area shown in FIG. 57. A cache lifetime (Cache Lifetime) is set in the first line, a previous foreign agent address (Previous Foreign Agent Address) is set in the second line, and a new care-of address (New Care-of Address) is set in the third line.

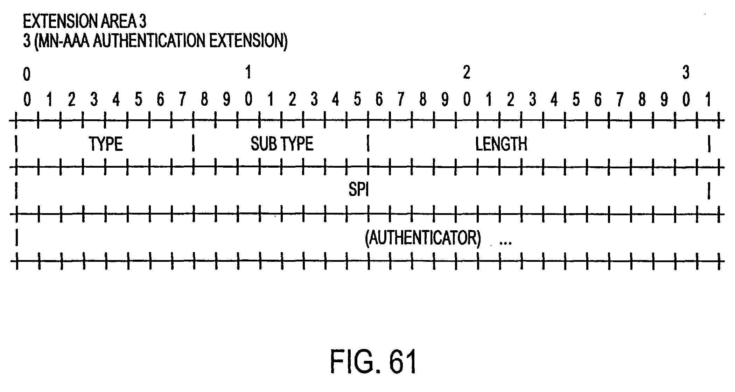

FIG. 61 shows the format of 'MM-AAA Authentication Extension' set in the extension area shown in FIG. 58. 'SPI' is a security parameter index specifying the algorithm, etc. used between a mobile node and an AAA. An 'authenticator' is a value referred to when a mobile node is authenticated using an 'SPI'.

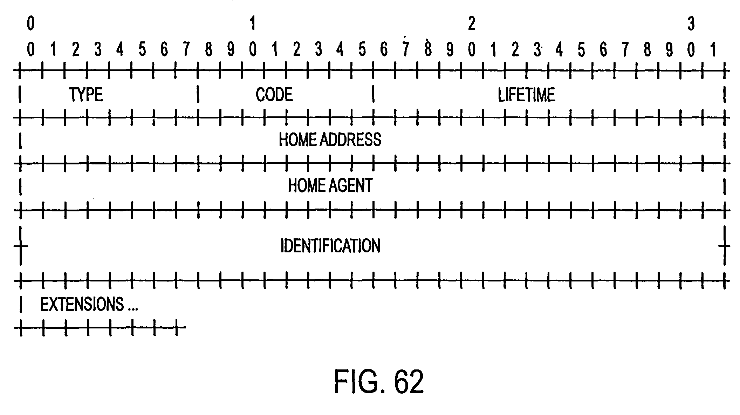

FIG. 62 shows the format of the registration reply message. A lifetime is set in the first line, a home address is set in the second line, a home agent is set in the third line, an identifier is set in the fourth and fifth lines, and an extension area is set in the sixth and the subsequent lines.

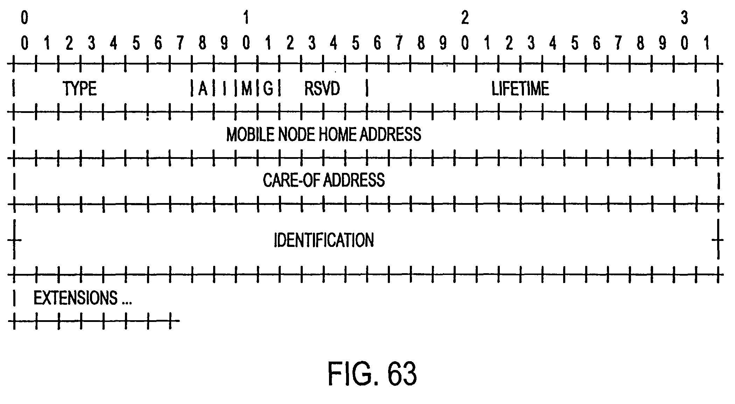

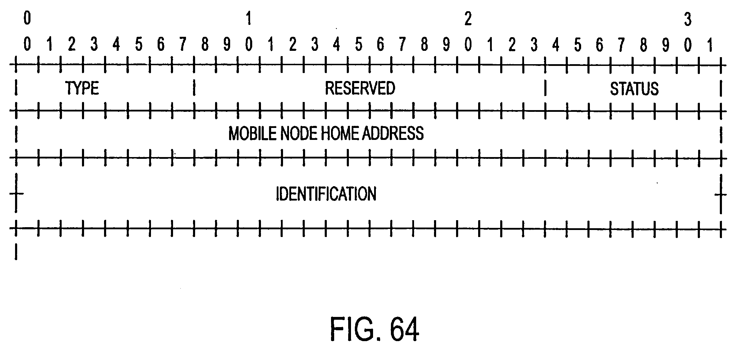

FIG. 63 shows the format of 'Binding Update' of the MBU (mobile-IP binding update) message used among foreign agents. FIG. 64 shows the format of 'Binding Acknowledge'. In the second line, a mobile node address is set. In the third and fourth line, an identification is set.

FIG. 65 shows the format of a DIAMETER message. A DIAMETER message is formed by setting a DIAMETER header immediately after the IP header and the UDP header, and setting a group of AVPs (attribute value pairs) of DIAMETER after the DIAMETER header.

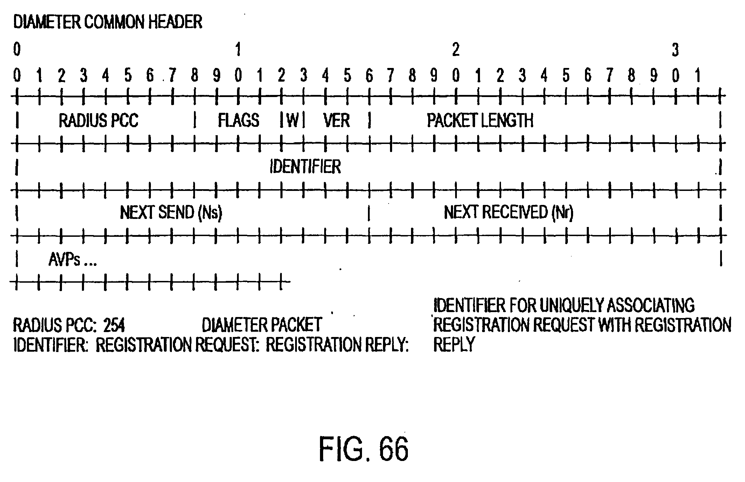

FIG. 66 shows the format of a common header of the DIAMETER message. An identifier is set in the second line. A group of AVPs are set in the fourth and the subsequent lines.

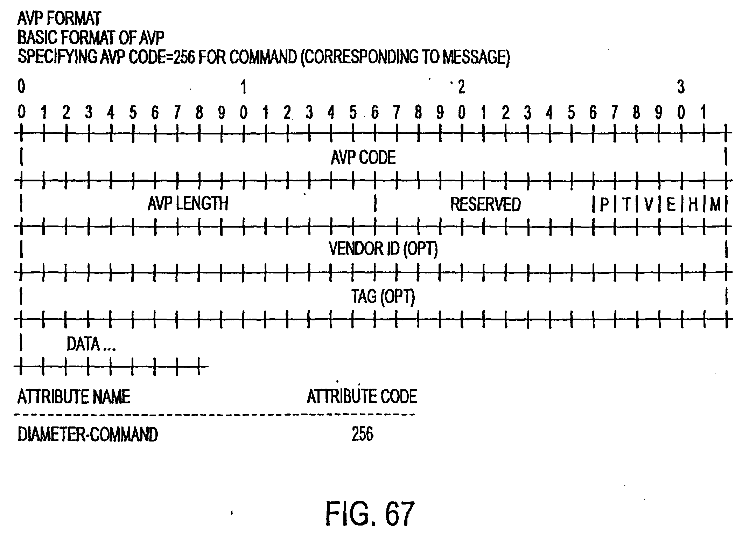

FIG. 67 shows the basic format of the AVP.

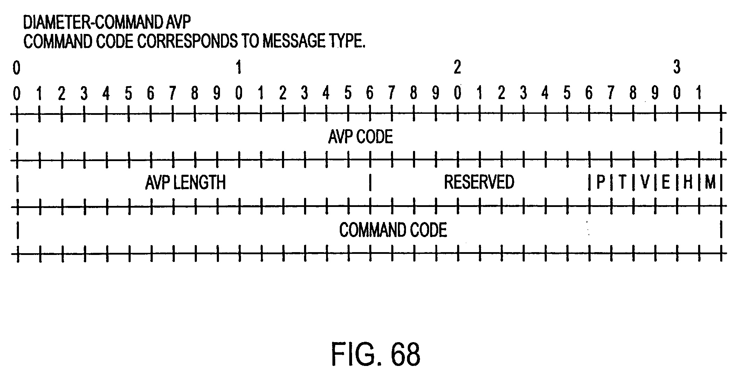

FIG. 68 shows the AVP format of a DIAMETER command when '256' is set as an AVP code in the first line in the basic format shown in FIG. 67. A code corresponding to the message is set as a command code.

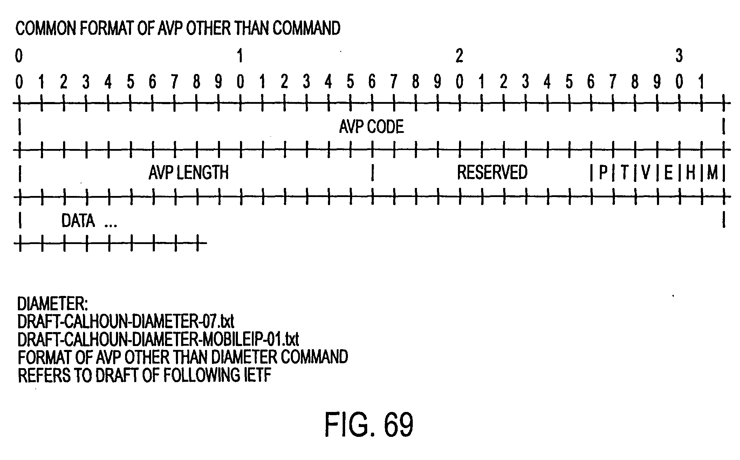

FIG. 69 shows a common format in which an AVP code other than a command is set in the basic format shown in FIG. 67.

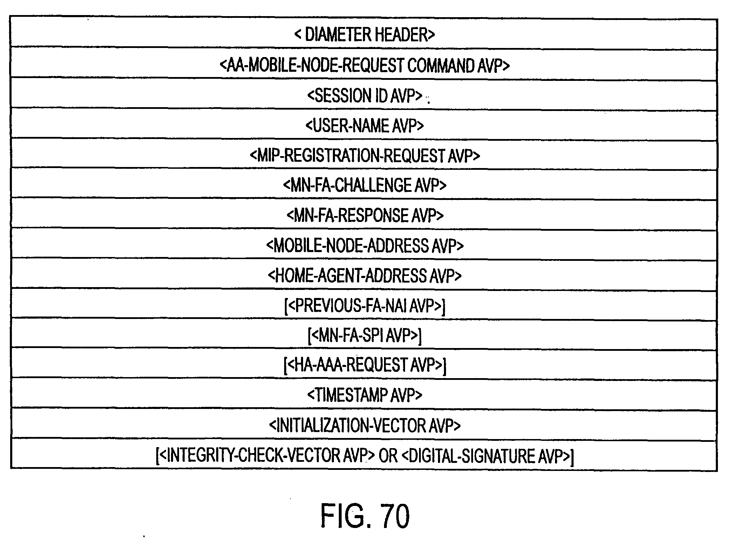

FIG. 70 shows the format of an AMR message of the DIAMETER protocol.

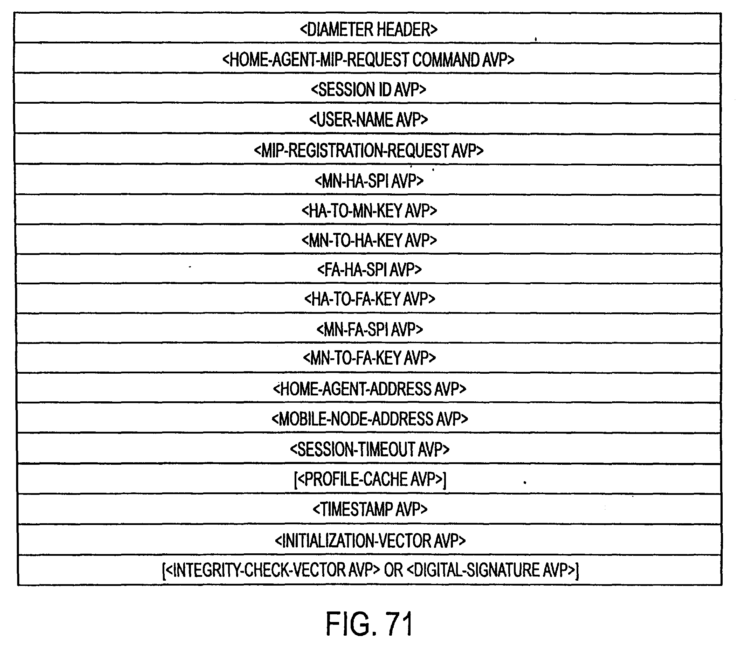

FIG. 71 shows the format of an HAR message of the DIAMETER protocol.

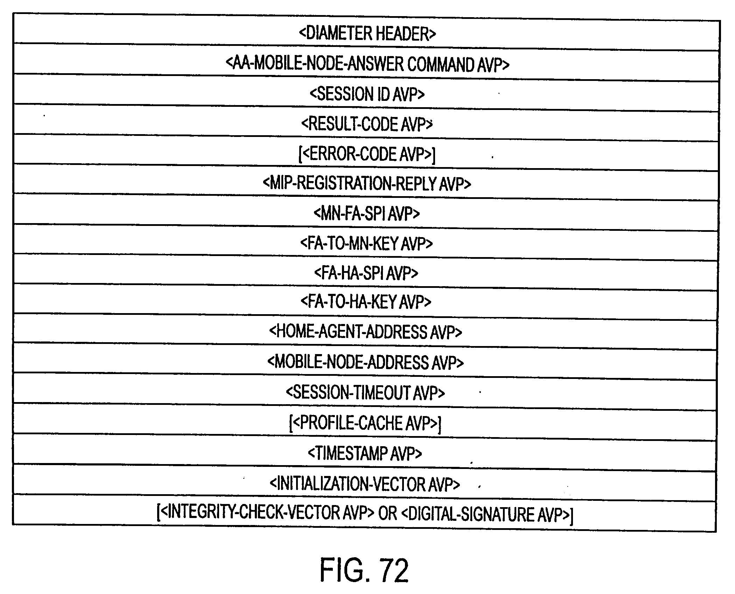

FIG. 72 shows the format of an AMA message of the DIAMETER protocol.

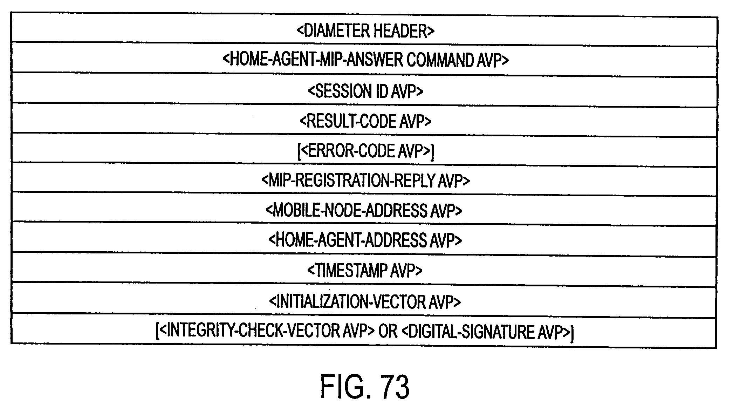

FIG. 73 shows the format of an HAA message of the DIAMETER protocol.

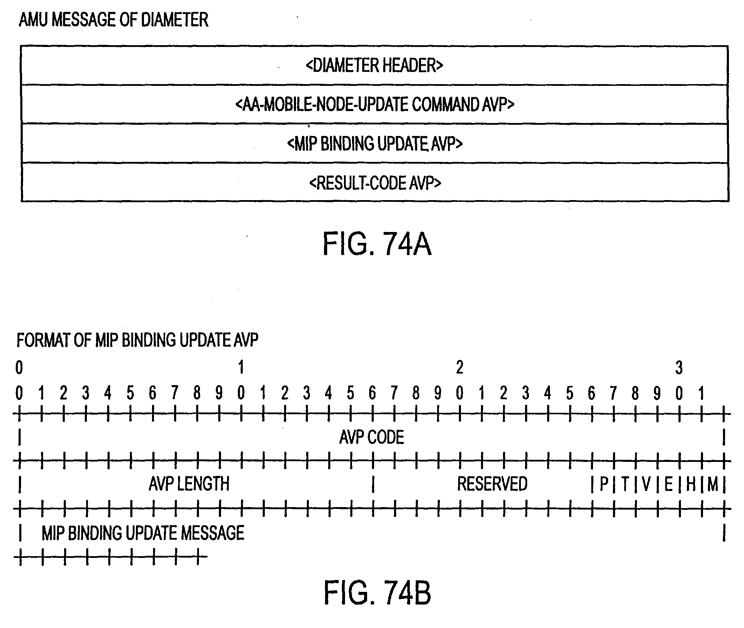

FIG. 74A shows the format of an AMU message of the DIAMETER protocol.

FIG. 74B shows the format of 'MIP Binding Update AVP' of an AMU message.

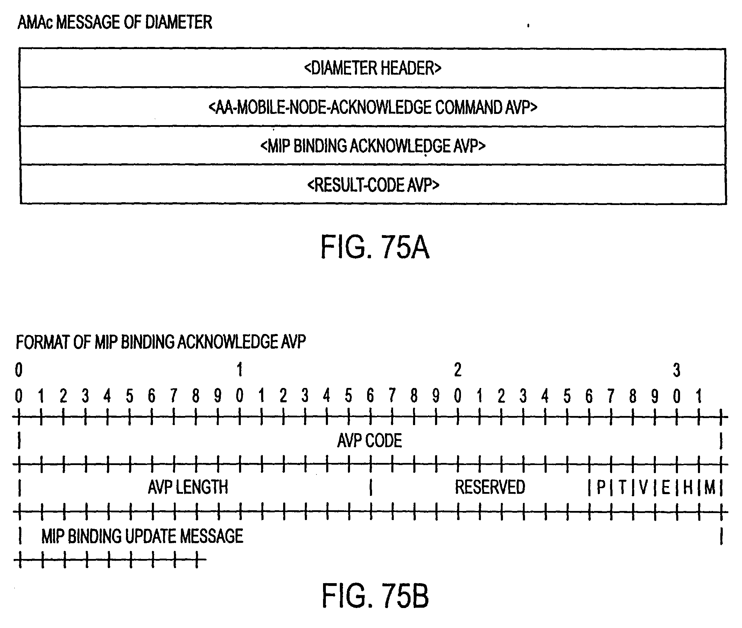

FIG. 75A shows the format of an AMAc message of the DIAMETER protocol.

FIG. 75B shows the format of 'Mobile IP Binding Acknowledge AVP' of an AMAc message. A message is set in the third line in the format shown in FIGS. 74B and 75B.

### 3. FA 500 / HA 200 according to the present invention

### 3.1. Outline of HA (home agent) and FA (foreign agent)

The functions of the FA 500 and the HA 200 are described below by referring to FIG. 2.

Normally, the IP address of each mobile node is managed by a corresponding HA, and a packet is transferred based on the IP address. Then, a packet addressed to the mobile node 600 is basically transferred to the HA 200, and is further transferred from the HA 200 to the mobile node 600.

However, when the mobile node 600 is moved from the communications area of the service provider (home network) 10 to the communications area of the foreign network 40, and when the mobile node 600 is accommodated by the FA 500 using the MIP (mobile IP), the HA 200 cannot transfer a received packet to the mobile node 600.

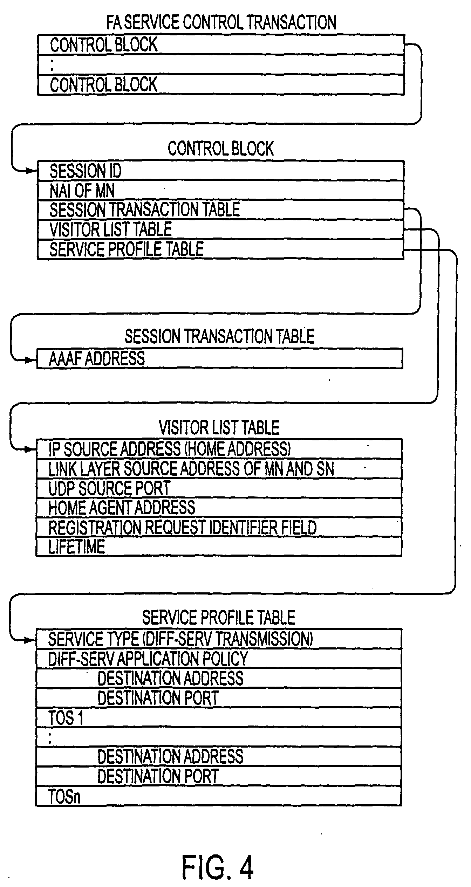

To solve the problem, when a mobile node enters the communications area of the FA 500, the FA 500 notifies (location registration) the HA 200 of it. Therefore, upon receipt of a packet addressed to the mobile node 600, the HA 200 capsules (adds a new IP header in which the FA 500 is set as the destination of the transfer to the received packet) the packet according to the notification, and transfers it to the FA 500. Then, the FA 500 decapsules the packet by removing the newly added IP header from the received packet, and transfers the packet to the address indicated by the original header, that is, the address of the mobile node 600. Thus, although the mobile node 600 has been moved, the packet can be transferred to the mobile node 600. A packet can also be transferred using a link layer address corresponding to the home address of the mobile node 600. For example, an MAC address can be used as a link layer address. In addition, the correspondence between an IP address and a link layer address can be managed by a table (shown in FIG. 4) referred to as a visitor list.

### 3.2 Configuration of FA / HA

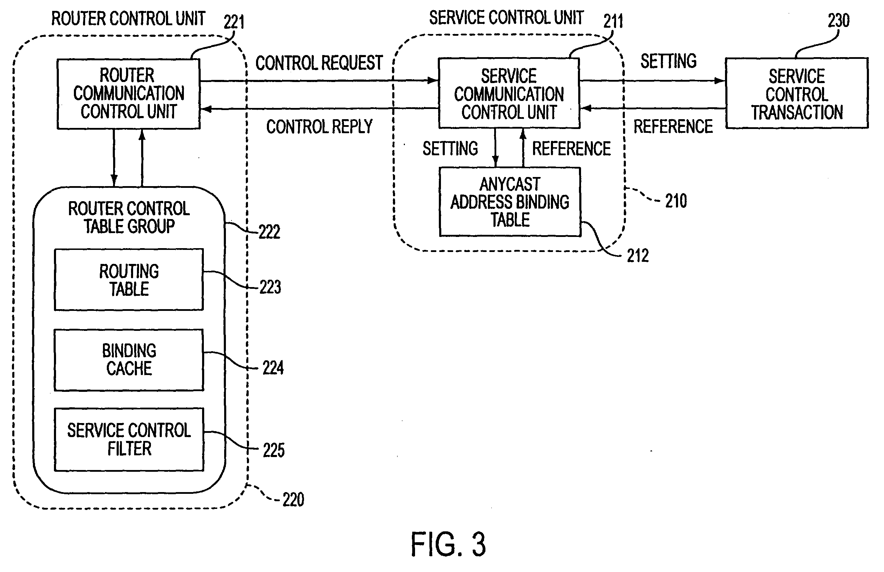

FIG. 3 is a block diagram of the functions of the home agent (HA 200) and the foreign agent (FA 500) shown in FIG. 2. The HA 200 and the FA 500 basically have the same configurations. That is, when a mobile node connected to an agent apparatus is connected to a contract service provider 10 of the mobile node, the agent apparatus functions as a home agent (HA 200) for the mobile node. When it is connected to a non-contract provider of the mobile node, the agent apparatus functions as a foreign agent (FA 500) for the mobile node. That is, for example, an agent apparatus controlled and managed by an ABC provider functions as a home agent for a mobile node which contracts with the ABC provider, but functions as a foreign agent for a mobile node which does not contract with the ABC provider. In the description below, it is assumed that the HA 200 and the FA 500 have the same functions.

The HA 200 (FA 500) contains a router control unit 220 (520), a service control unit 210 (510), and a service control transaction 230 (530). In the following description, the configuration containing the router control unit 220 (520), the service control unit 210 (510), and the service control transaction 230 (530) can be referred to as an agent control unit.

The router control unit 220 (520) of the agent control unit (HA 200 (FA 500)) comprises a router communications control unit 221 for controlling the communications with the service control unit 210 (510), and a router control table group 222.

Furthermore, the router control table group 222 comprises a routing table 223 to be referred to when a path to a destination of a received packet is determined, a binding cache 224 which is a temporary routing table, and a service control filter 225 for passing only a specific packet.

The service control unit 210 (510) of the agent control unit (HA 200 (FA 500)) comprises a service communications control unit 211 for controlling the communications between the router control unit 220 (520) and the service control transaction 230 (530), and an anycast address binding table 212 set/referenced by the agent control unit (HA 200 (FA 500)) as a table for determining/managing the destination of a packet.

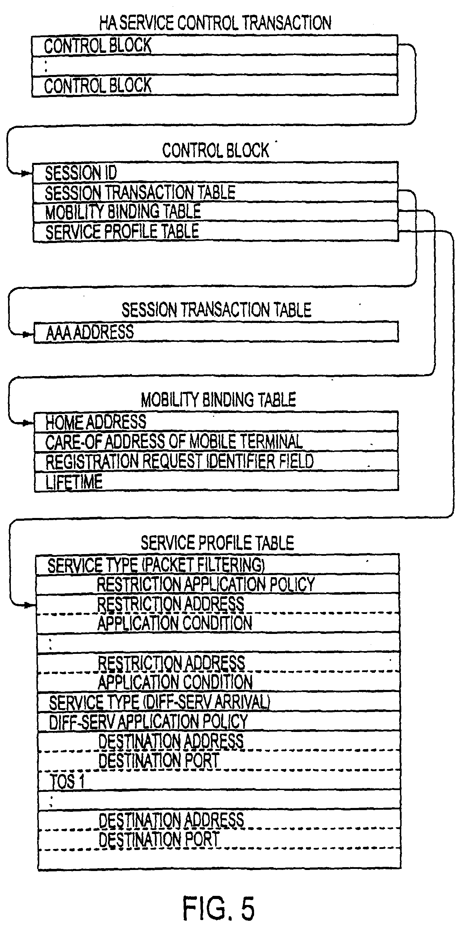

The service control transaction 230 is a control table. The FA 500 is different in format from the HA 200. FIG. 4 shows the format of the control table of the service control transaction 530 of the FA 500. FIG. 5 shows the format of the service control transaction 230 of the HA 200.

### 3.3 Service Control Transaction of FA 500

In FIG. 4, control blocks 1 through n are pointers pointing to the leading address in each control block. FIG. 4 shows the information relating to the control block 1 in a plurality of control blocks.

When the mobile node 600 is connected to the FA 500, the service control transaction has the following settings.

### (1) Control block 1

A 'session ID' is a unique value set when a registration request message is received from the mobile node 600. An NAI (network access identifier) provided from the mobile node 600 is set in the 'NAI of MN'. The leading address of a session transaction table is set in the 'session transaction table'. The leading address of a visitor list table is set in the 'visitor list table'. The visitor list table is used for management of a mobile node, when the mobile node is connected to a foreign agent. The leading address of a service profile table is set in the 'service profile table'.

### (2) Session transaction table

The association with other entities (containing FA, HA, AAA) is recorded in the 'session transaction table'. In this table, an AAA address (AAAF address) is set as the destination of an AMR (authentication request) message.

### (3) Visitor list table

A 'IP source address (home address)' stores the IP address of a mobile node assigned by the service provider 10. A link layer address (for example, a MAC address, etc.) used in transmitting a registration reply message to an MN (mobile node) or an SN (stationary node) is set in the 'link layer address of MN or SN'. An UDP source port is set in the 'UDP source port'. The address of a home agent to which the mobile node belongs is set in the 'home agent address'. The value of an identifier field of a registration request contained in a registration request message transmitted from the mobile node is set in the 'identifier field of a registration request'. The information about a valid term of the network information about a mobile node or a user, and of the service profile information is set in the 'lifetime'.

### (4) Service profile table

The type of service to be provided is set in the 'service type'. A service can be, for example, QoS (quality of service). A method for realizing the QoS can be, for example, Int-Serv or Diff-Serv. In the present embodiment, the Diff-Serv requiring a smaller overhead is adopted. A Diff-Serv application policy is set in the 'Diff-Serv application policy'. For example, a condition (policy) such as 'A packet storing data relating to the 'FTP (file transfer protocol) is transferred by priority, and a packet storing data relating to e-mail is transferred with lower priority' is set. At this time, a different policy can be set for each combination of a destination address and a port of a packet.

An address for a packet to be transmitted to a destination address 1 is set in the 'destination address 1'. The information specifying the port corresponding to the destination address 1 is set in the 'destination port 1'. The information about the TOS (type of service) of the IP transmitted to the destination address 1 is set in the 'TOS 1'. In the Diff-Serv, the priority transfer control is performed based on the TOS value.

### 3.4 Service control transaction of HA 200

The service control transaction 230 of the HA 200 is described by referring to FIG. 5. The explanation which was explained relating to the service control transaction 530 of the FA 500 is omitted here.

### (1) Control block 1

The leading address of the session transaction table is stored in the 'session transaction table'. The leading address of the mobility binding table is set in the 'mobility binding table'. The leading address of the service profile table is set in the 'service profile table'.

### (2) Session transaction table

The association with other entities is stored in the 'session transaction table'. In this example, the address of the AAAH 100 set as the destination of the HAA (HA registration reply) message transmitted from the HA 200 is set.

### (3) Mobility binding table

The home address of a mobile node is set in the 'home address'. The care-of address which is the IP address used in transferring a packet addressed to a mobile node when the mobile node is accommodated by the FA 500 is set in the 'care-of address of a mobile terminal'. Upon receipt of a packet to be transferred to the home address of the mobile node, the HA 200 transfers the received packet to the FA which accommodates the mobile node after capsuling the packet using the 'care-of address'. The value set in the item corresponding to the visitor list of the FA 500 shown in FIG. 4 is also set in the 'identifier field of registration request' and the 'lifetime'

### (4) Service profile table

The information specifying the type of service is set in the 'service type (packet filtering)'. In this example, the information specifying the packet filtering for rejecting a packet is set according to the specified restriction condition.

The type of restriction application policy, for example, the necessary information for limiting a packet containing harmful contents, access to a specified server address, access to a specified network domain, the use of a specified port, etc. is set in the 'restriction application policy', the 'restricted address', and the 'application condition', etc.

### 3.5 anycast address binding table (common in an FA and HA)

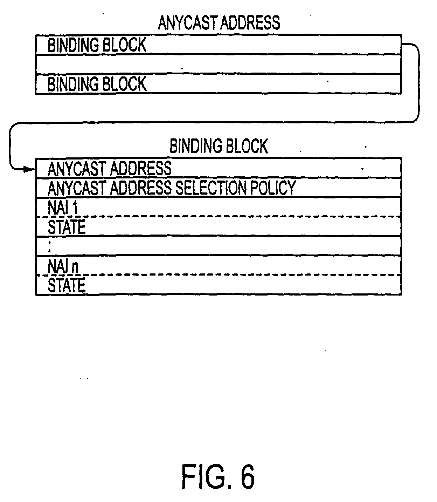

FIG. 6 shows an example of the anycast address binding table 212. The anycast address binding table 212 contains a plurality of binding blocks. In the following description, the leading address of the binding block table is set in the 'binding block 1', and the 'binding block 1 table' specified by the address is carefully checked.

The destination address is set in the 'anycast address'. The NAI corresponding to the terminal device preliminarily specified by the user who receives an anycast service is set in the 'NAI 1' through the 'NAI n'. The state of a corresponding NAI, for example, online, offline, fault, congestion, etc. is set in the 'state'. The procedure or condition for selecting one or more NAIs in the 'NAI 1' through the 'NAI n' is set in the 'anycast address selection policy'.

When the received destination address matches the 'anycast ADDRESS' registered in the anycast address binding table 212, the HA 200 or the FA 500 selects 1 or a plurality of 'NAIs' according to the 'anycast ADDRESS SELECTION POLICY', transfers the packet to the selected NAI.

### 3.6 Routing table (common between FA and HA)

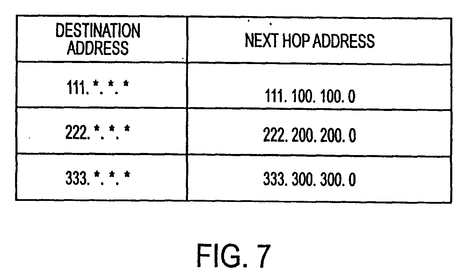

FIG. 7 shows an example of the routing table 223. According to the destination address stored in the header of the received packet, the 'DESTINATION ADDRESS' of the routing table 223 is referred to and searched, and the 'NEXT HOP ADDRESS' of a router, etc. to which the packet is to be transferred is obtained.

### 3.7 Binding cache (common in an FA and HA)

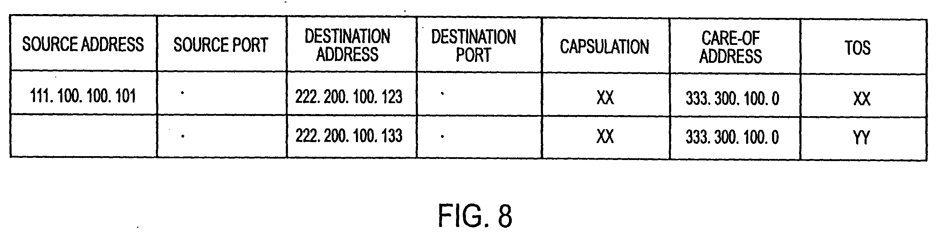

FIG. 8 shows an example of the binding cache 224. The binding cache 224 is used as a temporary routing table, and is referred to by priority by the routing table 223 shown in FIG. 7. It stores the information required to efficiently transfer a packet, that is, 'SOURCE ADDRESS', 'SOURCE PORT', 'DESTINATION ADDRESS', 'DESTINATION PORT', 'CAPSULATION', CARE-OF ADDRESS', and 'TOS' fields. In these fields, a source address, a source port, a destination address, a destination port, capsulation, a care-of address, and a TOS are set respectively.

### 3.8 Service control filter (common in an FA and HA)

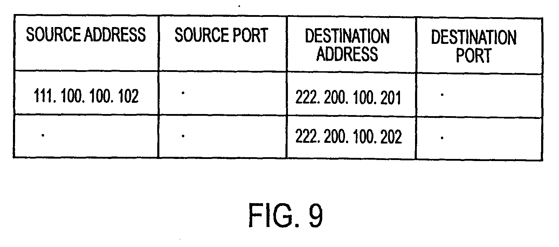

FIG. 9 shows an example of the service control filter 225. The service control filter 225 is a table for storing the information specifying a target packet (for example, a packet satisfying a specified restriction condition). The table contains fields in which 'SOURCE ADDRESS', 'SOURCE PORT', 'DESTINATION ADDRESS', and 'DESTINATION PORT' are set. The HA 200 and the FA 500 extract a specific packet from the received packets according to the condition set in the table.

### 3.9 Process flow in HA 200 and FA 500

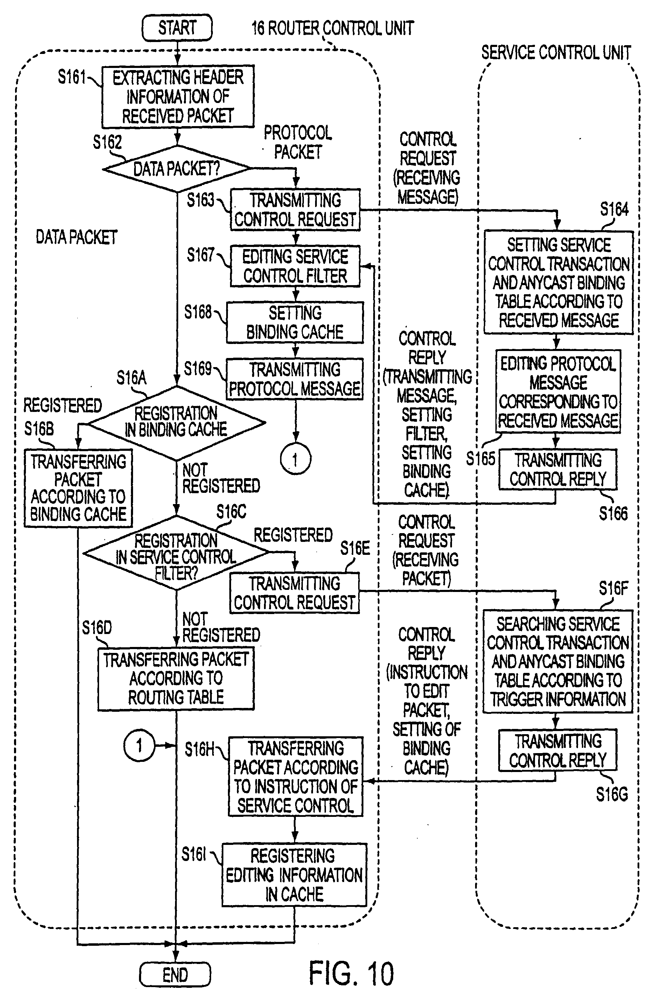

FIG. 10 is a flowchart of the operations of the HA 200 and the FA 500. In FIG. 10, the operations are performed after a packet is received by the HA 200 or the FA 500. The packet received by the HA 200 (FA 500) is processed in the cooperative operations of the router control unit 220 (520) and the service control unit 210 (510) shown in FIG. 3.

A router control unit analyzes the header information of the received packet, and determines whether the packet is a data packet or a protocol packet (steps S161 and S162).

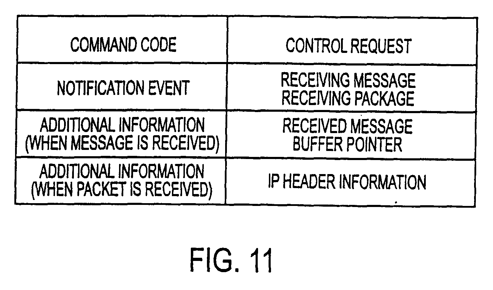

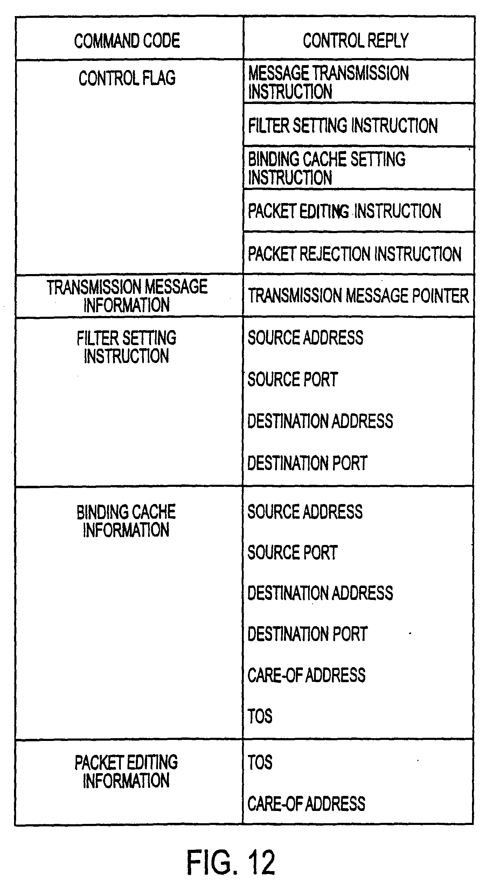

Before explaining the operations performed in step S163, a control request message and a control reply message are described by referring to FIGS. 11 and 12.

FIG. 11 shows an example of the control request message. This message contains a request to receive a message and a packet as a control request when the command code is 'NOTIFICATION EVENT'. When the command code is 'ADDITIONAL INFORMATION', the message as a control request contains a request to indicate the position of the received message in a buffer as a pointer, or a request to control the header information of the received packet. The above described command and control request are set in a control request message as a specific code, and are transmitted to the service communications control unit 211.

FIG. 12 shows an example of a control reply message. This message is classified into 5 types according to the settings of a command code.
(1) When a command code is 'CONTROL FLAG', the message as a control reply contains a message transmission instruction, a filter setting instruction, a binding cache setting instruction, a packet edition instruction, a packet rejection instruction, etc.
(2) When a command code is 'TRANSMISSION MESSAGE INFORMATION', the message as a control reply contains a pointer indicating the address of a transmission message.
(3) When a command code is 'FILTER SETTING INSTRUCTION', the message as a control reply contains a source address, a source port, a destination address, and a destination port.
(4) When a command code is 'Binding cache INFORMATION', the message as a control reply contains a source address, a source port, a destination address, a destination port, a care-of address, and a TOS (type of service).
(5) When a command code is 'PACKET EDITING INFORMATION', the message as a control reply contains a TOS value and a care-of address.

Back in FIG. 10, when a received packet is a protocol packet, the control request message shown in FIG. 11 is transmitted from the router communications control unit 221 to the service communications control unit 211 In step S163.

When the service communications control unit 211 receives a control request message, it analyzes the message, and sets the service control transaction 230 (530), and the anycast address binding table 212 of the service control unit 210 (510) (step S164). The information to be set according to the control request message is described later.

When there is a control reply message in response to the received control request message, or a consecutive message determined by a protocol (for example, an AAA protocol, etc.), a protocol message is edited using a transmission buffer (step S165). Then, the service control unit 210 (510) transmits to the router control unit 220 (520) a control reply message in which a message transmission request instruction and a transmission message buffer pointer are set (step 166).

Then, the router control unit 220 (520) receives a control reply message from the service control unit 210 (510). When a filter setting instruction is set as a command code of the control reply message, the router control unit 220 (520) registers specified IP header information in the service control filter 225 shown in FIG. 9 (step S167). When binding cache information is set as a command code of the control reply message, the router control unit 220 (520) registers specified address/port information, etc. in the binding cache 224 shown in FIG. 8 (step 168). When message transmission information is set as a command code of the control reply message, a protocol packet is transmitted by referring to the specified transmission message pointer, thereby terminating the process of the received packet (step 169).

On the other hand, when a data packet is received (data packet in step S162), the router control unit 220 (520) checks whether or not the extracted IP header information has been registered in the binding cache 224 shown in FIG. 8 (step 16A). If the extracted IP header information has been registered in the binding cache 224, the header of the received packet is edited according to the information registered in the binding cache 224, and the packet is transferred to the destination address specified by the binding cache 224, thereby terminating the process (step S16B).

On the other hand, if the IP header information has not been registered in the binding cache 224 in step S16A, the router control unit 220 (520) checks whether or not the IP header information has been registered in the service control filter 225 shown in FIG. 9 (step S16C). If the IP header information has not been registered in the service control filter 225 (FIG. 9) in step 16C, the router control unit 220 (520) refers to the routing table 223 shown in FIG. 7, and transfers the packet to the specified destination (a router, etc.) (step 16D). If the IP header information has been registered in the service control filter 225 (FIG. 9) in step 16C, the router control unit 220 (520) sets 'NOTIFICATION EVENT' as a command code, sets 'RECEPTION OF PACKET' as a control request message, generates a control request message in which 'ADDITIONAL INFORMATION' is set as a command code, and 'IP HEADER INFORMATION' is set as a control request message, and transmits the message to the service control unit 210 (510) (step 16E).

Upon receipt of a control request message relating to the reception of a packet, the service control unit 210 (510) searches the visitor list table (FIG. 4) of the service control transaction 530 of the FA 500, the mobility binding table (FIG. 5) of the HA 200, or the anycast address binding table 212 of the service control unit 210 (510) according to the 'IP HEADER INFORMATION' set in the message (step S16F). The information used in the search is the home address (the source address in FA 500, and the destination address in the HA 200) of the mobile node.

When the address information is specified by the search, the service control transaction 230 (530) compares the service profile table (refer to FIG. 4 for FA 500, and refer to FIG. 5 for HA 200) with the IP header information. If matching information has been registered, the editing information (for example, a TOS value upon which the priority transfer control information is based, etc.) about the packet specified in the service profile table is transmitted to the router control unit 220 (520) together with the packet edition instruction of the control reply message (step S16G).

When a packet editing instruction is set in the control reply message transmitted in step S16G, the router control unit 220 (520) edits the header of the received packet at the instruction, and transfers the message (step S16H). To efficiently transfer the subsequent packets, the header editing information of the packet and the information used in transferring the packet are registered in the binding cache 224 shown in FIG. 8, thereby terminating the process relating to received packets (step S16I).

### 4. AAAF according to the present invention

### 4.1 Outline of AAAF

The outline of the functions of the AAAF 400 is described below by referring to FIG. 2.

Upon receipt of a registration request message from the mobile node 600, the FA 500 analyzes the registration request message, and transmits to the AAAF 400 an AMR (authentication request) message containing the information stored in the registration request message. Upon receipt of the authentication request message, the AAAF 400 determines whether or not it is necessary to assign an appropriate HA 200, and whether or not it is necessary to delete (when an event such as the reception of a session completion message, the expiration of a session timer set in the service control transaction, etc. occurs) the service control information of the previous HA which has already been assigned, and transmits a necessary protocol message to the AAAH 100. In addition, the state of assigning a plurality of HAs 200 is managed. 'Assigning' is often used to refer to 'specifying'. For example, 'assigning an HA' refers to specifying an agent among a plurality of agents.

### 4.2 Configuration of AAAF

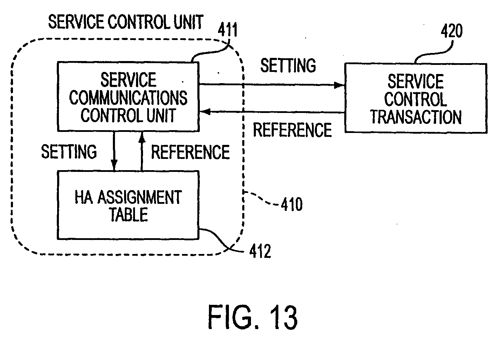

FIG. 13 shows an example of the configuration of and the operation of the AAAF 400 shown in FIG. 2. The AAAF 400 comprises a service control unit 410 and a service control transaction 420. The entity configuring the service control unit 410 and the service control transaction 420 can be hereinafter referred to as a service control unit.
The service control unit 410 comprises a service communications control unit 411 for controlling the communications with the service control transaction 420, and a HA assignment table 412. Then, the service control unit 410 sets, searches, updates, and deletes the service control transaction 420 and the HA assignment table 412 according to the received protocol message. The service control unit 410 has the function of operating according to the DIAMETER protocol, and also has the function of performing a common protocol process using a message reception buffer and a message transmission buffer.

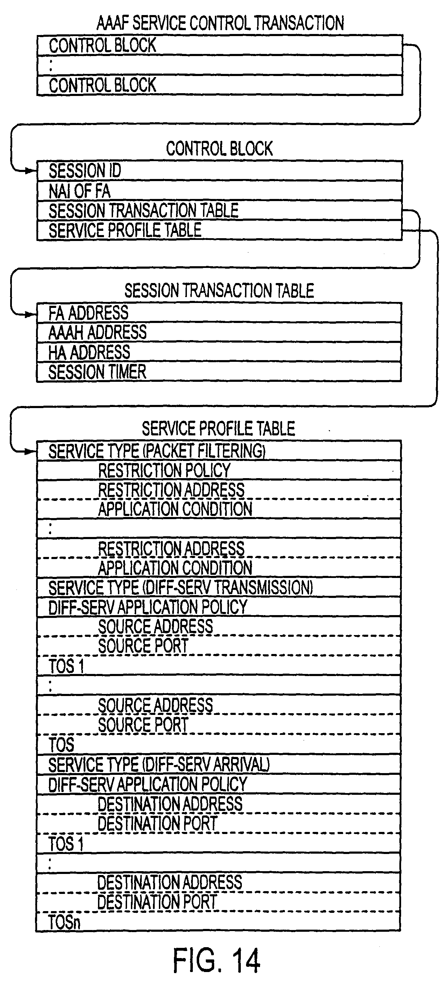

The service control transaction 420 is a control block. FIG. 14 shows an example of the format of a control block. In the service control transactions 420 of the AAAF 400, the descriptions also made for the service control transaction 230 of the HA 200 are omitted here.

### (1) Control block 1

A NAI (network access Identifier) of the FA 500 (FIG. 2) is set in the 'NAI OF FA'.

### (2) Session transaction table

The network address of the FA 500 (FIG. 2) is set in 'FA ADDRESS'. The network address of the AAAH 100 (FIG. 2) is set in 'AAAH ADDRESS'. The network address of the HA 200 (FIG. 2) is set in 'HA ADDRESS'. A timer value is set in 'SESSION TIMER'. If the AAAF 400 assigns the HA 200 when the timer value in the 'SESSION TIMER' reaches the maximum value, then the service control information about the HA assigned to the mobile node relating to the session is deleted.

### (3) Service profile table

The information for application of Diff-Serv is set for a packet to be transferred In 'SERVICE TYPE (Diff-Serv TRANSMISSION)' through 'TOSn'. The set information is basically the same as the contents of 'SERVICE TYPE (Diff-Serv ARRIVAL)' through 'TOSn' of the service control transaction 230 of the HA 200. However, both 'Diff-Serv ARRIVAL' and 'Diff-Serv TRANSMISSION' can be set.

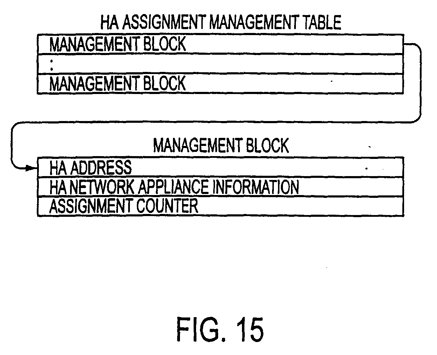

Next, the format of the service control transaction 420 shown in FIG. 13 is described below by referring to FIG. 15. In FIG. 15, management blocks 1 through n are used when the AAAF 400 (or the AAAH 100) assigns the HA 200. Each of the management blocks 1 through n is a pointer pointing to the leading address of each of the management blocks 1 through n, and indicates the leading address of each of the management blocks 1 through n. In FIG. 15, in a plurality of management blocks, the management block 1 is described below.

When the HA 200 is assigned by the AAAF 400, the following settings are made. That is, the address of the management block 1 is set In 'MANAGEMENT BLOCK 1' as a pointer. The address of the HA 200 is set in 'HA ADDRESS'. In 'HA NETWORK APPLIANCE INFORMATION', for example, when the performance of each network appliance installed in each of a plurality of HAs is different from the performance of each other, the class information about the network appliance can be set for each HA.

### 4.3 Process flow of AAAF

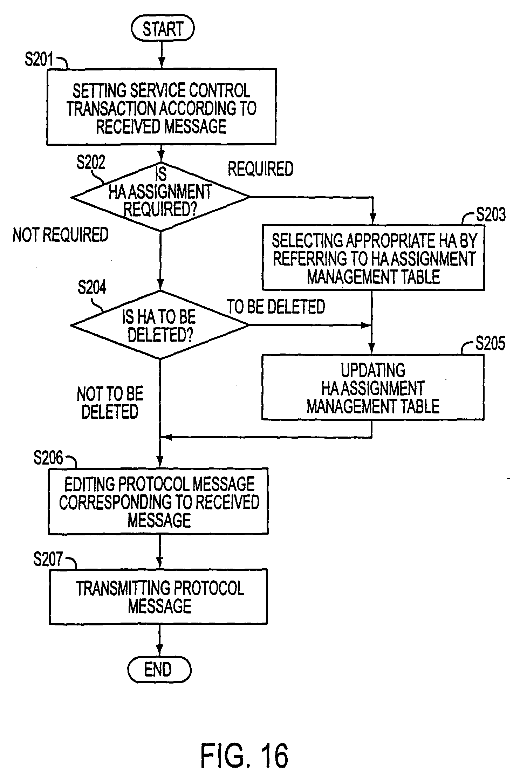

The process flow of the AAAF 400 is described below by referring to FIG. 16. Since the process about relaying a message (for example, the process of receiving an AMR message from the FA 500, and transferring the message to the AAAH 100, etc.) has already been explained, those descriptions are omitted here. The other processes are described below.

First, in step S201, when the AAAF 400 receives a packet, it extracts the IP header information (FIG. 55) from the packet, and sets the service control transaction 420 according to the message stored in the packet.

When the received message is an AMA (authentication reply) message, and the value of the home address of the message is '0 (zero)' or 'FFFF (hexadecimal)' (they are hereinafter described as the home address of '0'), the AAAH or the AAAF dynamically assigns the HA. Which assigns the HA, the AAAH or the AAAF, depends on the contract between providers, the policy of a contract provider, or the contract between a subscriber and a provider.

In step S202, the value of the home address of the received AMA message is referred to, it is determined whether or not it is necessary to assign an HA. When the value of the home address is 0 (zero), control is passed to step S203 (an HA is to be assigned) to assign an HA. Otherwise, control is passed to step S204 (an HA is not to be assigned).

In step S203, the AAAF 400 refers to the HA assignment table 412 (FIG. 15), and selects an appropriate HA 200. A practical procedure of selecting an HA 200 is described later. Then, in step S205, an assignment counter (FIG. 15) of the HA 200 selected according to the HA assignment table 412 is added.

In step S204, when the AAAF 400 assigns the HA 200, it is determined whether or not it is necessary to delete the service control information about the HA 200 assigned to the mobile node corresponding to the session. When a session completion message is received in this process, or when an internal event associated with the expiration of the session timer set in the service control transaction 420 occurs, service control information is deleted.

In step S206, a protocol message (an AMA message, etc.) corresponding to the received message is edited. In step S207, the protocol message is transmitted.

A practical example of the above described steps S201 through S207 is described below in (1) through (3).
(1) Characteristics of the process flow when a request to assign an HA 200 is issued.
   S203: The AAAF 400 refers to the HA assignment table 412, and selects an appropriate HA 200.
   S205: An assignment counter (FIG. 15) of the HA 200 selected according to the HA assignment table 412 is incremented.
   S206, S207: The processes described in (a) and (b) below are performed.
      (a) When the message received from the AAAH 100 is an AMA message, an HAR message is generated according to the received message, and the service profile information corresponding to the mobile node 600 is added to the HAR message. Then, the HAR message is transmitted to the HA 200.
      (b) When the message received from the HA 200 is an HAA message, an AMA message is generated according to the received message, and the service profile information corresponding to the mobile node 600 is added to the AMA message. Then, the AMA message is transmitted to the FA 500.
(2) Process performed when a request to delete service control information about the HA 200 is issued
   S204: When a session completion message is received, or when an internal event associated with the expiration of a session timer set in the service control transaction 420 occurs, the service control information about the HA 200 assigned to the mobile node corresponding to the session is deleted if the AAAF 400 has assigned the HA 200.
   S205: An assignment counter of the HA 200 in the HA assignment table 412 is decremented.
   S206: A session release message is edited.
   S207: A session release message is transmitted to the FA 500.
(3) Process performed when the AAAF 400 does not assign the HA 200
   S201: Upon receipt of a packet, the service control unit 410 extracts the IP header information (FIG. 55) from the packet, and sets the service control transaction 420 according to the received message.
   S202, S204: When the AAAF 400 does not assign the HA 200, the processes relating to the steps are not performed.
   S206: A protocol message corresponding to the received message is edited.
   S207: The edited protocol message is transmitted to the entity of the function to be transmitted.

### 5. AAAH according to the present invention

### 5.1 Outline of AAAH

The outline of the function of the AAAH 100 is described by referring to FIG. 2.

A service control unit 110 comprises the service control transaction 120, the HA assignment management table 112, the service control database 300, and an anycast address management table 113. It sets, searches, updates, and deletes the service control transaction 120, the HA assignment management table 112, the service control database 300, and the anycast address management table 113 according to the received protocol message. The service control unit 110 has the function of operating according to the DIAMETER protocol, and also has the function of performing a common protocol process using a message reception buffer and a message transmission buffer.

### 5.2 Configuration of AAAH

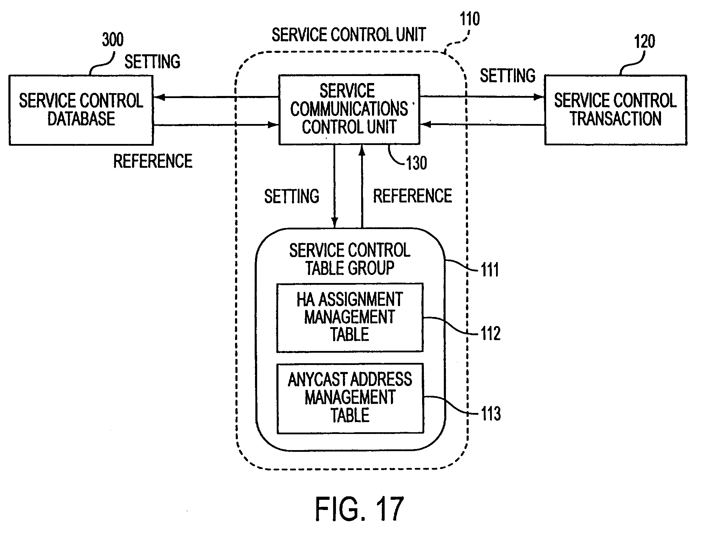

FIG. 17 shows an example of the block diagram showing the configuration, the function, and the operations of the AAAH 100. The AAAH 100 comprises the service control unit 110, and the service control transaction 120. Hereinafter, an entity forming the service control unit 110 and the service control transaction 120 can be referred to as a service control unit.

The service control unit 110 comprises a service communications control unit 130 for controlling the communications with the service control transaction 120, and a service control table group 111. The service control table group 111 comprises an HA assignment management table 112 and an anycast address management table 113. The service control unit 110 sets, searches, updates, and deletes the service control transaction 120 and the service control table group 111 according to the received protocol message. In addition, the service control unit 110 has the function of operating according to the DIAMETER protocol, and the function of performing a common protocol process using a message reception buffer and a message transmission buffer.

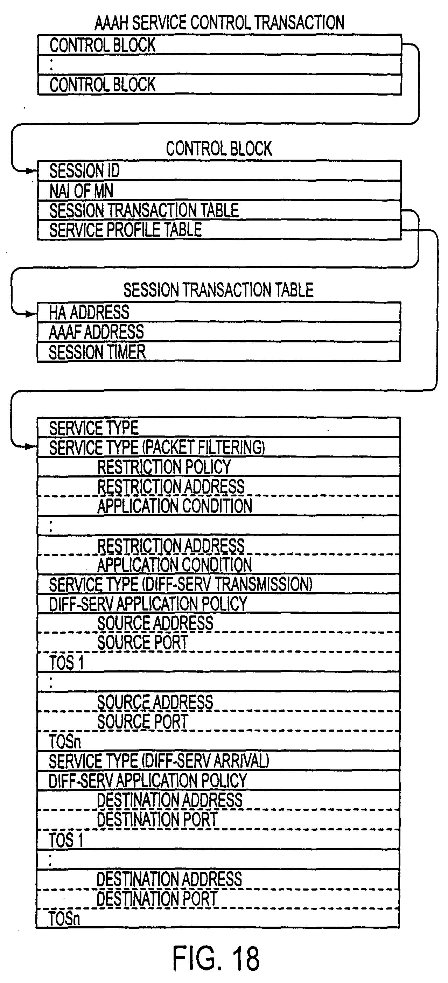

The service control transaction 120 is a control block. FIG. 18 shows the format of the control block. In the description of the service control transaction 120 of the AAAH 100, the descriptions also made for the service control transaction 420 of the AAAF 400 are omitted here.

### (1) Control block 1

The NAI (network access identifier) of a mobile communications is set in 'NAI of MN'.

### (2) Session transaction table

The address of the HA 200 (FIG. 2) is set in 'HA ADDRESS'. The address of the AAAF 400 (FIG. 2) is set in 'AAAF ADDRESS'.

### (3) Service profile table

The type of ANYCAST service is set in 'SERVICE TYPE (ANYCAST)'.

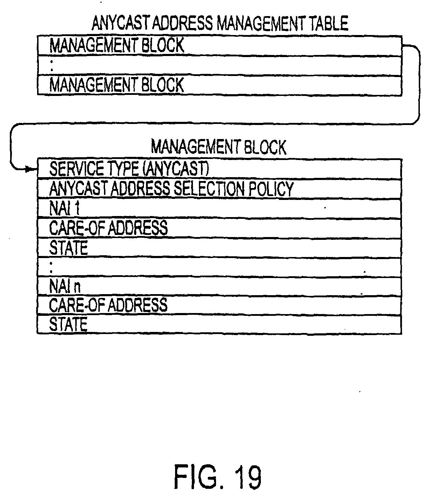

FIG. 19 shows an example of the anycast address management table 113. This table comprises managing blocks 1 through n in an anycast address unit. Each management block includes, for example, 'SERVICE TYPE (anycast)', 'anycast ADDRESS SELECTION POLICY', one or more 'NAI USING ANYCAST ADDRESS', 'CARE-OF ADDRESS', and 'STATE' corresponding to the 'NAI'. Online, offline, fault, congestion, etc. can be set in 'STATE'.

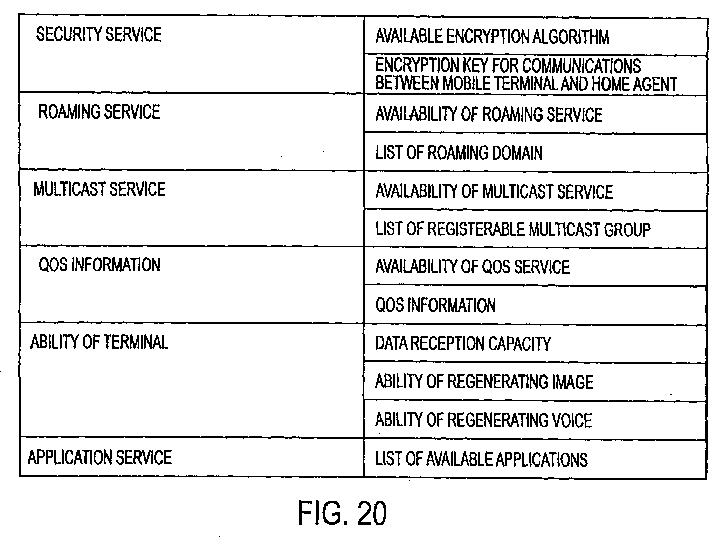

FIG. 20 shows an example of the service control database 300 shown in FIG. 17. The service control database 300 stores, for example, the information described below for each subscriber. In this example, the service control database 300 is designed using the NAI (network access identifier) identifying a subscriber as a key. It is possible to provide various services containing security, roaming, QoS, multicast, etc. as value-added services. According to the embodiment, the Diff-Serv, ANYCAST, packet-filtering are used as examples of value-added services.

### (1) Security service

The information specifying the algorithm of the encryption to be used, a communications encryption key used between a mobile node and a home agent, etc. are stored. For example, an MD5 (message digest 5), a DES (data encryption standard), etc. are provided as encryption algorithms.

### (2) Roaming service

The information indicating whether or not a roaming service is to be provided, a list of domains (foreign network) where roaming is permitted, etc. are stored. According to the information, a roaming service is provided for a specific user.

### (3) Multicast service

The information indicating whether or not a multicast service is to be provided, and a list of multicast groups which can be registered are stored. According to the information, a multicast service such as a point-to-multipoint connection, etc. is provided.

### (4) QoS service

The information indicating whether or not QoS service is to be provided, QoS information, etc. are stored. According to the information, services such as the guarantee of the QoS in transferring a packet, the control of priority transfer of a packet, etc. can be provided.

### (5) Terminal ability

Various devices (including a mobile node) are connected to an IP network, and the devices are different in ability. Therefore, for example, the information about the maximum capacity of received data, the ability of regenerating an image (moving picture and static image), the ability of regenerating voice data, etc. is stored in 'TERMINAL ABILITY'. According to the information, services depending on the ability of each terminal device can be provided.

### (6) Application service

A list of available applications is stored. It is preliminarily determined whether or not each of the listed applications is available depending on, for example, the ability of a terminal, an available bandwidth, etc. According to the information, the execution of an unavailable application can be avoided, and a cooperative process with a filtering operation, etc. as an application can be performed based on the contents of a packet. An example of an unavailable application would be if a user terminal does not have a function to decode a video stream, then the video application is an "unavailable application" for the terminal.

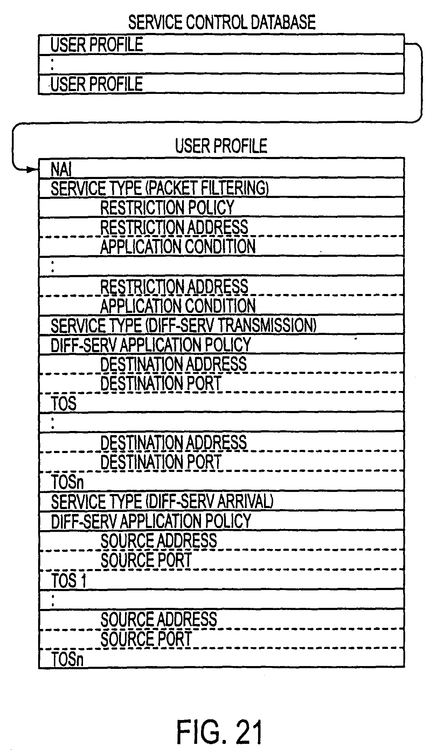

FIG. 21 shows a practical example of the service control database 300. In FIG. 21, each of the user profiles 1 through n is a pointer pointing to the leading address of each user profile. The NAI (network access identifier) of a user is set at the head of each user profile. Since the subsequent fields are similar to the data in the service profile table of the AAAF 400 shown in FIG. 13, or the AAAH 100 shown in FIG. 18, the descriptions are omitted here.

### 5.3 Process flow of AAAH

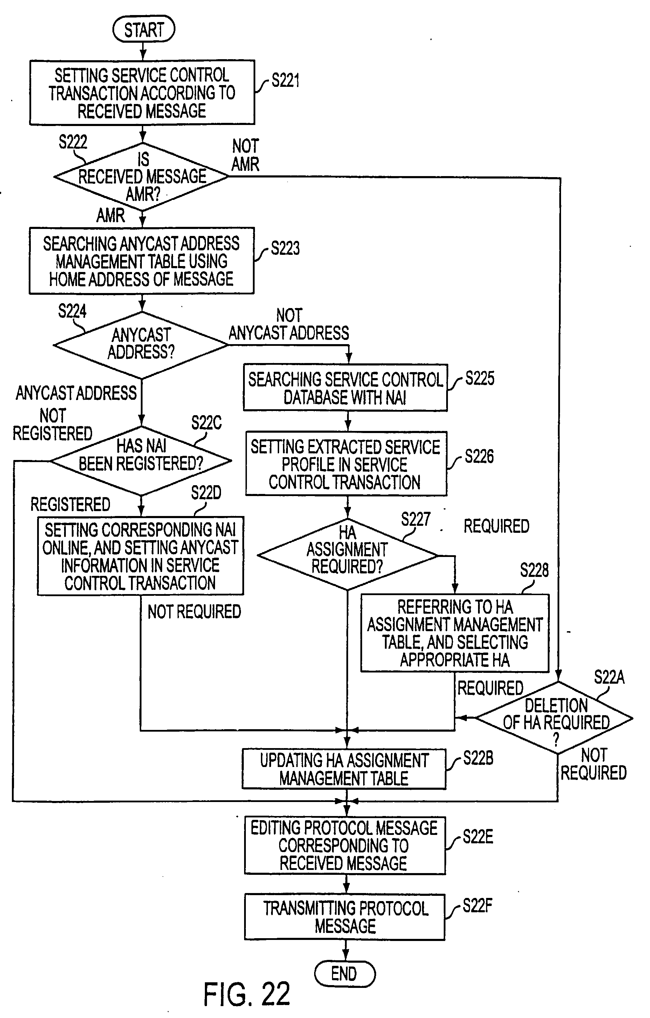

FIG. 22 is a flowchart of the operations of the AAAH 100 which received a packet. Upon receipt of a packet, the AAAH 100 extracts IP header information (FIG. 55) from the packet, and sets the service control transaction 120 shown in FIG. 17 according to the message stored in the packet in step S221. Then, in step S222, it is determined whether or not the received message is an AMR message. If an AMR message is received, the processes in steps S223 through S22F are performed.

Described below are practical examples (1) through (6) of the operations in steps S223 through S22F. In the following explanation, it is assumed that the AAAH 100 receives an AMR message from the AAAF 400. However, the AAAH 100 can receive an AMR message from the HA 200. When the AAAH 100 receives an AMR message from the HA 200, it returns an HAR message to the HA 200.

### (1) Process performed when a received message is an AMR (authentication request) message, and the home address in the message is not an anycast address

Upon receipt of an AMR message from the AAAF 400 or the HA 200, the AAAH 100 extracts the home address of the mobile node from the registration request message capsuled in the AMR message, and searches the anycast address management table 113 shown in FIG. 19 using the home address as a key (step S223). In this example, it is assumed that the extracted home address has not been registered in the anycast address management table 113 (step S224: non anycast address), and control is passed to step S225.

Then, the user profiles 1 through n (FIG. 21) of the service control database 300 shown in FIG. 17 are searched using the NAI (network access identifier) contained in a received message as a key (step S225). In the searching process, service profiles corresponding to the NAI are read, and set in the service control transaction 120 shown in FIG. 18 (step S226).

In step S227, it is checked whether or not it is necessary for the AAAH 100 to assign an HA. In this case, it is confirmed whether or not an HA address is specified in the received message. That is, if the AAAH 100 has already assigned an HA, or if the AAAF 400 assigns an HA, then it is not necessary for the AAAH 100 to assign an HA. That is, when the value of the home address of a received message is 0 (zero), or the AAAF 400 does not assign the HA 200, the AAAH 100 assigns the HA 200 in step S228.

Furthermore, the assignment counter of the HA assignment management table (FIG. 15) corresponding to a specified HA address is incremented (step S22B). Then, the protocol message corresponding to the received message is edited, and the edited message is transmitted to a transmission target entity (AAAF 400 or HA 200), thereby terminating the process on the received message (steps S22E, S22F). That is, when an AMR message is received from the AAAF 400, the AMA message is returned to the AAAF 400. On the other hand, when an AMR message is received from the HA 200, an HAR message is returned with the service control information added thereto. In this case, the HA 200 returns a location registration reply message to the mobile node.

Described below is the procedure of specifying the HA 200.

### (a) When the AAAH 100 specifies the HA 200

Upon receipt of an AMR (authentication request) message from the AAAF 400, the AAAH 100 generates an HAR message according to the received message. Then, the AAAH 100 adds the service profile information corresponding to the mobile node 600 to the HAR message, and transmits it to the HA 200.

### (b) When the AAAF 400 specifies the HA 200

Upon receipt of an AMR message from the AAAF 400, the AAAH 100 generates an AMA message according to the received message. Then, the AAAH 100 adds the service profile information corresponding to the mobile node 600 to the AMA message, and transmits it to the AAAF 400.

### (2) Process performed when a received message is an AMR message, and a home address is not set in the message

In this case, the procedure of the process is basically the same as (1) above. However, since no home addresses are specified in the AMR message (0 (zero) is set as the HA address of the received message), the HA assignment management table 112 shown in FIG. 15 is referred to, and an appropriate HA is selected in step S228. Then, in step S22B, an assignment counter corresponding to the address of the selected HA 200 is incremented.

### (3) Process performed when a received message is an AMR message, and the home address in the message is an anycast address

As in (1) or (2) above, the anycast address management table 113 shown in FIG. 19 is searched. However, in this case, it is assumed that the extracted home address has been registered in the anycast address management table 113 (step S224: anycast address), and control is passed to step S22C.

In step S22C, the management blocks 1 through n of the anycast address management table 113 are searched using the 'NAI' stored in the received message as a key. Assuming that the NAI has been registered in the anycast address management table 113, 'ONLINE' is set as the state of the NAI, and the anycast information is set at the head of the service profile table of the service control transaction 120 shown in FIG. 18 (step S22D).

Then in step S22B, the assignment counter of the HA assignment management table 112 (FIG. 15) corresponding to the address of the specified HA 200 is added. The subsequent operations (steps S22E and S22F) are basically the same as those described in (1) and (2) above.

### (4) Process performed when an AMR message in which an anycast address is set is received from a mobile node for which an anycast service is not provided

In this case, as in (3) above, the anycast address management table 113 is searched and control is passed to step S22C. However, when a registration request is received from a mobile node for which an anycast service is not provided, the NAI stored in the received message has not been registered in the management block of the anycast address management table 113. In this case, the AAAH 100 assumes that the registration request is an erroneous request or an illegal request, and generates an AMA (authentication reply) message in which a corresponding error code is set in step S22E. Then, in step S22F, the AMA message is transmitted to the target entity (for example, the AAAF 400).

### (5) Process performed when a session completion message is received, or when a session timer indicates the maximum value

When a message indicating the completion of a session is received, or when an internal event associated with the expiration of the session timer set in the service control transaction 120 shown in FIG. 18 is detected, control is passed to step S22A, and the service control information of the HA 200 assigned to the mobile node corresponding to the session is deleted. Then, in step S22B, the assignment counter in the HA assignment management table 112 shown in FIG. 15 is decremented. Then, the AAAH 100 edits the protocol message corresponding to the received message, and transmits the edited protocol message to a target entity (steps S22E and S22F).

### (6) Process performed when a message other than the messages described in (1) through (5) above are received

In this case, a received message is not an AMR message. Therefore, control is passed to step S22A. Since the received message is not a message indicating the end of a session, it is determined in step S22A that the service control information about the HA 200 need not be deleted. Then, a protocol message corresponding to the received message is generated, and the protocol message is transmitted to a target entity (steps S22E and S22F).

### 6. Correspondent node according to the present invention

### 6.1 Outline of correspondent node

A correspondent node (CN) 900 supports the MIP function extended by the present invention. The CN 900 can be considered to be a subset of the FA 500 or the HA 200 having the function of processing an MIP protocol and the function of controlling a binding cache.

### 6.2 Configuration of correspondent node 900

The correspondent node 900 (CN 900) is a mobile node for supporting the Mobile IP (MIP) function extended by the present invention. In FIG.2, the CN 900 is connected to an IP network through the correspondent node 90 using an MIP.

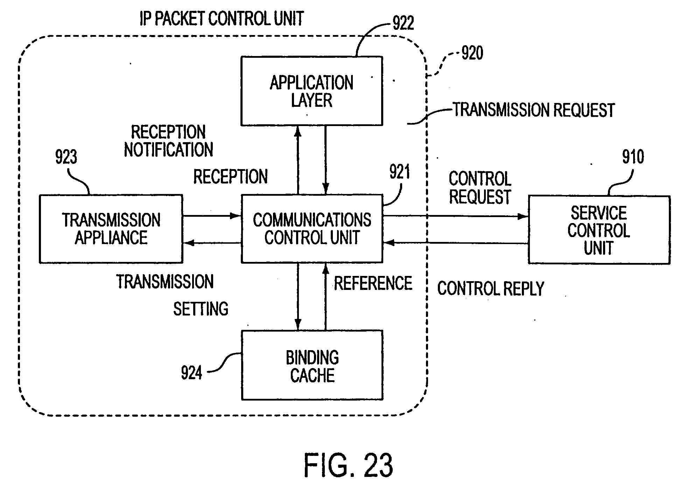

FIG. 23 is a block diagram showing the function of the CN 900. The CN 900 contains a service control unit 910 and an IP packet control unit 920. The IP packet control unit 920 contains a binding cache 924 for temporarily holding packet edition information, a transmission appliance 923 such as a LAN card, etc. applied to a work station, an application layer 922, and a communications control unit 921 for controlling the communications with the service control unit 910. The service control unit 910 has the function of operating according to the MIP protocol, and the function of performing a common protocol process using a message reception buffer and a message transmission buffer.

### 6.3 Process flow of CN 900

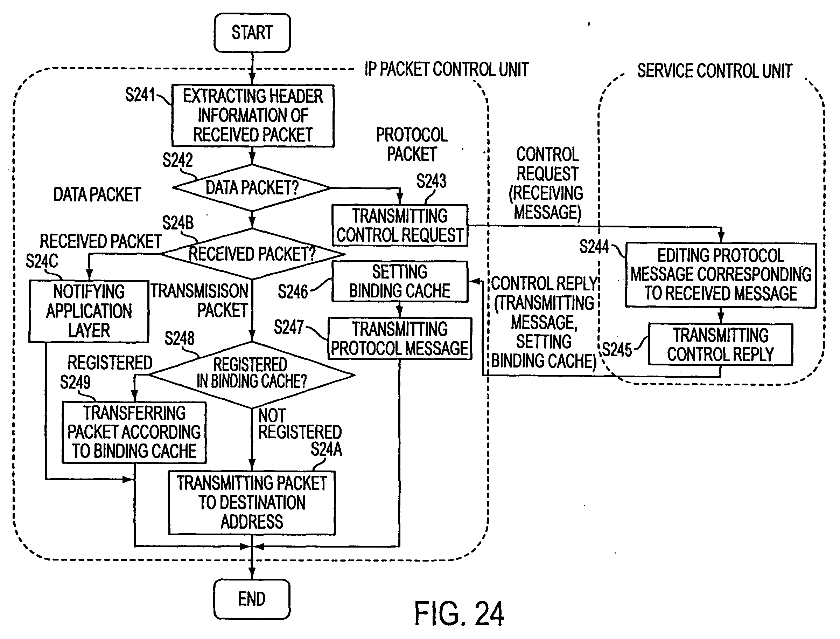

FIG. 24 is a flowchart showing the operations of the CN 900 which has received a packet.

Upon receipt of a packet from the transmission appliance 923, or a request to transmit a packet from the application layer 922 of the CN 900, the IP packet control unit 920 extracts the IP header information shown In FIG. 55 and the UDP header information shown in FIG. 56 from the received packet (step S241). Then, according to the destination address of the extracted IP header information and the port number in the UDP header information, it is determined whether the received packet is a data packet or a protocol packet (step S242).

The processes in and subsequent to step S242 are described below by referring to practical examples (1) through (4).
(1) Process performed when a received packet is a protocol packet (S243 through S247).
   The communications control unit 921 generates a control request message (FIG. 11) in which a message reception notification code is set according to the contents of the message stored in the received protocol packet, and transmits the control request message to the service control unit 910 (step S243).
   The service control unit 910 uses a transmission buffer, and edits a protocol message when there is a reply message in response to the received control request message, or a continuation message determined by a protocol (step S244). Then, the service control unit 910 transmits to the IP packet control unit 920 a message transmission request instruction, and a control reply message (FIG. 12) in which a pointer of a transmission message buffer is set. In addition, when the received control request message is a binding update message containing packet edition information, the service control unit 910 extracts binding cache information to be set in the binding cache 924 (step S245).
   The IP packet control unit 920 receives a control reply message from the service control unit 910. When the control reply message contains an instruction to set the binding cache 924, the specified binding cache information is registered in the binding cache 924 (step S246). When an instruction to transmit a message is set as a control reply message, the specified message is transmitted as a protocol packet (step S247).
(2) Process performed when a received packet is a transmission data packet, and the address of the packet has been registered in a binding cache (S24B through S249)
   The communications control unit 921 checks the received packet whether it is a transmission packet to be transmitted from the CN 900 to another device, or it is a received packet transmitted from another device to the CN 900 (step S24B). In this case, for example, if the source address of the packet is CN 900, then it is assumed to be a transmission packet. If it is other than CN 900, it is assumed to be a received packet.
   When the packet received by the communications control unit 921 is a transmission packet, the IP packet control unit 920 checks whether or not the IP header information extracted from the packet has been registered in the binding cache 924 (step S248). If the IP header information has been registered in the binding cache 924, the header of the packet is edited according to the information registered in the binding cache 924. Practically, the transmission packet is capsuled using the destination address specified in the binding cache 924, and is transferred to the address (step S249).
(3) Process performed when a received packet is a transmission data packet, and the address of the packet has not been registered in the binding cache (S248 through S24A) If the destination address of the received packet has not been registered in the binding cache 924, the IP packet edited by the application layer 922 is transmitted as is (steps S248 and S24A).
(4) Process performed when a packet is a received data packet (S24B and S24C)
   When the packet received by the communications control unit 921 is a data packet addressed to the CN 900 (step S24B: received packet), the application layer 922 is notified of the reception of a data packet in step S24C.

### 7. Providing Diff-Serv

The Diff-Serv is a service of performing priority transfer control on a packet based on the TOS value of the header of each IP packet. Therefore, it is necessary for the HA 200 and the FA 500 to hold the information about the IP packet priority transfer order from each mobile node.

In the system according to the present invention, each user can be provided with a packet priority transfer service in the priority transfer order assigned to the user when he or she makes a contract with a provider. Practically, each user is assigned an NAI by a provider when a contract is made. At this time, the provider sets the TOS in the user profile of the service control database 300 as a packet priority transfer order. As shown in FIG. 21, the user profile can be set individually for transmission packets and received packets. An address and a port can be combined in setting the profile. According to the embodiment, 'assured forwarding' is adopted as a method of providing Diff-Serv. In addition, a user of the mobile node 600 does not specify an address or a port, but is assumed to specify unconditional application of class 1 (highest priority class) to all transmission/received packets.

### 8. Process sequence of the system according to the present invention

The configuration and operation of each of the AAA, HA, FA, and CN according to the present invention are described above. Described below in detail is the process sequence in an end-to-end (for example, a mobile node and the HA 200) process.

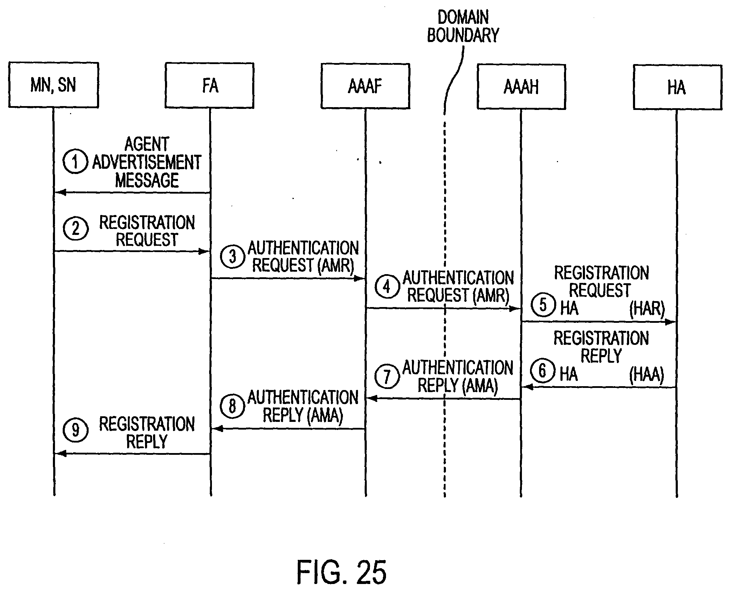

FIG. 25 shows the registration sequence in the initial step where the AAAH 100 assigns the HA 200 according to the registration request message from a mobile node (MN, SN).
1. Upon receipt of an agent advertisement message (mobile IP message) transmitted from the FA 500, the mobile node 600 recognizes that it is located in the communications area of the FA 500.
2. When the mobile node 600 moves outside the communications area of the HA 200 managed by a contract provider of the mobile node, it issues a registration request message from the current location to the FA 500 of the provider within the communications area.
3. When the FA 500 receives the registration request message from the mobile node 600, it obtains a unique session ID, and extracts necessary information (the home address of the mobile node 600, the source link layer address, the UDP source port, the home agent address, the identifier field of a registration request, and a lifetime) from the registration request message. According to the obtained session ID and the information extracted from the registration request message, the FA 500 generates the service control transaction 530, etc. shown in FIG. 2 or 4. In addition, according to an AAA protocol, the FA 500 transmits the AMR (authentication request) message obtained by capsuling the registration request message to the AAAF 400.
4. Upon receipt of an AMR message from the FA 500, the AAAF 400 extracts necessary information (a session ID, a care-of address) from the AMR message, and generates service control information containing the service control transaction 420, etc. shown in FIG. 2 or 14. Furthermore, the AAAF 400 obtains an address corresponding to the user NAI contained in the received AMR message, and determines the AAAH 100 responsible for authentication of the mobile node 600. The AAAF 400 then transmits the AMR message to the AAAH 100.
5. Upon receipt of the AMR message, the AAAH 100 performs an authenticating process on the mobile node 600 according to the authentication procedure of the AMR message. When the mobile node 600 can be correctly authenticated, the subsequent processes continue. However, if the mobile node 600 cannot be authenticated, then an AMA (authentication reply) message is returned to the AAAF 400 with an appropriate reason code set in the message.

### 8.1 Dynamic assignment of an HA

When the value of the address of the home agent in the registration request message capsuled in the AMR (authentication request) message is 0 (zero), the AAAH 100 or the AAAF 400 dynamically assigns the HA 200. Whether the AAAH 100 or the AAAF 400 assigns the HA, depends on the contract between providers, the policy of the providers, or a contract with a user.

The HA 200 can be a plurality of HAs in the same provider in order to distribute the traffic load. In this case, upon receipt of a request to assign the HA 200, the AAAF 400 or the AAAH 100 searches the HA assignment table 412 or 112, selects an HA having the smallest assignment number, and increments the corresponding registration number in the HA assignment table 412 (112). When a user directly specifies an HA, the registration number of the corresponding HA assignment table 412 or 112 is incremented. On the other hand, when an explicit session release request (for example, a registration request in which the expiration value of the timer is set to 0 (zero)) is received, when a session release request is received, or when the session of the AAA expires, the registration number of the HA assignment table 412 or 112 is decremented.

When there is a difference in performance between network appliances provided in an HA, network appliance information (for example, the class information, etc. about network appliances, etc.) is set in the HA assignment table 412 or 112. By linking the information to the service type of an authenticated user or the TOS value of the Diff-Serv extracted from the service profile table shown in FIG. 5 or 14, a specific user can be assigned by priority to the HA 200 having a high-performance or high-function router. In addition, the load can be appropriately distributed in consideration of the class information about each appliance unit of a plurality of HAs. For example, the load can be distributed depending on the rate of the ability of an appliance unit.

### 8.2 In a case where an AAAH specifies an HA

The AAAH 100 searches the service control database 300 shown in FIG. 2 or 21 using the NAI of the mobile node 600 stored in the authentication request (AMR) message received from the AAAF 400 as a key, and extracts a corresponding user profile.

Then, it generates a service control transaction 120 (FIG. 18) from the session ID extracted from the authentication request (AMR) message, the source address in the AMR message, and the user profile obtained from the service control database 300, and specifies the HA 200 according to the above described procedure.

The AAAH 100 retrieves only necessary information for the HA 200 from the above described user profile. For example, since the HA 200 does not require the information about a transmission packet from a mobile node in the information defined as a user profile, the information is not retrieved. Then, the AAAH 100 sets the information retrieved from the user profile in the AVP of the DIAMETER protocol, and transmits the HAR (HA registration request) message containing the AVP to the HA 200. The AVP of the DIAMETER protocol is shown in FIG. 67. The information retrieved from the user profile is stored in, for example, the 'DATA' of the AVP.

Upon receipt of a HAR message, the HA 200 extracts necessary information (a session ID, an HAR source address, a care-of address, an identifier field of a registration request, a lifetime, a service profile) from the message based on which service control transaction 230 shown in FIG. 5 is generated as control information. Then, the destination address (home address) is set in the service control filter 225 of a router control unit 220 shown in FIG. 3 or 9.
6. The HA 200 returns an HA registration reply message (HAA) to the AAAH 100.
7. Upon receipt of the HAA message, the AAAH 100 searches for the service control transaction 120 shown in FIG. 18 using the session ID set in the message as a key, and retrieves only the necessary information for the FA 500. Then, an authentication request (AMA) message, in which the retrieved information is set in the 'AVP' of the DIAMETER protocol, is generated. The AMA message is transmitted to the authentication request address (AAAF address) registered in the session transaction table shown in FIG. 18.
   Upon receipt of the AMA message, the AAAF 400 searches the session transaction shown in FIG. 14 using the session ID set in the message as a key, and transfers the AMA message to the obtained FA address. When there is an agreement between AAAs (for example, between an AAAF and an AAAH), it is possible to change a priority transfer order based on the TOS value of a service control transaction.

### 8.3 In a case where an AAAF specifies an HA

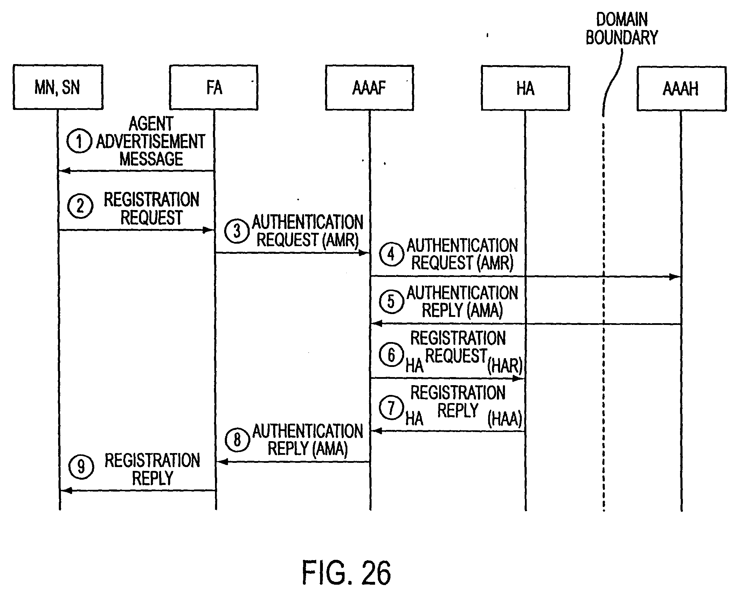

The sequence set when the AAAF 400 specifies the HA 200 is described below by referring to FIG. 26. Since the procedures 1 through 4 are the same as the procedure used when the AAAH 100 specifies the HA 200, the detailed explanation is omitted here.
5. The AAAH 100 searches the service control database 300 shown in FIG. 2 or 21 using a received user NAI, and extracts a corresponding user profile. In addition, it generates the service control transaction 120 shown in FIG. 18 using the session ID and the source address from the received AMR message, and the user profile extracted from the service control database 300. The AAAH 100 sets all information extracted from the service profile in the AVP of the DIAMETER protocol, and transmits the authentication reply (AMA) message containing the AVP to the AAAF 400.
6. Upon receipt of the AMA message, the AAAF 400 confirms the value of the home address in the message. If the value of the address is 0 (zero), then the service profile of the AMA message is set in the service control transaction 420 shown in FIG. 14, and the HA 200 is specified according to the above described procedure. The AAAF 400 sets in the AVP of the DIAMETER the necessary information only for the HA 200 from the information extracted from the service profile and stored in the AMA message. Then, the HA registration request (HAR) message containing the AVP is transmitted to the HA 200.
   Upon receipt of the HAR message, the HA 200 extracts necessary information (a session ID, an HAR source address, a care-of address, a registration request identifier field, a lifetime, a service profile) from the message, and generates the service control transaction 230 shown in FIG. 5. Then, the HA 200 sets the destination address (home address) in the service control filter 225 of the router control unit 220.
7. The HA 200 returns an HA registration reply (HAA) message to the AAAF 400.
8. Upon receipt of the HAA message from the HA 200, the AAAF 400 searches the service control transaction 420 shown in FIG. 14 using the session ID set in the message, and retrieves necessary information for the FA 500. An authentication reply (AMA) message is generated with the retrieved information set in the AVP of the DIAMETER protocol, and the AMA message is transmitted to the FA address at the head of the session transaction table. When there is an agreement between AAAs (for example, between an AAAF and an AAAH), the priority transfer order of packets can be changed based on the TOS value of service type information.
   Thus, in FIG. 25, the AAAH 100 selects an appropriate HA 200 and assigns it to a mobile node. However, in FIG. 26, the AAAF 400 selects an appropriate HA 200 and assigns it to a mobile node. That is, in the sequence shown in FIG. 26, the AAAH 100 returns the authentication reply (AMA) message to the AAAF 400 without transmitting the HAR message to the HA 200, and the HA registration request (HAR) message is transmitted from the AAAF 400 to the HA 200. The HA 200 returns the registration reply (HAA) to the AAAF 400.
   By dynamically specifying an HA as described above, the following merit can be obtained. For example, assume that a mobile node is moved from Japan to the U.S., and the mobile node communicates with a correspondent node in the U.S. In this case, the mobile node is accommodated by an FA in the U.S. If the HA of the mobile node is fixed in Japan, the traffic increases between the FA 500 provided in the U.S. and the HA 200 provided in Japan, and data cannot be efficiently processed. Therefore, it becomes convenient if an HA operating for the mobile node is specified in the U.S. when the mobile node is moved to the U.S. and its location is registered in the U.S. In the system according to the present invention, to obtain the above described merit, an HA is dynamically assigned when the location of the mobile node is registered. As a preferred embodiment, the HA 200 is dynamically assigned in the same domain as the FA 500.

### 8.4 Setting service control transaction information in an FA

Upon receipt of an authentication reply (AMA) message from the AAAF 400, the FA 500 searches for the service control transaction 530 using the session ID corresponding to the message, and a home address, an HA address, and a service profile provided by the AMA message are set in the service control transaction 530 as shown in FIG. 4. A source address (home address) is set in a service control filter 525 of a router control unit 520. Then, the FA 500 transmits a registration reply message to the link layer address of the MN or SN indicated by the service control transaction 530 (9 shown in FIG. 25 or 26).

### 8.5 Distribution of data packet

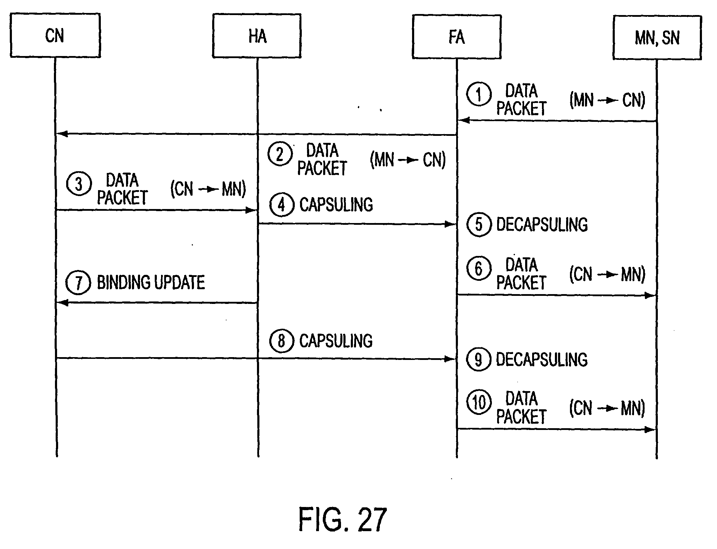

FIG. 27 shows the sequence of distributing a data packet from the mobile node (MN, SN) 600 to the CN 900.

### (1) Default forwarding

In this embodiment, it is assumed that the mobile node (MN, SN) 600 whose initial location has been registered in the above described procedure communicates with the correspondent node CN 900 connected to an IP network. In addition, it is assumed that Diff-Serv is provided as a value-added service.

The mobile node 600 starts transmitting a data packet to the CN 900 (1 shown in FIG. 27). This packet is first received by the FA 500 accommodating the mobile node 600.

Upon receipt of a packet from the mobile node 600 whose location has been registered, the FA 500 searches the visitor list shown in FIG. 4 using the source address in the IP header of the packet because the source address of the packet is registered in the service control filter 225 of the FA 500. Then, the service type (transmission of Diff-Serv) in the service profile table to be linked to the visitor list in which the above described source address is set is searched for, and the relevant information set therein is referred to. In this embodiment, it is assumed that the policy for assignment of the assured forwarding class 1 (highest priority level) is set as a TOS value to all packets transmitted from the mobile node 600. Therefore, the FA 500 sets the above described value as a TOS value of the IP header of the received packet, and transfers the packet to the destination address indicated by the IP header (2 shown in FIG. 27). At this time, the FA 500 generates the binding cache 224 according to the edition information about the packet.

Upon receipt of the data packet, the CN 900 transmits the packet to the 'source address' stored in the packet (3 shown in FIG. 27). For example, the CN 900 stores the information (for example, a Web page) specified by the mobile node 600 in the packet, and then transmits the packet.

At this time, the address of the mobile node 600 is set as the destination address of the packet transmitted from the CN 900. The address of the mobile node 600 is managed by the HA 200. Therefore, the packet transmitted from the CN 900 is temporarily transferred to the HA 200. At this stage, the binding cache 924 has not been set in the CN 900. In addition, a corresponding QoS (priority transfer control) is not applied to the mobile node 600. Upon receipt of the packet from the CN 900, the HA 200 retrieves the service control transaction 230 shown in FIG. 5 using the destination address stored in the header of the received packet because the destination address of the packet is registered in the service control filter 225 of the HA 200. Then, the service type (arrival of Diff-Serv) of the service control transaction in which the destination address is registered, and the relevant setting information is referred to. In this embodiment, it is assumed that the policy for providing the 'assured forwarding class 1' of all packets addressed to the mobile node 600. In this case, the HA 200 assigns the value corresponding to the class 1 as a TOS value of all packets addressed to the mobile node 600. Practically, the HA 200 first capsules a packet received from the CN 900 using the care-of address of the mobile node 600 extracted from the service control transaction 230, assigns the TOS value to the header of the capsuled packet, and transmits the packet to the care-of address (4 shown in FIG. 27). In this case, the care-of address of the mobile node 600 is the address of the FA 500 directly accommodating the mobile node 600. The address of the FA accommodating the mobile node 600 has been transmitted to the HA 200 according to the AMR message and the HAR message in the location registration procedure of the mobile node 600.

Then, the HA 200 generates the binding cache 224 in which the header edition information about the packet is set.

### (2) Transfer of data packet by FA

Upon receipt of the data packet capsuled by the HA 200, the FA 500 decapsules it (5 shown in FIG. 27). Then, the FA 500 retrieves a corresponding link layer address from the service control transaction 530 using the destination address extracted from the header information about the decapsuled packet. Then, the decapsuled data packet is transferred to the extracted link layer address (6 shown in FIG. 27).

### (3) Route optimization

When the HA 200 starts transferring to the FA 500 the data packet addressed to the mobile node 600 after capsuling it, the HA 200 notifies the CN 900 of the care-of address of the mobile node 600 using a binding update message to optimize the transfer route. Thus, the CN 900 can transmit a data packet directly to the care-of address of the mobile node 600 after capsuling the packet.

According to the present invention, the CN 900 can be notified of the currently applied TOS value by extending the binding update message (7 shown in FIG. 27). In the information stored as a service profile of the service control transaction 230 shown in FIG. 5, the HA 200 notifies the CN 900 of the necessary information only for the CN 900 because the information other than the TOS value to be added to a data packet addressed to the mobile node 600 is insignificant for the CN 900. Different policy relating to specific communications can applied by the HA 200 to the communications between the mobile node 600 and other correspondent nodes.

Upon receipt of the binding update message, the CN 900 generates the binding cache 924 for storing the home address, the care-of address, and the TOS value of the mobile node 600 obtained from the message. Then, the CN 900 searches the binding cache 924 when it transmits a packet. If a home address matching the destination address set in the header of the packet has been registered, then the CN 900, like the HA 200, capsules the packet using the care-of address registered in the binding cache 924, and assigns the registered TOS value to the packet. Then, the CN 900 transmits the packet to the care-of address.

Hereafter, the packet addressed to the mobile node 600 from the CN 900 is transferred directly to the FA 500 accommodating the mobile node 600 according to the care-of address of the mobile node 600 (8 shown in FIG. 27). Since the TOS value has been assigned also to the packet addressed to the mobile node 600 from the CN 900, the Diff-Serv service is provided not only for the packet from the mobile node 600 to the CN 900, but also for the packet from the CN 900 to the mobile node 600.

### (4) Transferring data packet by FA

Upon receipt of the data packet capsuled by the CN 900, the FA 500 decapsules it (9 shown in FIG. 27). The FA 500 also extracts the destination address from the header information of the decapsuled packet, and extracts a corresponding link layer address from the service control transaction 530. Then, the decapsuled data packet is transferred to the extracted link layer address (10 shown in FIG. 27).

### 8.6 In a case where a mobile node is moved from the communications area of an FA to the communications area of another FA in the same AAAF (case 1)

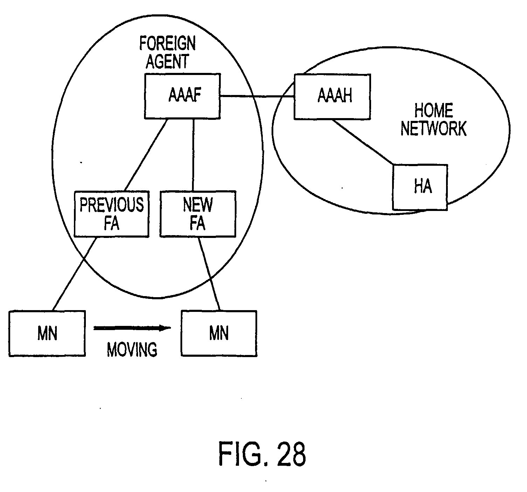

FIG. 28 shows the location registration procedure used when a mobile node is moved from the communications area of an FA in an AAAF to the communications area of another FA. In the description below, a 'previous FA' refers to a foreign agent which had accommodated the mobile node 600 before the mobile node 600 was moved. A 'new FA' refers to a foreign agent for accommodating the mobile node 600 after the mobile node 600 has been moved.

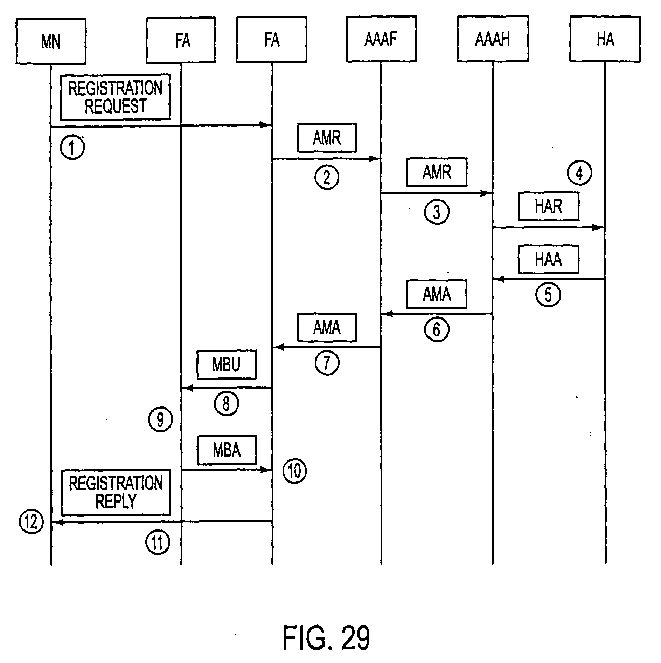

FIG. 29 shows the sequence in a case where the mobile node 600 is moved from the communications area (a subordinate access network) of the previous FA to the communications area of the new FA. In this case, the new FA obtains service profile information, etc. from an AAA using a DIAMETER message in the AAA protocol, and the previous FA deletes the service control information about the mobile node 600 managed and accommodated by the previous FA.

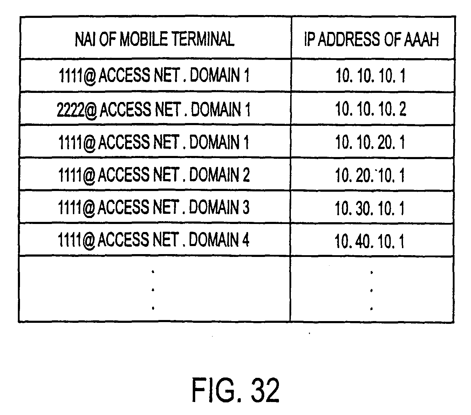

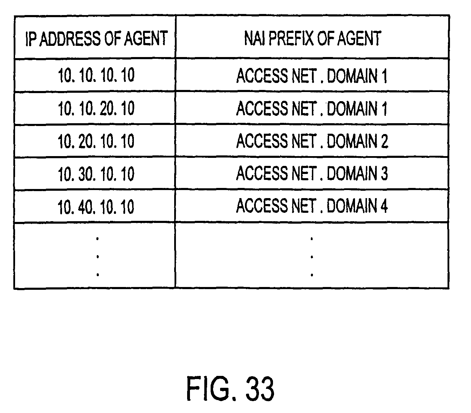

FIG. 32 shows an example of the NAI registration table used by an FA. FIG. 33 shows an example of the table based on which the IP address of an agent is transformed into an NAI prefix.

The sequence set when the mobile node 600 transmits a registration request message to perform location registration is described below by referring to FIGS. 28 and 29.
1. When the mobile node 600 is moved from the communications area of the previous FA to the communications area of the new FA, and receives the agent advertisement message (mobile IP message) from the new FA, it transmits a registration request message to the new FA. At this time, The IP address of the previous FA and the NAI (network access identifier) of the mobile node 600 are included in the registration request message.
2. Upon receipt of the registration request message, the new FA extracts necessary information from the message, and generates the service control transaction 530, etc. shown in FIG. 2. In addition, the new FA obtains the NAI prefix of the previous FA by referring to the NAI prefix table shown in FIG. 33 using the IP address of the previous FA. The NAI prefix can identify, for example, a domain. Then, the new FA capsules the registration request message received from the mobile node 600, and transmits it to the AAAF 400 as an authentication request (AMR) message. The AMR message contains the NAI prefix of the previous FA 500 and the NAI of the mobile node 600. The session ID of the AMR message is assumed to be unentered.
3. Upon receipt of the AMR message, the AAAF 400 generates a provisional session transaction table using the NAI of the mobile node 600 as an index. It obtains the address of the AAAH 100 by referring to the NAI registration table, and transfers the AMR message to the AAAH 100.
4. Upon receipt of the AMR message, the AAAH 100 searches the control block for the corresponding service profile (and the session ID) using the NAI of the mobile node 600 contained in the message as an index. When the corresponding service profile (and session ID) is found, the service profile (and the session ID) is stored in the AVP of the DIAMETER message, and the registration request (HAR) message containing the AVP is transmitted to the HA 200. At this time, the AAAH 100 registers the HA 200 as necessary.
5. Upon receipt of the HAR message, the HA 200 retrieves the session transaction of the mobile node 600 using the session ID as an index. If the retrieval has resulted in a hit, the address of the new FA is registered. When the location registering process is completed, the HA 200 edits only necessary information for the new FA, and transmits a registration reply (HAA) message to the AAAH 100. At this time, the HA 200 can store the necessary information for the new FA in the AVP of the HAA message.
6. Upon receipt of the HAA message, the AAAH 100 retrieves the session transaction using the session ID stored in the message, and transmits the authentication reply (AMA) message to the address of the new FA extracted by the retrieval. At this time, the AAAH 100 can store the necessary information for the new FA in the AVP of the AMA message.
7. Upon receipt of the AMA message, the AAAF 400 extracts necessary service profile information, etc. from the message, and relays the AMA message to the new FA according to the service transaction information. At this time, necessary information for the new FA can be stored in the AVP of the AMA message transmitted to the new FA.
8. Upon receipt of the AMA message, the new FA obtains necessary information from the message, and transmits a binding update (MBU: MIP binding update) message to the previous FA.
9. Upon receipt of the MBU message, the previous FA deletes the service control information corresponding to the session ID stored in the message. In addition, when a routing table for use in transferring a message addressed to the mobile node 600 to the new FA is set, an MBA (MIP binding acknowledge) message is transmitted to the new FA.
10. Upon receipt of the MBA message, the new FA recognizes that the service control information has been deleted by the previous FA.
11. The new FA decapsules the DIAMETER element, and transmits the registration reply message to the mobile node 600.
12. Upon receipt of the registration reply message, the mobile node 600 recognizes that the process has been completed on the registration request message, and terminates a series of processes relating to the location registration.

### 8.7 In a case where a mobile node is moved from the communications area of an FA to the communications area of another FA in the same AAAF (case 2)

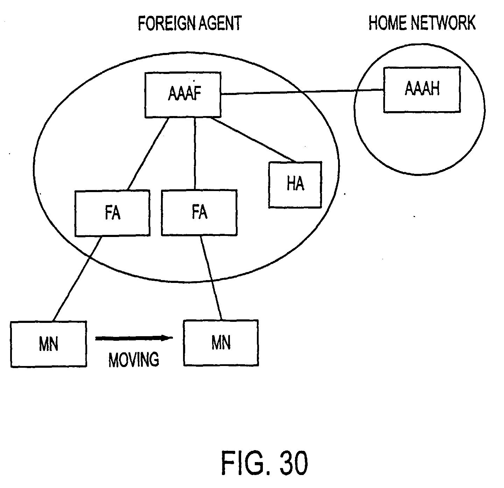

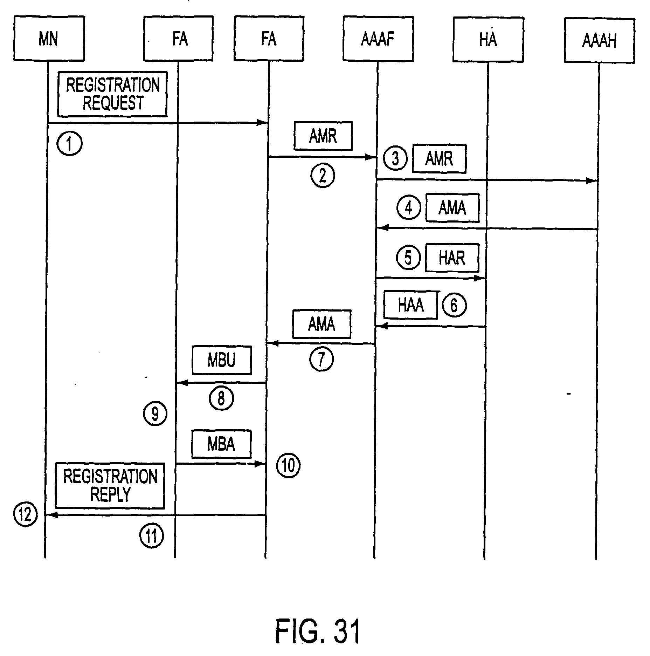

The present embodiment relates to a case in which a home agent of the mobile node 600 is specified by the AAAF 400. The sequence set when the mobile node 600 is moved from the communications area of the previous FA to the communications area of the new FA is described below by referring to FIGS. 30 and 31. In FIG. 31, 1 through 3 refer to the same operations as in FIG. 29, and the descriptions of the operations are omitted here.
4. Upon receipt of the AMR message from the AAAF 400, the AAAH 100 searches the session transaction table using the session ID stored in the message, and registers the address of the new FA therein. Then, the AAAH 100 transmits the AMA message to the address of the AAAF 400 shown in the session transaction table.
5. The AAAF 400 obtains a session transaction table based on the NAI of the mobile node 600 stored in the AMA message. Then, It extracts the address of the HA 200 from the session transaction table, and transmits the registration request (HAR) message to the HA 200.
6. Upon receipt of the HAR message, the HA 200 searches the session transaction table of the mobile node 600 using the session ID as an index. If the retrieval results in a hit, the address of the new FA is registered therein. When the registering process is completed, the AAAH 100 edits only the necessary information for the new FA, and transmits the registration reply (HAA) message to the AAAF 400. At this time, the necessary information for the new FA can be stored in the AVP of the HAA message.
7. Upon receipt of the HAA message, the AAAF 400 relays the AMA message to the FA 500 according to the service transaction information.
   Since the subsequent processes (8 through 12 shown in FIG. 31) are basically the same as the process sequence shown in FIG. 29, the descriptions are omitted here.

### 8.8 In a case where a mobile node is moved from the communications area of an FA managed by an AAAF to the communications area of an FA managed by another AAAF

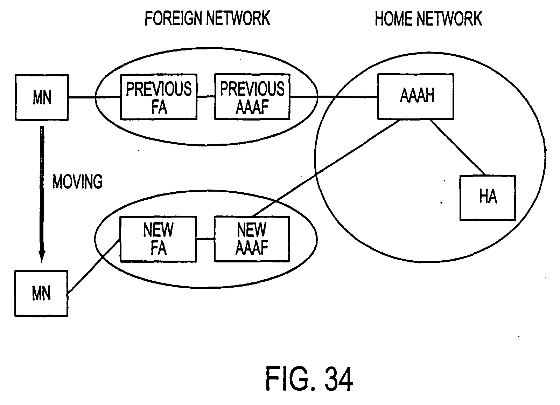

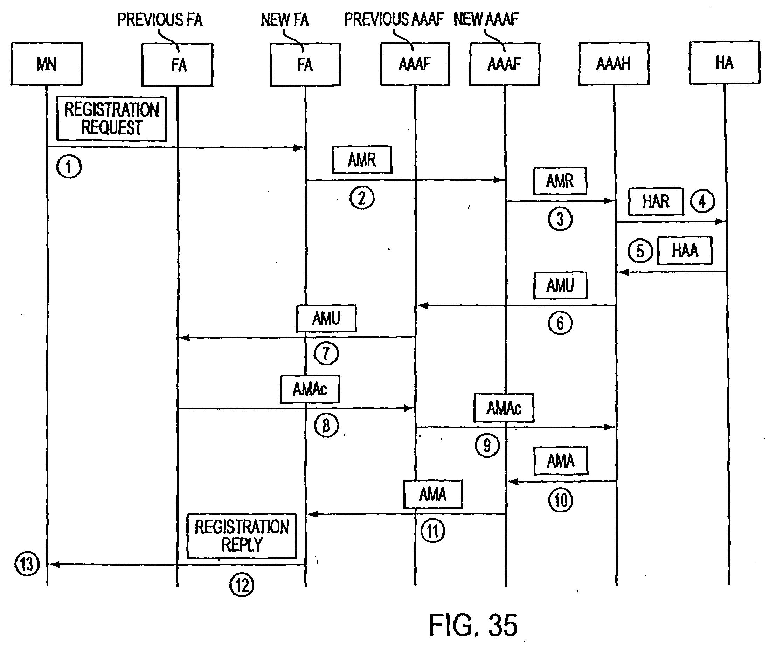

The embodiment is described below by referring to FIGS. 34 and 35. In the descriptions below, a 'previous AAAF' refers to a foreign agent which manages the previous FA, and a 'new AAAF' refers to a foreign agent which manages the new FA.
1. The same as 1 shown in FIG. 29.
2. Basically the same as 2 shown in FIG. 29. However, the new FA transmits an AMR message to the new AAAF.
3. Upon receipt of the AMR message, the operation of the new AAAF performs basically the same operation as the AAAF 400 described above by referring to 3 shown in FIG. 29.
4. and 5. Basically the same as 4 and 5 shown in FIG. 29.
6. Upon receipt of the HAA message, the AAAH 100 compares the NAI prefix of the new FA with the NAI prefix of the previous FA. It is assumed that they are different from each other. In this case, the AAAH 100 recognizes that the mobile node 600 has been moved from the communications area of the previous AAAF to the communications area of the new AAAF. The AAAH 100 generates an AMU message storing the MBU message, sets the IP address of the previous FA as the address of the AMU message, and transmits it to the previous AAAF.
7. Upon receipt of the AMU message, the previous AAAF deletes the service profile corresponding to the session ID stored in the message, and transfers the AMU message to the previous FA.
8. Upon receipt of the AMU message, the previous FA deletes the service profile corresponding to the session ID stored in the message, and sets the routing table for use in transferring the message addressed to the mobile node 600. The previous FA transmits the AMAc message to the previous AAAF.
9. Upon receipt of the AMAc message, the previous AAAF recognizes that the service control information corresponding to the mobile node 600 has been deleted in the previous FA, and transmits the AMAc message to the AAAH 100.
10. Upon receipt of the AMAc message, the AAAH 100 extracts necessary service profile information, etc. from the message, and relays the AMA message to the new AAAF according to the service transaction information. Then, upon receipt of the AMA message, the new AAAF transmits the AMA message to the new FA.
11. The new FA obtains the DIAMETER element by decapsuling the AMA message, and transmits the registration reply message to the mobile node 600.
12. Upon receipt of the registration reply message, the mobile node 600 recognizes that the location registering process has been completed, thereby terminating a series of processes.

### 8.9 Example of configuration of a network in anycast service

An anycast service refers to a service in which a plurality of terminal devices are assigned to a preliminarily registered address, and a packet for which the registered address is set as a destination address is transferred to any of the plurality of terminal devices when it is transmitted. The preliminarily registered address is referred to as 'anycast address^{'}. The policy of selecting one or more terminals from the plurality of terminal units is determined such that the load can be evenly distributed to the terminal units, or the transmission route of the packet can be the shortest.

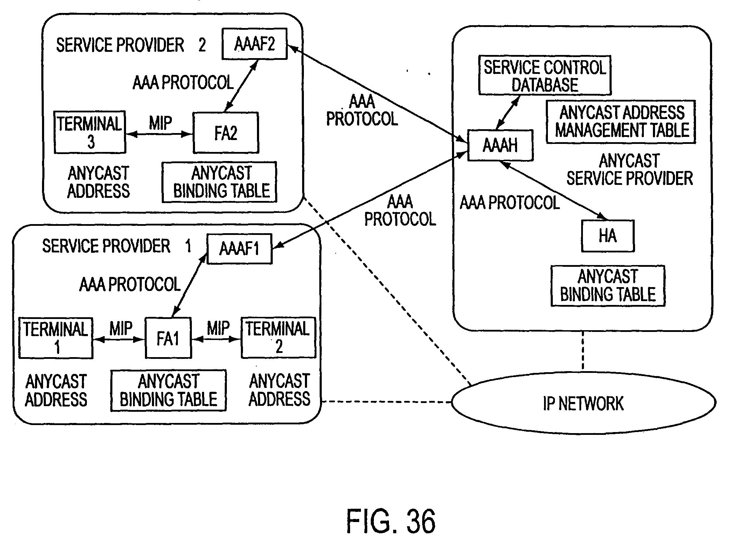

FIG. 36 shows an ANYCAST service. In this example, terminals 1 through 3 have made contracts to receive anycast services. Then, it is assumed that the terminals 1 and 2 are moved to the communications area of the service provider 1, and are accommodated by the FA 1, and the terminal 3 is moved to the communications area of the service provider 2, and is accommodated by the FA 2. Described below is the sequence set when the terminals 1 through 3 participate (or are registered) in the anycast service.

The anycast service provider for providing an ANYCAST service publishes some of the IP addresses owned by the provider as anycast addresses. The published IP addresses are recorded automatically or by an operator in the anycast management table of the AAAH 100. Practically, for example, when a terminal requests to use a published anycast address, the NAI of the terminal is set in the anycast address management table shown in FIG. 19. In this example, it is assumed that the terminal 1 (NAI-1), the terminal 2 (NAI-2), and the terminal 3 (NAI-3) have requested to use '123.123.123.123' which is one of the anycast addresses. The terminals 2 and 3 are mirror servers of the terminal 1.

### 8.10 Anycast registration sequence

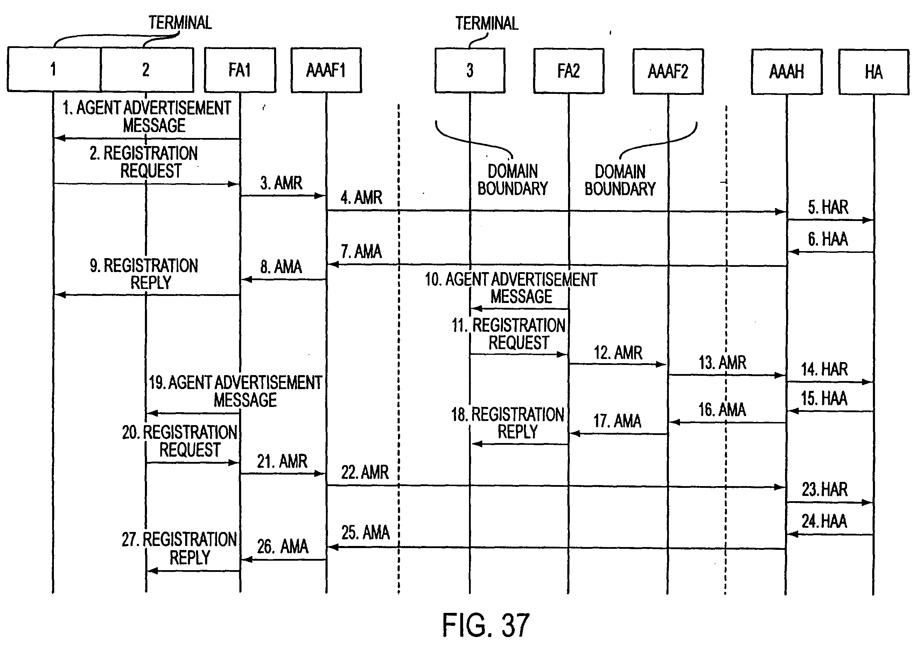

The sequence set when the terminals 1 through 3 participate in the anycast service is described below by referring to FIG. 37.

### (1) Terminal 1 participating ANYCAST

Procedures 1 through 3: Terminal 1 (mobile node) recognizes its own location by receiving an agent advertisement message (mobile IP message) periodically transmitted from a home agent (HA) or a foreign agent (FA). In this example, upon receipt of the message from the FA 1, the terminal 1 recognizes that it is located in the communications area of the FA 1. At this time, the terminal 1 transmits a registration request message to the FA 1 according to the ordinary mobile IP procedure. In the registration request message, the NAI, the home address (ANYCAST address), and the home agent address specified when the user of the terminal 1 makes a contract with a service provider are set. Then, upon receipt of the registration request message, the FA 1 capsules the message, and transmits it to an AAAH as an authentication request (AMR) message.
Procedure 4: Upon receipt of the AMR message in the predetermined process, the AAAH performs an authenticating process on the user (terminal 1) who issued the registration request.
Procedure 5: The AAAH checks whether or not the home address notified through the AMR message is an anycast address by referring to the anycast address management table. If the notified address is not an anycast address, an ordinary registration procedure is performed. On the other hand, if the notified address is an anycast address, then it is confirmed whether or not the NAI of the user (terminal 1) who issued the registration request has been registered. If it has not been registered, the request is rejected, and an authentication reply (AMA) message in which an error code indicating a user who has not been registered is set is returned to the FA 1. On the other hand, if the NAI has been registered, the state of the corresponding NAI in the anycast address management table is rewritten into 'ONLINE'. Then, the AAAH sets the service profile extracted from the service control transaction 120 in the AVP of the DIAMETER message, and transmits the HA registration request (HAR) message storing the AVP to the HA. In addition, it sets a service type (ANYCAST) in the service profile table of the service control transaction 120.
Procedure 6: Upon receipt of the HAR message, the HA extracts necessary information (a session ID, an HAR source address, a care-of address, a registration request identifier field, a lifetime, and a service profile) from the message, and generates a service control transaction shown in FIG. 5. At this time, the ANYCAST information about the service profile is not set in the service control transaction 230, but in the ANYCAST address binding table 212 shown in FIG. 3. A source address (anycast address) is set in the service control filter 225 of the router control unit 220. Furthermore, the HA returns the HA registration reply (HAA) message to the AAAH.
Procedure 7: Upon receipt of the HAA message, the AAAH searches for the service control transaction 120 using a session ID. At this time, if the service type (ANYCAST) has been registered in the service profile shown in FIG. 18, then the 'NAI' having the same care-of address as the FA 1 to which the mobile node (terminal 1) is linked about the anycast address from the anycast address management table, and the 'STATE' are set in the AVP of the DIAMETER message. Then, the authentication reply (AMA) message storing the AVP is transmitted to the address (AAAF 1) of the source of the authentication request indicated by the service control transaction 120.
Procedure 8: Upon receipt of the AMA message, the AAAF 1 searches for the service control transaction 420 using a session ID, and relays the AMA message to the FA address registered in the session transaction table shown in FIG. 14.
Procedure 9: Upon receipt of the AMA message from the AAAF 1, the FA 1 accesses the service control transaction 530 using a session ID, and sets the home address, the home agent address, and the service profile received from the AMA message. At this time, the ANYCAST information is not set in the service control transaction 530, but is set in the anycast address binding table 212. In addition, the destination address (anycast address) is set in the service control filter 225 of the router control unit 520 shown in FIG. 9. The FA 1 transmits a registration reply message to the link layer address of the terminal 1 set in the service control transaction 530.

### (2) Terminal 3 participating in ANYCAST

The registration procedures (procedures 10 through 18) of the terminal 3 are basically the same as the above described registration procedures (procedures 1 through 9) of the terminal 3. However, the registration request message transmitted from the terminal 3 is received by the FA 2, the AMR message transmitted by the FA 2 is transferred to the FA 2 through the AAAF 2, and a registration reply message is transmitted from the FA 2 to the terminal 3.

If an anycast address corresponding to the terminal 3 has already been registered when the AAAH sets the information about the terminal 3 in the ANYCAST address binding table 212 shown in Fig. 6, then the information about the terminal 3 is unconditionally overwritten (or added).

### (3) Terminal 2 participating in ANYCAST

The registration procedures (procedures 19 through 27) of the terminal 2 are basically the same as the above described registration procedures (procedures 1 through 9) of the terminal 1.

### 8.11 Distribution of packet to anycast address

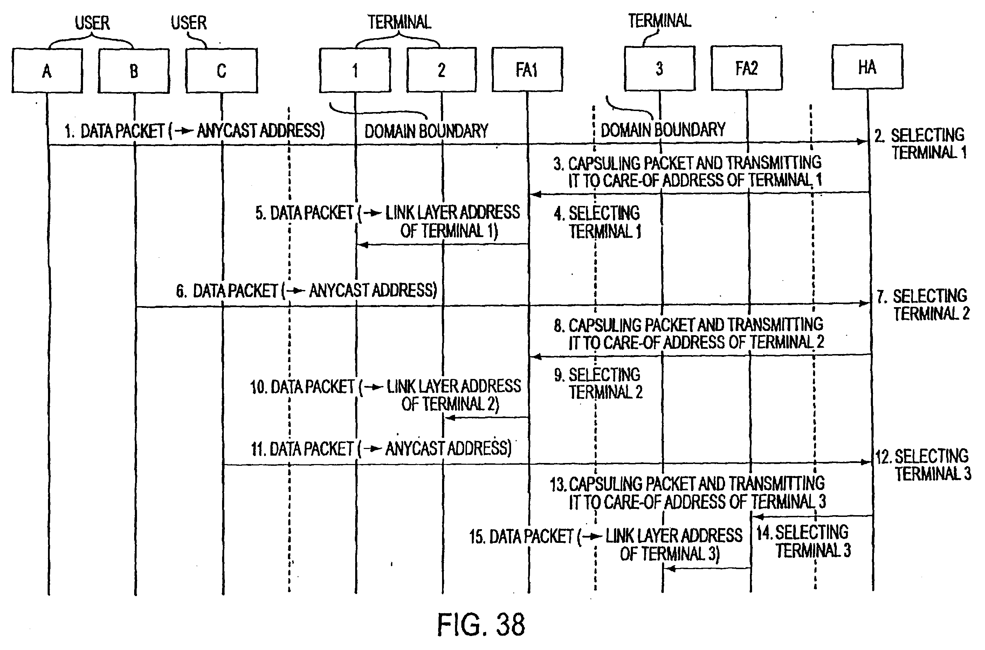

FIG. 38 shows the sequence of distributing a packet to an anycast address registered in the procedure shown in FIG. 37. In this example, users A through C transmit packets to an anycast address for example, (123.123.123.123).

An anycast address is an IP address which belongs to the HA shown in FIG. 36. The anycast address is assumed to be registered in the service control filter 225. Therefore, when a packet in which the anycast address is set is transmitted to the IP network, the packet is temporarily transferred to the HA, is picked up by the service control filter 225, and then receives a predetermined process by the HA. Described below is a practical example.
Procedure 1: When the user A transmits a data packet in which an anycast address is specified as a destination address, the packet is transferred to the HA.
Procedure 2: Upon receipt of the packet from the user A, the HA checks whether or not the destination address of the packet has been registered in the service control filter 225 (shown in FIG. 9) of the HA. In this example, it is assumed that the destination address has already been registered in the service control filter 225. In this case, the HA searches the anycast address binding table 212 shown in FIG. 6, and determines whether or not the destination address of the received packet has already been registered as an anycast address. In this example, the destination address is assumed to have been registered. In this case, the HA selects an address according to the 'ANYCAST ADDRESS SELECTION POLICY' stored in the anycast address binding table 212. In this example, it is assumed that the selection policy to cyclically select in the order of registration a terminal whose state is 'ONLINE' from among the terminals (NAI) registered in the anycast address binding table 212 shown in FIG. 6. Here, it is assumed that the terminals 1 through 3 (NAI-1 through NAI-3) have been registered in the procedure shown in FIG. 37, and their state are 'ONLINE'. In this case, for example, the terminal 1 (NAI-1) is selected.
   The HA generates the binding cache 224 (FIG. 8) to prevent a packet having the same source address from being transferred to a different server during the process. The binding cache 224 is generated based on the combination of a source address and a destination address. A packet having the source address and the destination address registered in the binding cache 224 is transferred to the same destination address until the binding cache 224 is deleted. An appropriate lifetime value is set in the binding cache 224, and the setting is released if a predetermined time (for example, the expiration of a timer) elapses.
Procedure 3: The service control transaction 230 is retrieved using the 'NAI-1' selected in the procedure 2, and the care-of-address (FA 1 in this case) of the terminal 1 is extracted. Then, the packet received from the user A is capsuled, and is transmitted to the care-of-address.
Procedure 4: Upon receipt of the packet transmitted from the HA, the FA 1 decapsules it. The destination address of the decapsuled packet is the anycast address specified by the user A. The anycast address is registered in the service control filter 225 of the FA 1, and the terminals 1 and 2 are registered in the anycast address binding table 212 corresponding to the anycast address (procedures 8 and 26 shown in FIG. 37). In the FA 1, it is assumed that the 'ANYCAST ADDRESS SELECTION POLICY' of the HA is defined. Therefore, upon receipt of the packet, the FA 1 selects the terminal 1 (NAI-1) according to the selection policy. Like the HA, the FA 1 also generates the binding cache 224.
Procedure 5: The FA 1 retrieves the service control transaction using the 'NAI-1' selected in the procedure 4, extracts a corresponding link layer address (for example, a MAC address), and transmits the packet to the link layer address.
   Described below is the case in which the user B transmits a packet to the anycast address.
Procedure 6: The packet is transferred to the HA.
Procedure 7: Upon receipt of the packet, the HA searches the binding cache 224 of the router control unit 220. At this time, it is assumed that the source address (user B) of the received packet has not been registered in the binding cache 224. In this case, the HA selects the next terminal (NAI) from the anycast address binding table 212 according to the above described selection policy. In this example, the terminal 2 (NAI-2) is selected. At this time, a binding cache associating the user B with the terminal 2 is generated.
Procedure 8: The HA retrieves the service control transaction 230 using the 'NAI-2' selected in the procedure 7, and extracts the care-of-address (FA 1 in this example) of the terminal 2. Then, the HA capsules the packet received from the user A, and transmits it to the care-of-address.
Procedures 9 and 10: As in the above described procedures 4 and 5, the FA 1 selects the 'NAI-2' from the anycast address binding table, and transfers the packet to the terminal 2.
   The sequence (procedures 11 through 15) of the user C transmitting a packet to the above described anycast address is basically the same as the sequence in the procedures 1 through 5 or the procedures 6 through 10. However, it is assumed that the HA selects the terminal 3 (NAI-3) as the destination of the packet transmitted from the user C. In this case, the HA transmits the packet to the FA 2 accommodating the terminal 3. Only the terminal 3 (NAI-3) has been registered as a terminal corresponding to the anycast address in the anycast address binding table of the FA 2 of the provider 2. Therefore, the FA 2 extracts a corresponding link layer address by retrieving the service control transaction using the 'NAI-3', and transmits the packet to the link layer address. Thus, in the system according to the present invention, an ANYCAST service can be provided over a plurality of providers. In addition, since an address is selected using a NAI of a mobile node, a consistent policy can be applied between an HA and an FA although there are a plurality of ANYCAST registration terminals in the same FA.

### 8.12 Packet filtering in HA

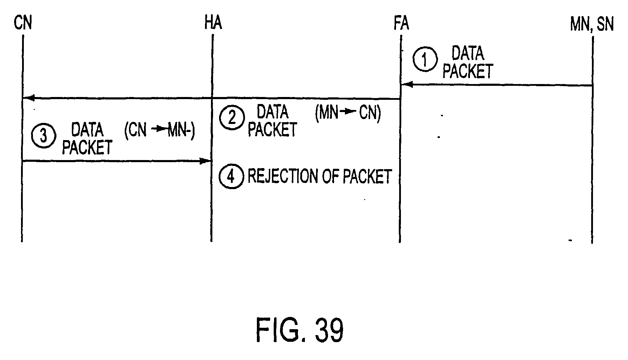

The restriction and rejection of the transfer of a data packet according to the present invention is described below by referring to FIG. 39 using an example of accessing a provider (correspondent node 900 (CN)) unintentionally specified for restriction by a mobile node whose initial location has been registered while it is enjoying the World Wide Web surfing.
1. The mobile node (MN, SN) 600 transmits packet data for access to the World Wide Web to the CN 900.
2. Upon receipt of the packet, the FA accommodating the mobile node extracts the source address and the destination address of the packet from its header, and checks whether or not the addresses have been set in the binding cache 224 (FIG. 8) or the service control filter 225 (FIG. 9). In this example, it is assumed that these addresses have not been registered. In this case, the FA refers to the routing table 223 (FIG. 7), and transfers the packet to the destination address (CN 900) indicated by the header.
3. Upon receipt of the data packet, the CN 900 returns a reply message in response to the message stored in the packet. For example, upon receipt of the data packet, the Web server (CN 900 in this example) transmits the data packet as a reply message to the source address (mobile node 600) of the packet. The reply message is transferred to the HA. In this example, it is assumed that the destination address of the reply message has not been registered in the binding cache 224 in the CN 900.
4. The HA receives the data packet addressed to the mobile node 600 as a destination address. In this example, it is assumed that the destination address of the packet has been registered in the service control filter 225 (FIG. 9). In this case, the service control transaction table (FIG. 5) is searched using the destination address of the packet. When the service control transaction corresponding to the address has been detected, the service type packet filtering of the service profile is searched to refer to the setting information. Since there is only one address set to be restricted in this embodiment, the source address of the received packet is compared with the restriction address. At this time, if these addresses match each other, then the received packet is rejected (or discarded). If they do not match each other, then the received packet is capsuled using the care-of-address of the mobile node extracted from the service control transaction mobility binding table, and the capsuled packet is transferred to the FA indicated by the care-of-address.

### 9. Home agent having the function of foreign agent

### 9.1 Explanation of operations

In the existing common mobile IP network, there are normally a home agent (HA) and a foreign agent (FA) for a mobile node. When the mobile node is moved from the communications area of a home agent to the communications area of a foreign agent distant from the home agent, a mobility binding table is generated for the home agent in the location registration procedure, and a visitor list is generated for the foreign agent. At this time, the information for transfer of a packet addressed to the mobile node to the foreign agent accommodating the mobile node is registered in the mobility binding. On the other hand, the information for transmitting a packet, which is from the home agent, to the mobile node is registered in the visitor list.

However, when a mobile node is located in the communications area of a home agent in the existing common mobile IP network, the mobile node is connected to the home agent not through the sequence according to the mobile IP protocol, but through the sequence of, for example, a LAN protocol, etc. Therefore, in this case, the mobile node is connected to the IP network without performing the authenticating process, etc. by the AAA.

In the mobile communications service system described below, a home agent has the function of a foreign agent. A 'function of a foreign agent' refers to the function of a foreign agent provided in an existing common mobile IP network, and the function of a foreign agent according to the present invention described above by referring to FIGS. 1 through 39. That is, the home agent according to the present embodiment has the function of generating a visitor list as necessary, the function of requesting an AAA to authenticate the mobile node for location registration, and the function of receiving service profile information from the AAA for service profile, and controlling the communications of the mobile node according to the received service profile information.

In addition, it is necessary to add the following function to the AAAH when a home agent is assigned the above described functions of a foreign agent. That is, upon receipt of a message relating to the location registration request of the mobile node from the home agent, the AAAH performs the authenticating process, etc. as in the procedure of receiving a message about the location registration request from a foreign agent, and returns a reply message to the home agent. The 'procedure of receiving a message relating to a location registration request from a foreign agent' is, for example, a procedure prescribed by the RFC 2002 and the DIAMETER mobile IP extension. Furthermore, the AAAH has the function of sending service profile information to a home agent when the reply message is returned. A method of sending the service profile information to a home agent can be a method using an registration request (HAR) message, and a method using an authentication reply (AMA) message.

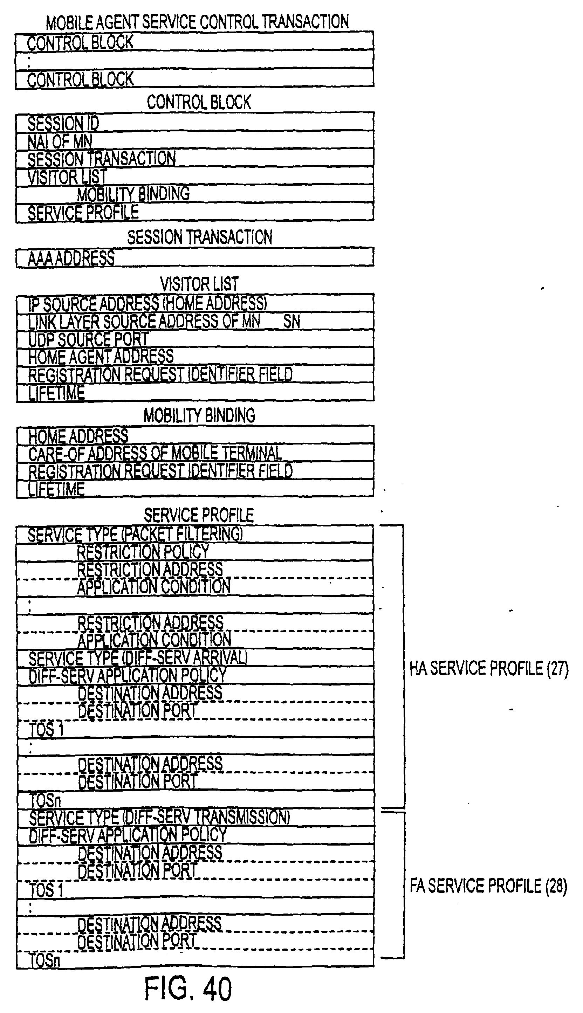

FIG. 40 shows an example of a service control transaction generated in a home agent. The service control transaction can be obtained by adding a 'VISITOR LIST' and a 'FA SERVICE PROFILE' to the service control transaction 230 shown in FIG. 5. In addition, a pointer pointing to a leading address of the visitor list, or the information having an equivalent function is set in the control block.

The method of generating a visitor list is the same as the method used in an existing foreign agent. The home agent and the foreign agent basically have the same configurations. That is, these agents function as home agents to a specific mobile node, and function as foreign agents to other mobile nodes. Therefore, the procedure of generating a visitor list in a home agent can be the procedure used in a foreign agent.

The 'FA SERVICE PROFILE' is the information extracted from the service control database 300 by the AAAH. The 'FA SERVICE PROFILE' is stored in, for example, the AVP of the message of the DIAMETER protocol, and is sent from the AAA to a home agent. At this time, the 'FA SERVICE PROFILE' can be sent together with the 'HA SERVICE PROFILE', or can be individually sent. The 'HA SERVICE PROFILE' is the same as, for example, the information sent using a HAR message as shown in FIG. 25.

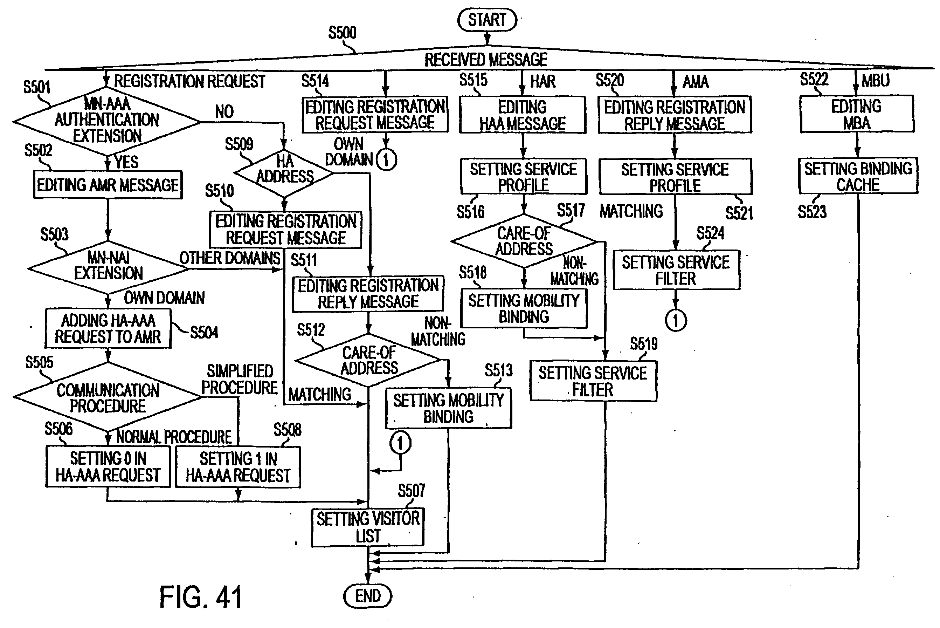

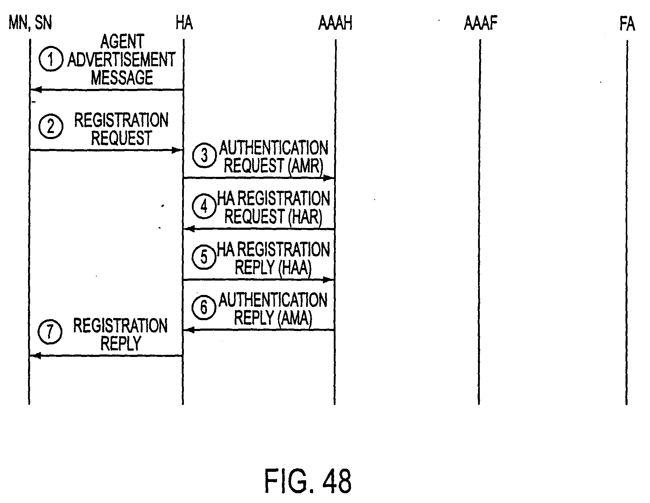

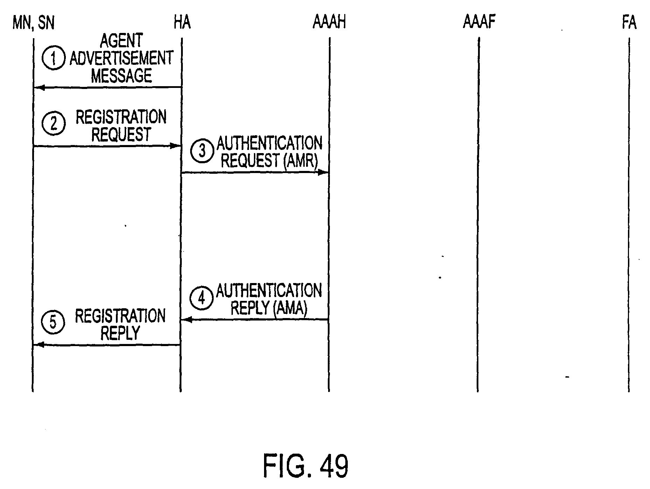

FIG. 41 is a flowchart of the operations of a mobile agent (including an HA and a foreign agent). The flowchart shows in detail the steps S164 and S165 in FIG. 10. Therefore, the process is performed by the service control unit 210 when the home agent or the foreign agent receives a protocol packet. In explaining this flowchart, FIGS. 25 and 26 described above, and FIGS. 48 and 49 described below are referred to.

Described below is the operation performed after specifying a received message by analyzing the header information about a received packet in step S500.

### (1) When a registration request message is received (an authentication request is contained)

The sequence is performed when a registration request message is received from a mobile node. When a registration request message is received, control is passed to S501. In FIGS. 25 and 26, the foreign agent receives a registration request message. In FIGS. 48 and 49, the home agent receives a registration request message. The format of a registration request message is shown in FIGS. 57 through 61.

In step S501, it is checked whether or not the 'MN-AAA AUTHENTICATION' shown in FIG. 61 is set in the extension area of the received registration request message. If the 'MN-AAA AUTHENTICATION' has been set, then it is determined that a request to authenticate the mobile node has to be issued to the AAA, and control is passed to step S502. If it has not been set, then control is passed to step S509. The mobile node requests to perform an authenticating process for the first location registration, and does not request to perform the process for the subsequent location registration. In this example, it is assumed that the 'MN-AAA AUTHENTICATION' has been set in the extension area of the registration request message.

In step S502, an AMR message in response to the received registration request message is generated. The format of the AMR message is shown in FIG. 70.

In step S503, it is determined whether or not the network prefix of the 'MN-NAI' contained in the extension area of the registration request message shown in FIG. 59 is a prefix in its own domain. The 'PREFIX' corresponds to the domain name of an IP address. In this case, the 'NETWORK PREFIX OF MN-NAI' corresponds to the domain to which the mobile node belongs, and the 'PREFIX OF ITS OWN DOMAIN' corresponds to the domain managed by the home agent or the foreign agent receiving the registration request message. When these prefixes match each other, control is passed to step S504. When they do not match each other, control jumps to step S507. In this example, it is assumed that the prefixes match each other.

In step S504, the 'HA-AAA REQUEST AVP' is added to the AMR message. The 'HA-AAA REQUEST AVP' is an AVP suggested by the present invention, and has the format shown in FIG. 69. The value of an AVP code is assigned by an IANA (Internet assigned number authority) by a vendor of the system. The data division is a 32-bit integer.

In step S505, the procedure of communicating with the AAA server is determined. Available communications procedures can be a normal procedure shown in FIG. 48, and a simplified procedure shown in FIG. 49. Which procedure is to be selected depends on an installed protocol process. If both procedures can be selected, the control policy of the mobile agent selects the procedure.

When the normal procedure is selected, '0 (zero)' is set in step S506 in the data division of the 'HA- AAA REQUEST AVP' shown in FIG. 69. When the simplified procedure is selected, '1' is set in the data division of the 'HA-AAA REQUEST AVP' in step S508.

In step S507, necessary information (the home address, the source link layer address, the UDP source port, the home agent address, the identifier field of the registration request, and the lifetime) is extracted from the received registration request message, and a visitor list for the mobile node is generated.

In the above described process, an AMR message to be transmitted to the AAAH and a visitor list for the mobile node are generated also in the home agent which has received the registration request message from the mobile node.

### (2) When a registration request message is received (an authentication request is not contained)

The sequence is performed when a registration request message not containing an authentication request is received from the mobile node. In this case, since the 'MN-AAA AUTHENTICATION' is not set in the extension area of the received registration request message, the processes in and after step S509 are performed as a result of the branch process in step S501.

In step S509, the 'HA ADDRESS (home agent)' set in the received registration request message is compared with the domain address of the agent which received the message. When they do not match each other, control is passed to step S510, and the agent which received the registration request message from the mobile node functions as a foreign agent. If the compared messages match each other, then control is passed to step S511, and the agent which received the registration request message from the mobile node functions as a home agent.

In step S510, an AMR message to be transmitted to the home agent is generated. Then, in step S507, a visitor list is generated.

In step S511, a registration reply message to be returned to the mobile node is generated. The format of the registration reply message is shown in FIG. 62. In step S512, the 'CARE-OF ADDRESS' set in the received registration request message is compared with the domain address of the agent which received the message. When they match each other, it is recognized that the received message has been transmitted from the mobile node, and control is passed to step S507. On the other hand, when the two addressed do not match each other, it is recognized that the received message has been transmitted from a foreign agent, and control is passed to step S513. Then, in step S513, the care-of address, the registration request identifier field, and the lifetime are extracted from the received registration request message, and a mobility binding table is generated.

In the above described process, an AMR message to be transmitted to the AAAH, and a mobility binding table or a visitor list for the mobile node are generated also in the home agent which received the registration request message transmitted from the mobile node.

### (3) When a registration reply message is received

The sequence is performed after the foreign agent or the home agent has received an AMA message and has generated a registration reply message to be transmitted to a mobile node according to the received message. Practically, in step S514, the registration reply message shown in FIG. 62 is generated. Then, control is passed to step S507.

### (4) When a HAR message is received

The sequence is performed when a HAR message is received from an AAA. When the HAR message is received, control is passed to step S515. In FIGS. 25 and 48, the home agent receives the HAR message from an AAAH. In FIG. 26, the home agent receives the HAR message from an AAAF. In the sequence shown in FIG. 49, a HAR message is not used. The format of the HAR message is shown in FIG. 71.

In step S515, an HAA message is generated. The format of an HAA message is shown in FIG. 73. The HAA message is transmitted from the home agent to the AAAH in FIGS. 25 and 48, and is transmitted from the home agent to the AAAF in FIG. 26. No HAA messages are used in the sequence shown in FIG. 49.

In step S516, the user profile information set in the data division of the 'PROFILE-CACHE AVP' of the HAR message is set in the service profile division of the service control transaction. The 'PROFILE-CACHE AVP' is an AVP suggested by the present invention, and its format is shown in FIG. 69. The service profile division of the service control transaction is shown in FIG. 40. The value of an AVP code is assigned by the above described IANA, or the vendor of the communications service. The data division is a structure obtained by copying a part of the user profile of the service control database shown In FIG. 21.

In step S517, the care-of address of the registration reply message set in the data division of the 'MIP-REGISTRATION-REQUEST AVP' of the received HAR message is compared with the domain address of the home agent which has received the HAR message.

When these addresses do not match each other, it is recognized that the received HAR message has been transmitted from a foreign agent, and the care-of address, the registration request identifier field, and the lifetime are extracted from the registration request message, and are set in the mobility binding in step S518. Then, in step S519, the service filter for identifying a packet to be controlled is set according to the service control information assigned by an AAA using the HAR message.

On the other hand, if the two addresses match each other, step S518 is omitted, and control is passed to step S519.

### (5) When an AMA message is received

The sequence is performed when an AMA message is received from an AAA. When an AMA message is received, control is passed to step S520. The AMA message is transmitted from an AAAH to a foreign agent in FIG. 25, from an AAAF to a foreign agent in FIG. 26, and from an AAAH to a home agent in FIGS. 48 and 49. The format of the AMA message is shown in FIG. 72.

In step S520, a registration reply message to be returned to a mobile node which has transmitted a registration request message is generated. The format of the registration reply message is shown in FIG. 62.

In step S521, the user profile information set in the data division of the ^{'}PROFILE-CACHE AVP' of the received AMA message is set in the service profile division of the service control transaction. The 'PROFILE-CACHE AVP' and the service profile division have been described above by referring to the process in step S516.

In step S524, a service filter for identifying a packet to be controlled is set according to the service control information notified by the AAA. Then, the process in step S507 is performed.

### (6) When an MBU message is received

The sequence is performed when an MBU (binding update) message to be transmitted and received between foreign agents is received. The MBU message is normally transmitted from a new FA to a previous FA as described above by referring to FIG. 29 or 31. The format of the MBU message is shown in FIG. 63.

In step S522, an MBA message to be returned to the foreign agent which has transmitted the MBU message is generated. The format of the MBA message is shown in FIG. 64. In step S523, the binding cache shown in FIG. 8 is updated according to the information notified by the MBU message.

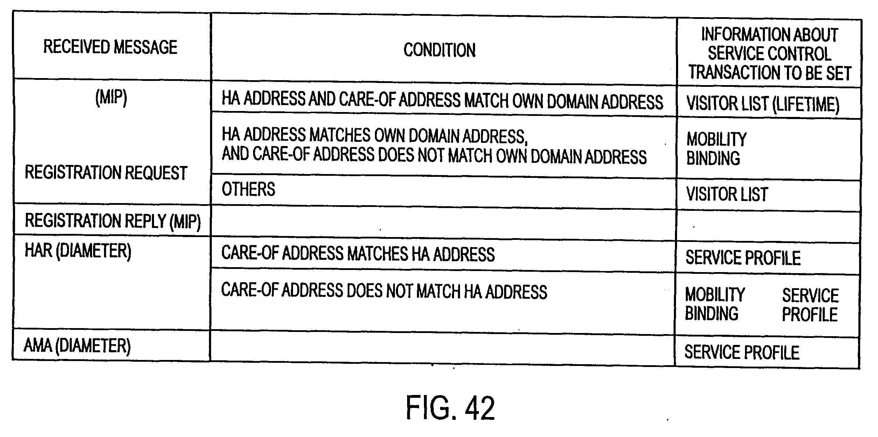

FIG. 42 is a table showing the correspondence between the received message and the service control transaction in the process flow shown in FIG. 41. The table shows the information to be set in the service control transaction according to the type of the received message and the address set in each message.

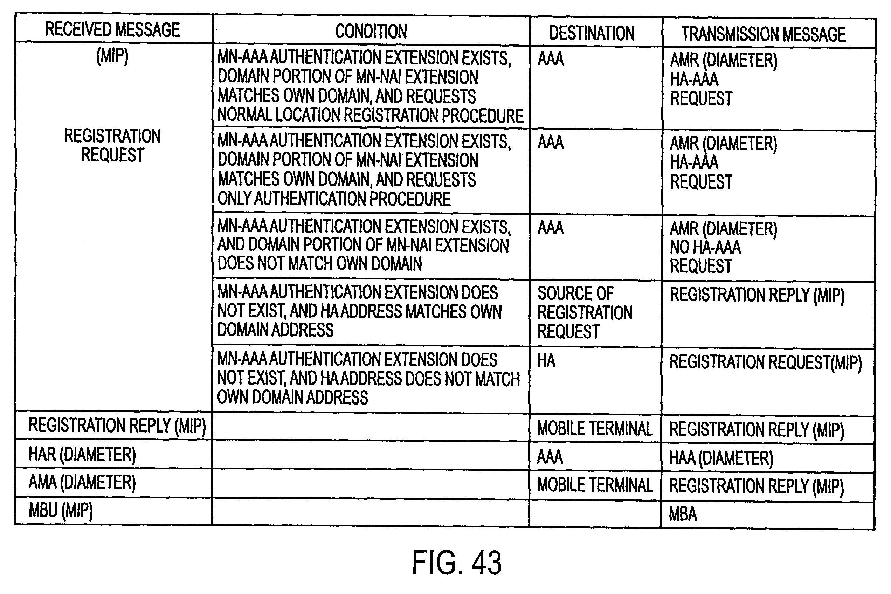

FIG. 43 is a table showing the correspondence between the received message and the transmission message in the process flow shown in FIG. 41. The table shows the type and the destination of the transmission message according to the type of the received message and the information (an address, information stored in an extension area, etc.) set in the received message.

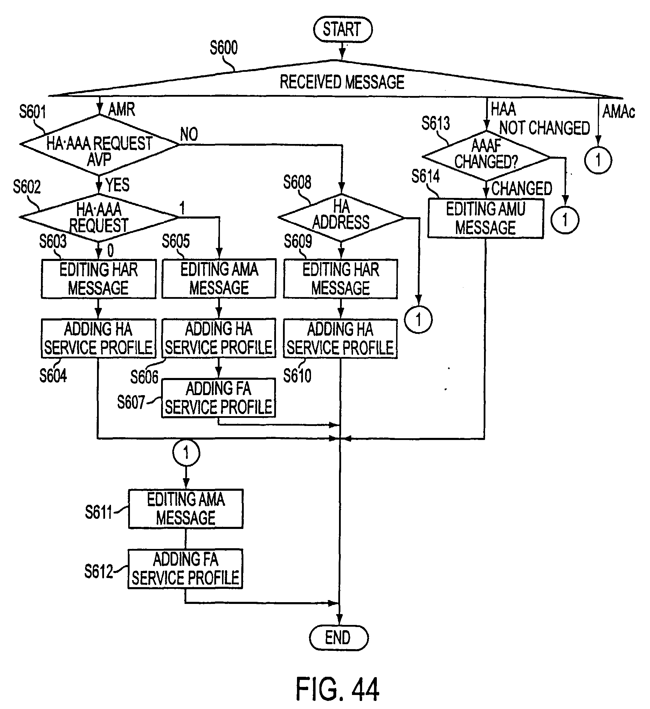

FIG. 44 is a flowchart of the operations of an AAAH. The flowchart shows steps S22E and S22F shown in FIG. 22 in detail. Therefore, the process is performed when the AAAH receives a message of the DIAMETER protocol. In explaining the flowchart, FIGS. 25 and 26 described above, and FIGS. 48 and 49 described later are referred to as necessary.

Described below are the operations performed after specifying a received message by analyzing the header information about a received packet in step S600.

### (1) When an AMR message is received (request from a home agent)

The sequence is performed when an AMR message is received. When an AMR message is received, control is passed to step S601. The AMR message is transmitted from an AAAF in FIGS. 25 and 26, and is transmitted from a home agent in FIGS. 48 and 49. The format of the AMR message is shown in FIG. 70.

In step S601, it is checked whether or not the received AMR message is assigned the 'HA-AAA REQUEST AVP'. The 'HA-AAA REQUEST AVP' is an AVP assigned by a home agent in step S504 in the flowchart shown in FIG. 41. When the AVP is assigned, control is passed to step S602. When the AVP is not assigned, control is passed to step S608.

In step S602, the value of the data division of the 'HA-AAA REQUEST AVP' assigned to the received AMR message is checked. When '0 (zero)' is set in the data division, control is passed to step S603. When '1' is set, control is passed to step S605. The data division of the 'HA-AAA REQUEST AVP' is set by the home agent in step S506 or S508. That is, the AAAH performs the normal procedure (steps S603 and S604) when '0' is set in the data division, and performs the simplified procedure (steps S605 through S607) when '1' is set therein.

In step S603, an HAR message to be transmitted to the home agent is generated. The HAR message generated in step S603 is used in the sequence shown in FIG. 48. The format of the HAR message is shown in FIG. 71.

In step S604, the 'PROFILE-CACHE AVP' is added to the HAR message generated in step S603. The 'PROFILE-CACHE AVP' can be obtained by extracting only the profile to be set in the home agent from the service profile of the service control transaction. It is assumed that the information about to which one or more service profiles stored in the service control transaction are to be distributed, a foreign agent or a home agent, is predetermined. Basically, the service profile for a service to be applied to a transmission packet is distributed to a foreign agent, and the service profile for a service to be applied to a received packet is distributed to a home agent.

In step S605, an AMA message to be transmitted to a home agent is generated. The AMA message generated in step S605 is used in the sequence shown in FIG. 49. The format of the AMA message is shown in FIG. 72.

In step S606, the 'PROFILE-CACHE AVP' is added to the AMA message generated in step S605. In this process, a service profile to be distributed to a home agent is added to the AMA message. Then, in step S607, the service profile to be distributed to a foreign agent is also added to the 'PROFILE-CACHE AVP' of that AMA message. The service profile to be distributed to a foreign agent is extracted from the service profile of the service control transaction.

Thus, in the simplified procedure, the service profiles to be used by a home agent and a foreign agent are stored in the AMA message transmitted from the AAAH to the home agent.

### (2) When an AMR message is received (request from an agent other than a home agent)

When an AMR message not assigned the 'HA-AAA REQUEST AVP' is received, the processes in and after step S608 are performed. In step S608, it is checked whether or not the 'HA ADDRESS (FIG. 18)' set in the service control transaction is an address in the domain managed by the AAAH. If the HA address is an address in the domain of the AAAH, then control is passed to step S609. If not, control is passed to step S611.

In step S609, an HAR message to be transmitted to a home agent is generated. The HAR message is used in, for example, the sequence shown in FIG. 25. The format of the HAR message is shown in FIG. 71. In step S610, the 'PROFILE-CACHE AVP' is added to the HAR message generated in step S609. This process is basically the same as the process in step S604.

In step S611, an AMA message to be transmitted to an AAAF is generated. The AMA message is used in, for example, the sequence shown in FIG. 26. The format of the AMA message is shown in FIG. 72. Then, in step S612, the 'PROFILE-CACHE AVP' is added to the AMA message generated in step S611. In this case, only the service profile to be distributed from the service profile of the service control transaction to a foreign agent is extracted, and the service profile is stored in the 'PROFILE-CACHE AVP'.

### (3) When an HAA message is received

The sequence is performed when an HAA message is received from a home agent. When the HAA message is received, control is passed to step S613. The format of the HAA message is shown in FIG. 73.

In step S613, it is checked whether or not the 'AAAF ADDRESS' recorded in the service control transaction has changed. The 'AAAF ADDRESS' recorded in the service control transaction is the address of the AAAF managed by the foreign agent accommodating a mobile node. Therefore, the AAAF address changes when the mobile node is moved from the communications area of an AAAF to the communications area of another AAAF. The information is given from a new AAAF according to an AMR message.

If the AAAF address has been changed, an AMU message is generated in step S614. The format of the AVP set in the AMU message is shown in FIG. 74. The AMU message is used in, for example, the sequence shown in FIG. 35. On the other hand, if the AAAF address has not been changed, then the processes in steps S611 and S612 are performed.

### (4) When an AMAc message is received

When an AMAc message is received, the processes in steps S611 and S612 are performed. The AMAc message is used in, for example, the sequence shown in FIG. 35.

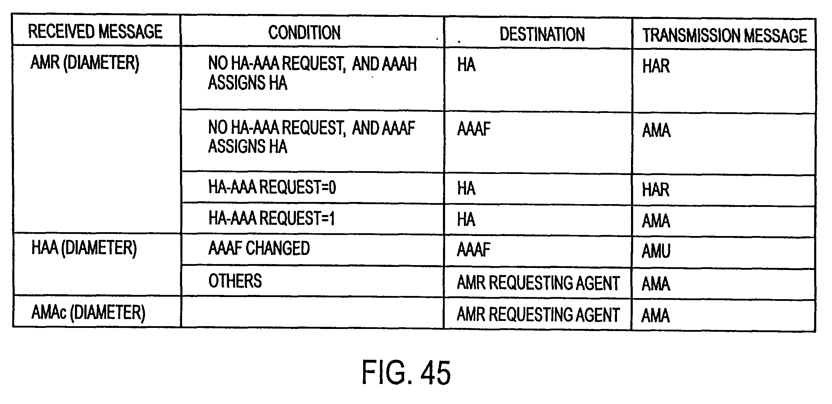

FIG. 45 is a table showing the correspondence between a received message and a transmission message. This table shows the type and the destination of a transmission message based on the type of a received message, the information set in the received message (information stored in an extension area, etc.), and the location of a mobile node, etc.

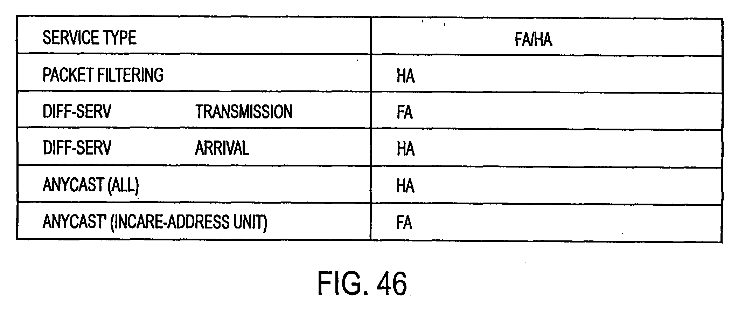

FIG. 46 is a table showing an example of a division of the service profile information. In this example, the necessary service profile information for supply of each type of value-added services is divided into information to be distributed to a home agent and information to be distributed to a foreign agent.

### 9.2 Embodiments

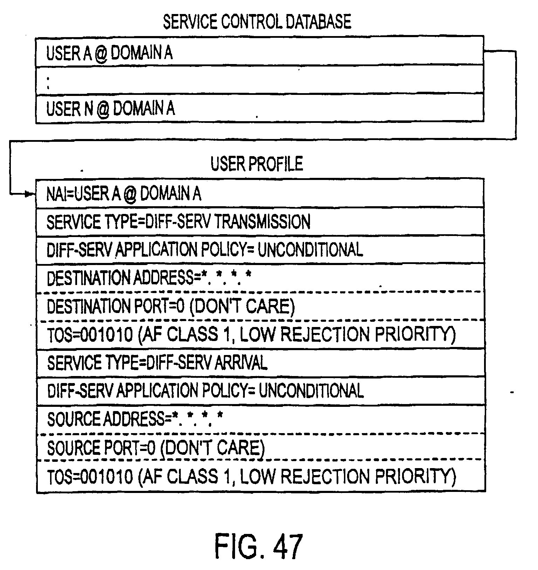

Described below is an example of applying a Diff-Serv to the case where a mobile node logs in to a home network. FIG. 47 shows an example of a user profile of a user who is provided with a Diff-Serv. The user profile is stored in the service control database 300.

### (1) Setting Diff-Serv information in a location registration procedure

The sequence of distributing a service profile to a home agent for providing a Diff-Serv is described below by referring to FIGS. 48 and 49.
1 and 2 shown in FIGS. 48 and 49: Upon receipt of an agent advertisement message from a home agent (HA), the mobile node (MN, SN) returns a registration request message to a home agent according to the normal mobile IP procedure. Upon receipt of the registration request message, the home agent generates a unique session ID, extracts necessary information (a home address, a source link layer address, an UDP source port, a home agent address, a registration request identifier field, and a lifetime) from the received registration request message, and assigns the session ID to the extracted information, thereby generating a service control transaction.
3 shown in FIGS. 48 and 49: The home agent transmits an AMR message to the AAAH. The AMR message stores a registration request and the 'HA-AAA REQUEST AVP' received from the mobile node. A value of selecting the normal procedure (sequence shown in FIG. 48) or the simplified procedure (sequence shown in FIG. 49) is set in the 'HA-AAA REQUEST AVP'. The information for requesting the AAA server to authenticate the mobile node and distribute a service profile for supply of a value-added service to the mobile node, or the information for requesting the transfer of a location registration request is set in the 'HA-AAA REQUEST AVP'.
   Upon receipt of the AMR message, the AAAH performs the authenticating process on the mobile node (registration request user) according to the common authentication procedure. When the authenticating process is normally completed, the subsequent steps are continued. When it is abnormally completed, an AMA message in which an appropriate reason code is set is returned to the home agent. The AAAH searches the service control database shown in FIG. 47, and extracts a corresponding service profile. Then, a service control transaction shown in FIG. 18 is generated using a unique session ID, the address of the home agent which has transmitted the AMR message, and the service profile extracted from the service control database. Additionally, the AAAH analyzes the 'HA-AAA REQUEST AVP' of the AMR message, and determines the procedure (normal or simplified procedure) for communicating with the home agent.

### (1a) When the normal procedure is selected

4 shown In FIG. 48: The AAAH transmits an HAR message to the home agent. The HAR message stores a location registration request message used in the normal mobile IP procedure, and a service profile to be used by the home agent to provide a value-added service for the mobile node.
5 shown In FIG. 48: Upon receipt of the HAR message, the home agent extracts necessary information (a session ID, the source address of the HAR message, a care-of address, a registration request identifier field, a lifetime, and a service profile) from the HAR message, and sets the information in the service control transaction. The home agent sets a destination address (home address) in the service control filter 225 of the router control unit 220 shown in FIG. 3. The home agent returns an HAA message to the AAAH.
6 shown in FIG. 48: Upon receipt of the HAA message, the AAAH transmits an AMA message to the home agent. The AMA message stores a service profile to be used by a foreign agent to provide a value-added service for the mobile node. The service profile can be obtained by searching for a session transaction using a session ID. In addition, the destination address of the AMA message can also be obtained from the session transaction.
7 shown in FIG. 48: Upon receipt of the AMA message from the AAAH, the home agent accesses a service control transaction using a session ID, and sets the home address, the home agent address, and the service profile obtained from the AMA message therein. In addition, the source address (home address) is set in the service control filter 225 shown in FIG. 3. Then, the home agent transmits a registration reply message to the link layer address of the mobile node set in the service control transaction.

### (1b) When the simplified procedure is selected

4 shown in FIG. 49: Upon receipt of an AMR message, the AAAH returns an AMA message to the home agent. The message stores a service profile to be used by the home agent to provide a value-added service for the mobile node, and a service profile to be used by a foreign agent to provide a value-added service for the mobile node.
5 shown in FIG. 49: Upon receipt of the AMA message, the home agent extracts necessary information (a session ID, the source address of the AMA message, a care-of address, a registration request identifier field, a lifetime, and a service profile) from the AMA message, and sets the information in the service control transaction. In addition, the home agent sets the destination address (home address) and the source address (home address) in the service control filter 225 shown in FIG. 3.

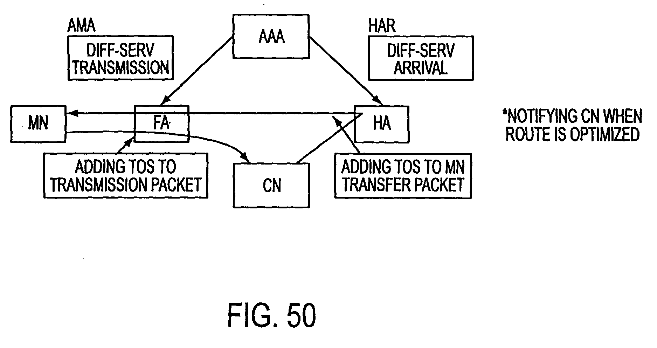

   FIGS. 50 through 52 show the procedure of distributing a service profile. In this example, it is assumed that a Diff-Serv is provided for a mobile node.
   FIG. 50 shows the case in which a mobile node is located in the communications area of a foreign agent. In this case, an AAA server distributes 'DIFF-SERVE ARRIVAL' to a home agent using an HAR message, and distributes 'DIFF-SERVE TRANSMISSION' to a foreign agent using an AMA message. The 'DIFF-SERVE ARRIVAL' is the information for executing a priority control of a packet addressed to the mobile node, and the 'DIFF-SERVE TRANSMISSION' is the information for executing a priority control of a packet transmitted from the mobile node.

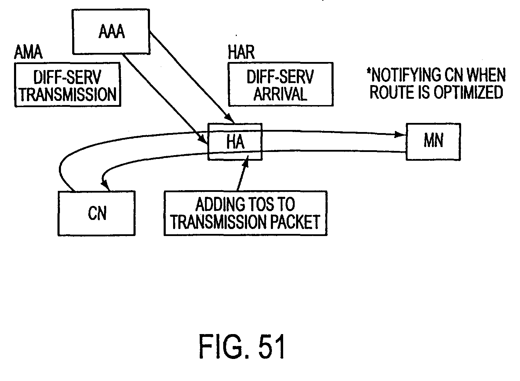

   FIG. 51 shows the case in which a mobile node is located in the communications area of a home agent with the normal procedure selected. In this case, an AAA server distributes the 'DIFF-SERVE ARRIVAL' to a home agent using an HAR message, and then distributes the 'DIFF-SERVE TRANSMISSION' to the home agent using an AMA message.

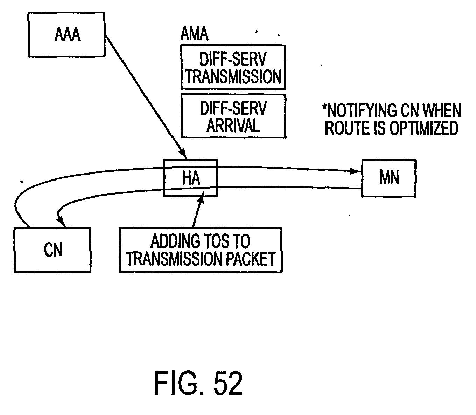

   FIG. 52 shows the case in which a mobile node is located in the communications area of a home agent with the simplified procedure selected. In this case, an AAA sever simultaneously distributes the 'DIFF-SERVE ARRIVAL' and the 'DIFF-SERVE TRANSMISSION' to the home agent using the AMA message.

### (2) Distribution of data packet

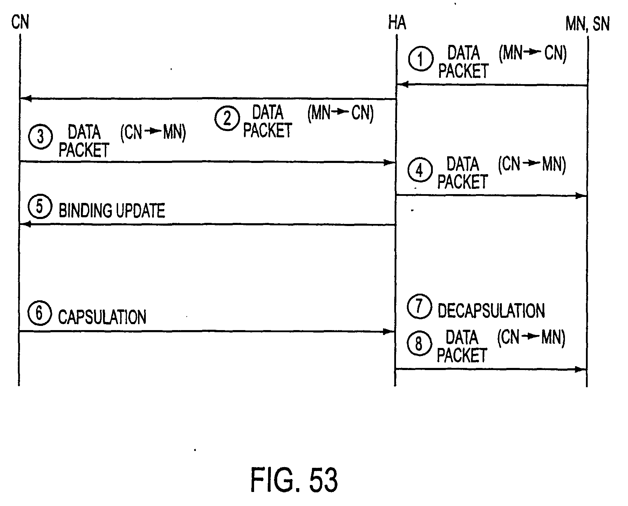

The procedure of distributing a data packet is described below by referring to FIG. 53. In this example, it is assumed that the location registration has been completed by the procedure shown in FIG. 48 or 49.
1. The transmission of a packet is started from the mobile node (MN, SN) to the correspondent node (CN).
2. The address of the mobile node is set as a 'SOURCE ADDRESS' in the service control filter of a home agent (HA) by the procedure shown in FIG. 48 or 49. Therefore, upon receipt of a packet transmitted from the mobile node, the home agent searches a visitor list corresponding to the header information of the received packet. Then, it obtains the 'DIFF-SERVE TRANSMISSION^{'} by accessing the service profile linked to the search result. A 'TOS value' depending on the information set in the 'DIFF-SERVE TRANSMISSION' is assigned to a received packet. In this embodiment, for example, a TOS value indicating 'ASSURED FORWARDING CLASS 1' is set. Then, the home agent transfers the packet to which the TOS value is assigned to the destination address (the correspondent node in this example) indicated by the header. Furthermore, the home agent generates a binding cache containing the edition information about the packet.
3. Upon receipt of the packet from the mobile node, the correspondent node transmits to the mobile node the packet storing the data requested by the mobile node. At this time, the correspondent node has not been provided with service profile information, and no binding cache has been generated. Therefore, the correspondent node refers to a normal routing table, and assigns the address of the mobile node to a packet to be transmitted. No information for priority control is assigned to the packet to be transmitted from the correspondent node to the mobile node.
4. The address of the mobile node is set as a 'DESTINATION ADDRESS' in the service control filter of the home agent by the procedure shown in FIG. 48 or 49. Therefore, upon receipt of the packet addressed to the mobile node, the home agent searches the service control transaction using the header information of the packet, and extracts a service profile, thereby extracting the 'DIFF-SERVE ARRIVAL'. Then, a 'TOS value' depending on the information set in the 'DIFF-SERVE ARRIVAL' is assigned to the received packet. In this embodiment, for example, a TOS value indicating the 'ASSURED FORWARDING CLASS 1' is set. Then, the home agent transfers the packet assigned the TOS value to the mobile node. At this time, the service control information can be mapped, etc. by the function of realizing the QoS in a link layer.
5. The home agent notifies the correspondent node of the care-of address of the mobile node using a binding update message to optimize the route for transfer of the packet from the correspondent node to the mobile node. In this embodiment, since the mobile node is currently accommodated in the home agent, the correspondent node is notified of the address of the home agent as a 'CARE-OF ADDRESS OF MOBILE NODE'. Thus, the correspondent node can hereafter transmit a packet directly to an agent accommodating the mobile node.
   Furthermore, according to the present embodiment, the correspondent node is notified of the 'TOS VALUE' used to provide a Diff-Serv for the correspondent node using a binding update message. The 'TOS VALUE' provided for the correspondent node is only the TOS value to be assigned to the packet to be transmitted to the mobile node from the correspondent node. When the mobile node communicates with another correspondent node, only the service profile required by the correspondent node is distributed to the correspondent node from the home agent.
6. Upon receipt of the binding update message, the correspondent node extracts the home address of the mobile node, the care-of address, and the TOS value from the message, and generates a binding cache containing them. Hereinafter, the correspondent node searches the binding cache when it transmits a packet, and checks whether or not an address which matches the destination address of the packet has been registered. If a matching address has been registered, then the correspondent node capsules the packet using the care-of address registered in the binding cache, assigns the registered TOS to the capsuled packet, and transmits the packet. Thus, a Diff-Serv can be provided not only for the packet transmitted from the mobile node to the correspondent node, but also for the packet transmitted from the correspondent node to the mobile node.
7. Upon receipt of the capsuled data packet, the home agent decapsules it.
8. The home agent extracts the destination address from the header information of the decapsuled packet, retrieves the corresponding link layer address from the service control transaction based on the address, and then transfers the received packet to the link layer address.

According to the present invention, a mobile node can receive various value-added services although it is moved to any place.

In addition, although the number of mobile nodes increases, the volume of the service control information to be set in each agent can be relatively small.

Furthermore, since the service profile is distributed to a communications appliance (foreign agent and home agent) in the location registration procedure or the authentication procedure of the mobile node, a value-added service can be immediately provided to the mobile node even after it has been moved.

Since any authentication system can specify a home agent, a mobile communications service system can be flexibly operated.

Furthermore, since the service control information not required in the foreign agent can be removed, a memory area for storing the service control information can be smaller.

In addition, a system of transferring a packet to a plurality of mobile nodes using one address is designed. Additionally, the load of a home agent can be evenly or appropriately distributed.

Since a correspondent node of a mobile node is notified of the location of the mobile node, the packet transfer route from the correspondent node to the mobile node can be optimized.

Furthermore, although a mobile node is accommodated by a home agent, the mobile node can be authenticated, thereby preventing illegal access. The mobile node can be provided with a value-added service from the home agent.

When a mobile node cannot be successfully authenticated, a service profile is not distributed to a foreign agent or a home agent, thereby avoiding the waste of resources and preventing a packet from being transmitted from the mobile node before setting service control information.

Since a home agent has the function of a foreign agent, the mobile IP protocol can be used not only for the location registration of a mobile node, but also for holding user-customized service control information.

Furthermore, since the communications procedure between a home agent and an authentication server can be simplified, supplying a value-added service can be started within a short time.

## Claims

1. A mobile communication system for transmitting a message containing location registration request information from a mobile node to a foreign agent, to an authentication server, and to a home agent in this order, and returning a message containing location registration reply information as an answer to the received message in an inverse order from the home agent back to the mobile node, registering a location of the mobile node in the home agent and the foreign agent, and providing a communications service for the mobile node, comprising:
a unit, provided in the authentication server, for adding service profile information corresponding to the mobile node to the messages containing the location registration request information and the location registration reply information, wherein
the foreign agent and the home agent control a transmission of a packet both transmitted and received by the mobile node according to the service profile information contained in the message received from the authentication server.

2. The system according to claim 1, further comprising:
a database for storing the service profile information.

3. The system according to claim 2, wherein:
the authentication server comprises:
an authentication request server; and
an authentication process server accessible to the database;
the authentication request server, for receiving a message containing the location registration request information from the foreign agent, and transmitting the received message to the authentication process server, the authentication process server performing an authenticating process according to the received message, and;
the authentication request server for receiving a message containing the location registration reply information from the authentication process server, transmitting the message containing the location registration reply information to the foreign agent;
the authentication process server for receiving the message containing the location registration request information from the authentication request server, adding the service profile information to the message containing the location registration request information, and transmitting a message containing the service profile and location registration request information to the home agent; and
the authentication process server for receiving a message containing the location registration reply information from the home agent adding the service profile information to the message containing the location registration reply information from the home agent, and transmitting the message containing the service profile and location registration reply information to the authentication request server.

4. The system of claim 3, wherein
the authentication process server comprises a plurality of authentication process servers; and
the authentication request server determines an authentication process server from among the plurality of authentication process servers for performing the authenticating process.

5. The system according to claim 1, wherein:
the authentication server comprises:
an authentication request server, and
an authentication process server;
the authentication request server, for receiving the message containing the location registration request information from the foreign agent, and transmitting the received message to the authentication process server, the authentication process server performing an authenticating process according to the received message,
the authentication process server adding the service profile information to the message containing the location registration reply information, and transmitting the message containing the service profile and location registration reply information to the authentication request server;
the authentication request server receiving the message containing the service profile and location registration reply information from the authentication process server, adding the service profile information to the message containing the location registration request information, and transmitting a message containing the service profile and location registration request information to the home agent;
the authentication request server receiving a message containing the location registration reply information from the home agent, adding the service profile information to the message containing the location registration reply information received from the home agent, and transmitting the message containing the service profile and location registration reply information received from the home agent to the foreign agent.

6. The system of claim 5, wherein
the authentication process server comprises a plurality of authentication process servers; and
the authentication request server determines an authentication process server from among the plurality of authentication process servers for performing the authenticating process.

7. The system according to claim 5, wherein
when the mobile node is moved from a communications area of a first foreign agent subordinate to an authentication request server to a communications area of a second foreign agent subordinate to the authentication request server, the second foreign agent requests the first foreign agent to delete the service profile information associated with the mobile node.

8. The system according to claim 4, wherein
when the mobile node is moved from a communications area of a first foreign agent subordinate to a first authentication request server to a communications area of a second foreign agent subordinate to a second authentication request server, the authentication process server requests the first authentication request server to delete the service profile information set in the first foreign agent and the first authentication request server in response to a message containing location registration request information from the second foreign agent.

9. The system according to claim 1, wherein
the foreign agent controls transfer of a packet received from the mobile node by priority according to the service profile information.

10. The system according to claim 1, wherein
the foreign agent performs a packet filtering process on a packet received from the mobile node according to the service profile information.

11. The system according to claim 1, wherein
when a destination address of a received packet is a target of an anycast service, the home agent selects an IP address corresponding to the destination address from an anycast address list, and transfers the packet to the selected IP address.

12. The system according to claim 1, wherein
when a destination address of a received packet is a target of an anycast service, the home agent selects a link layer address according to a selection policy set as service profile information, and transfers the packet to the selected link layer address.

13. The system according to claim 5, wherein
the home agent comprises a plurality of home agents; and
the authentication process server assigns a location registration request to a home agent from among the plurality home agents, responsive to a predetermined distribution process.

14. The system according to claim 5, wherein
the home agent comprises a plurality of home agents; and
the authentication process server assigns a location registration request to a home
agent from among the plurality home agents, responsive to an ability of each home agent.

15. In a mobile communication service, a method for transmitting a message containing location registration request information from a mobile node to a foreign agent, and then to an authentication server, and then to a home agent in this order, and returning a message containing location registration reply information as an answer to the received message in an inverse order from the home agent back to the mobile node, registering a location of the mobile node in the home agent and the foreign agent, and providing a communication service for the mobile node, comprising the steps of:
adding through the use of the authentication server corresponding service profile information to the messages containing the location registration request information and the location registration reply information;
transmitting the message containing the service profile information to the foreign agent and the home agent; and
controlling, in the foreign agent and the home agent the transmission and reception of a packet by the mobile node according to the service profile information contained in the message.

16. In a mobile communication service, a method of providing a communication service for a mobile node, comprising:
receiving by the authentication server a message containing location registration request information from a mobile node;
transmitting a message containing service profile information to an agent according to the message containing the location registration request information; and
controlling, in the agent, the transmission and reception of a packet by the mobile node according to the service profile information contained in the message.

17. A mobile communications service system, comprising:
a foreign agent for transferring to a correspondent node a packet received from a mobile node and addressed to the correspondent node, and decapsuling a received capsuled packet and transferring the decapsuled packet to the mobile node; and
a home agent for transmitting a packet received from the correspondent node to the foreign agent after capsuling the packet, and notifying the correspondent node of a care-of address for the mobile node and service profile information about the mobile node by incorporating them into a binding update message, wherein
a packet transfer route from the correspondent node to the mobile node is optimized according to the binding update message received by the correspondent node from the home agent.

18. In a foreign agent apparatus of a mobile communication system, a method of receiving a message containing location registration request information from a mobile node, and registering a location of the mobile node, comprising the steps of:
receiving a message containing location registration request information from a mobile node in the mobile communication system and in response transmitting a message containing the location registration request information to an authentication server; and
receiving a message containing registration reply information together with service profile information, in response to the transmitted message containing the registration request information, and in response thereto setting service control information according to the registration reply information and the service profile information, and
transfer controlling a packet transmitted and received by the mobile node through this foreign agent according to the service profile information.

19. In an authentication apparatus of a mobile communication system, a method of receiving a message containing location registration request information from a mobile node, and transmitting a corresponding message, comprising the steps of:
receiving a message containing location registration request information from a mobile node, and, in response to the message, transmitting to an agent a message containing service profile information required for a value-added service to be provided for the mobile node.

20. A mobile communications service system providing a communication service for a mobile node, comprising:
a database for managing service profile containing information for use in providing a service requested by a mobile node;
a plurality of agents each of which can manage one or more addresses, and can accommodate a mobile node; and
an authentication server for authenticating a mobile node, wherein
a home agent which is an agent for managing an address of the mobile node comprises a request unit for issuing an authentication request to the authentication server upon receipt of a location registration request from the mobile node;
the authentication server comprises:
an extraction unit for extracting a service profile corresponding to the mobile node from the database upon receipt of the authentication request; and
a reply unit for transmitting to the home agent the service profile extracted by the extraction unit together with an authentication reply corresponding to the authentication request, wherein
the home agent provides a service according to the service profile received from the authentication server.

21. A mobile communication service system providing a communication service for a mobile node, comprising:
a database managing a service profile containing information for use in providing a service requested by a mobile node;
a plurality of agents each of which can manage one or more addresses, and can accommodate a mobile node; and
an authentication server authenticating a mobile node, wherein
a home agent serves as an agent for managing an address of the mobile node comprises:
a request unit issuing an authentication request containing location information about the mobile node to the authentication server upon receipt of a location registration request from the mobile node; and
a registration unit registering a location of the mobile node according to a location registration request transmitted from the authentication server;
the authentication server comprises:
an extraction unit extracting a service profile corresponding to the mobile node from the database upon receipt of the authentication request; and
a reply unit transmitting to the home agent a location registration request containing location information received from the home agent, the authentication reply corresponding to the authentication request, and the service profile extracted by the extraction unit, wherein
the home agent provides a service according to the service profile received from the authentication server.

22. The system according to claim 20, wherein
the request unit notifies the authentication server of information specifying one of a first procedure and a second procedure;
the request unit comprising a circuit for transmitting the authentication reply and the service profile to the home agent upon receipt of information specifying the first procedure from the request unit, and transmitting to the home agent a location registration request for use in registering a location of the mobile node, the authentication reply, and the service profile upon receipt of information specifying the second procedure from the request unit; and
the home agent comprising a circuit for registering the location of the mobile node based on the registration request transmitted from the mobile node, when the first procedure is specified and registering the location of the mobile node based on the location registration request from the authentication server when the second procedure is specified.

23. The system according to claim 20, wherein
the home agent has a function of a foreign agent.

24. In a mobile communication service, the method of providing a communication service for a mobile node in a system having a database for use in managing a service profile, the service profile containing information used to provide a service requested by the mobile node, a plurality of agents each of which can accommodate a mobile node, and an authentication server authenticating a mobile node, comprising the steps of:
receiving in an agent a registration request from a mobile node and transmitting an authentication request to the authentication server;
extracting in the authentication server a service profile corresponding to the mobile node from the database, and transmitting to the agent the service profile together with an authentication reply corresponding to the authentication request; and
providing a service to the mobile node, through the agent, according to the service profile received from the authentication server.

25. In a mobile communication service, a method of providing a communication service for a mobile node in a system having a database for use in managing a service profile, the service profile containing information used to provide a service requested by the mobile node, a plurality of agents each of which can accommodate a mobile node, and an authentication server authenticating a mobile node, comprising the steps of:
receiving in an agent a registration request from a mobile node, registering a location of the mobile node based on the registration request, and transmitting an authentication request to the authentication server;
extracting by the authentication server a service profile corresponding to the mobile node from the database, and transmitting to the agent the service profile together with an authentication reply corresponding to the authentication request; and
the agent providing a service to the mobile node, through the agent, according to the service profile received from the authentication server.

26. In a mobile communication service, a method of providing a communication service for a mobile node in a system having a database for use in managing a service profile, the service profile containing information used to provide a service requested by the mobile node, a plurality of agents each of which can accommodate a mobile node, and an authentication server authenticating a mobile node, comprising the steps of:
receiving in an agent a registration request from a mobile node, and transmitting an authentication request containing location information about the mobile node to the authentication server;
transmitting by the authentication server to the agent a location registration request containing the location information received from the agent;
registering by the agent a location of the mobile node based on the location registration request received from the authentication server, and transmitting to the authentication server a registration reply corresponding to the location registration request;
transmitting by the authentication server an authentication reply corresponding to the authentication request to the agent;
extracting by the authentication server a service profile corresponding to the mobile node from the database, storing the service profile in at least one of the location registration request and the authentication reply, and then transmitting the service profile to the agent; and
providing through the agent a service according to the service profile received from the authentication server.

27. In a mobile communication service, a method of providing a communications service for a mobile node in a system having a database for use in managing a service profile, the service profile containing information used to provide a service requested by the mobile node, a plurality of agents each of which can accommodate a mobile node, and an authentication server authenticating a mobile node, comprising the steps of:
transmitting from an agent accommodating a mobile node an authentication request message requesting the authentication server to authenticate the mobile node;
extracting a service profile corresponding to the mobile node from the database;
storing the extracted service profile in an authentication reply message corresponding to the authentication request message;
transmitting the authentication reply message from the authentication server to the agent accommodating the mobile node; and
providing, by the agent accommodating the mobile node, a service for the mobile node according to the service profile stored in the authentication reply message.

28. In a mobile communication service, a method of providing a communication service for a mobile node in a system having a database for use in managing a service profile, the service profile containing information used to provide a service requested by the mobile node, a plurality of agents each of which can accommodate a mobile node, and an authentication server authenticating a mobile node, comprising the steps of:
transmitting from an agent accommodating a mobile node an authentication request message containing location information about the mobile node to the authentication server;
extracting a service profile corresponding to the mobile node from the database;
storing the extracted service profile in a location registration request message for use in registering the location of the mobile node;
transmitting the location registration request message to an agent which has to recognize a location of the mobile node from the authentication server;
receiving in the agent the location registration request message, and
providing through the agent a service for the mobile node according to the service profile.

29. A home agent apparatus serving as one of a plurality of such agents and used in a mobile communication service system providing a communication service for a mobile node in a system having a database for use in managing a service profile, the service profile containing information used to provide a service requested by the mobile node, the plurality of agents each of which can accommodate the mobile node, and an authentication server authenticating the mobile node, the home agent apparatus comprising:
a first generation unit for generating a visitor list and adding a mobile node to the visitor list upon receipt of a location registration request from the mobile node;
a request unit for transmitting an authentication request to the authentication server to authenticate the mobile node;
a second generation unit generating a mobility binding table for the mobile node upon receipt, from the authentication server, of a service profile corresponding to the mobile node extracted from the database and an authentication reply corresponding to the authentication request; and
a service control unit providing a service for the mobile node using the service profile, the visitor list, and the mobility binding table.

30. A mobile communication system having a home service provider, a foreign service provider, and a mobile node with a corresponding mobile service profile, wherein the mobile node being a subscriber to the home service provider, may move to the foreign service provider and request service, the mobile communication system comprising:
a foreign agent of the foreign service provider for receiving a location registration request message from the mobile node and generating an authentication request message;
an authentication server for receiving the authentication request message, identifying the mobile node, and retrieving a mobile service profile corresponding to the mobile node and generating a registration request message;
a home agent of the home service provider for receiving the registration request message, registering the location of the mobile node and generating a registration reply message, the home agent further receiving and storing the service profile from the authentication server;
the authentication server further receiving the registration reply message and generating an authentication reply message having the service profile stored therein; and
the foreign agent further receiving the authentication reply message, storing the service profile and transmitting a message to the mobile node indicating completion of registration, wherein
the foreign agent and the home agent control a transmission of a packet both transmitted and received by the mobile node according to the service profile information received from the authentication server.

31. The mobile communication system of claim 30, wherein
the authentication server assigns the home agent from among a plurality of home agents for receiving the authentication request message.

32. The mobile communication system of claim 31, wherein
the authentication server assigns the home agent by searching a home agent assignment table, selects a home agent having the smallest assignment number, and increments a corresponding registration number in the home agent assignment table.

33. The mobile communication system of claim 31, wherein
the authentication server assigns the home agent by extracting information from the service profile associated with the mobile node and assigning by priority a home agent having a capability to provide associated services for the mobile node.

34. In a mobile communication service system providing a communication service for a mobile node, having plurality of agents each of which can accommodate the mobile node, wherein the mobile node transmits a connection request to one of the plurality of agents requesting a connection to the mobile communication service system, a visitor management system comprising:
a visitor list table for managing a mobile node, when the mobile node is connected to an agent;
a mobility binding table for managing a service profile corresponding to the mobile node connected to the agent; and
an authentication manager that receives the connection requests from the mobile node, provides authentication information to an accommodating agent, extracts from a database the service profile corresponding to the mobile node, and downloads the service profile to the mobility binding table, the service profile containing information used by the agent to provide a service requested by the mobile node.

35. An agent apparatus of a mobile communication system, the agent capable of receiving a message containing location registration request information which requests the registration of a mobile node, registering a location of the mobile node, and providing communication services for the mobile node, and comprising:
a control unit that upon receiving a message containing location registration request information from a mobile node in the mobile communication system generates a registration request message containing the location registration request information and sends the registration request message to an authentication server;
a service control unit that upon receiving a message containing registration reply information sets service control information according to the registration reply information; and
a router control unit for controlling a packet transmitted and received by the mobile node through the agent according to the service control information.

36. The agent apparatus of claim 35, wherein
the message containing registration reply information is received in response to the transmitted message containing the registration request information and further contains service profile information of the mobile node, and the service control information is set according to the service profile information.

37. The agent apparatus of claim 35, wherein
the control unit upon receiving a registration request message from an authentication server in the mobile communication system retrieves from the registration request message information required to register a new location of the mobile node, and updates the service control unit and the router control unit in order to transfer a packet addressed to the mobile node to the new location of the mobile node according to the service control information.

38. An authentication apparatus of a mobile communication system, the apparatus capable of receiving a registration request message containing location registration request information, and transmitting a responding message, the apparatus comprising:
a service control unit for receiving a registration request message containing location registration request information from a mobile node, and, in response to the message, transmitting to an agent a reply message containing service profile information of the mobile node in order that the agent may provide a value-added service for the mobile node, and
a service control transaction unit for managing location information of the mobile node.

39. The authentication apparatus of claim 38 further comprising:
a service control database unit coupled to the service control unit and providing service profile information for the mobile node to the service control unit when the registration request message is received.

40. The authentication apparatus of claim 39 wherein the location registration request information contains a network access identifier (NAI) that identifies the mobile node, and the service control unit extracts the service profile information stored in the service control database unit corresponding to the NAI.

41. The authentication apparatus of claim 38 wherein the service control unit assigns a home agent for the mobile node and the service control unit further comprises:
a home agent assignment unit for managing assignment information of the assigned home agent.

42. The authentication apparatus of claim 38 wherein the registration request message is a mobile IP message.

43. The authentication apparatus of claim 42 wherein a DIAMETER message is formed by setting a DIAMETER header immediately after an IP header and a UDP header of the mobile IP message, and setting a group of AVPs (attribute value pairs) of DIAMETER after the DIAMETER header.

44. The authentication apparatus of claim 38 wherein the registration request message corresponds to the Diameter protocol.

45. The authentication apparatus of claim 44 wherein the attribute value pair extensions contain command and data information.

46. A home agent apparatus serving as one of a plurality of such agents and used in a mobile communication service system providing a communication service for a mobile node in a system having a database for use in managing a service profile containing information used to provide a service requested by the mobile node, each of the plurality of agents capable of accommodating the mobile node, and art authentication server authenticating the mobile node, the home agent apparatus comprising:
a first generation unit for generating a visitor list and adding a mobile node to the visitor list upon receipt of a location registration request from the mobile node;
a request unit for transmitting an authentication request to the authentication server to authenticate the mobile node;
a second generation unit generating a mobility binding table for the mobile node upon receipt from the authentication server of a service profile corresponding to the mobile node extracted from the database and an authentication reply corresponding to the authentication request; and
a service control unit providing a service for the mobile node using the service profile, the visitor list, and the mobility binding table.
